(19) Europäisches Patentamt
European Patent Office
Office européen des brevets

(11) **EP 4 692 249 A1**

(12) **EUROPEAN PATENT APPLICATION**
published in accordance with Art. 153(4) EPC

(43) Date of publication:
**11.02.2026 Bulletin 2026/07**

(21) Application number: **24780696.1**

(22) Date of filing: **28.03.2024**

(51) International Patent Classification (IPC):
***C09B 29/15*** *(2006.01)* ***C09B 67/20*** *(2006.01)*
***C09D 11/037*** *(2014.01)* ***C09D 11/101*** *(2014.01)*

(52) Cooperative Patent Classification (CPC):
**C09B 29/103; C09B 67/006; C09D 11/037; C09D 11/101**

(86) International application number:
**PCT/JP2024/012771**

(87) International publication number:
**WO 2024/204597 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2023 JP 2023054361**

(71) Applicants:
- **Artience Co., Ltd.**
  **Chuo-ku**
  **Tokyo 104-8377 (JP)**
- **TOYOCOLOR CO., LTD.**
  **Tokyo 104-8381 (JP)**

(72) Inventors:
- **TAKAHATA, Noriyoshi**
  **Tokyo 104-8381 (JP)**
- **KOBAYASHI, Ryosaku**
  **Tokyo 104-8381 (JP)**

(74) Representative: **Becker, Eberhard**
**Becker Kurig & Partner**
**Patentanwälte mbB**
**Bavariastraße 7**
**80336 München (DE)**

# (54) COLORING AGENT, COLORING COMPOSITION, AND METHOD FOR PRODUCING COLORING AGENT

(57) A coloring agent comprising a compound (A) represented by general formula (1) and a compound (B) represented by general formula (2).

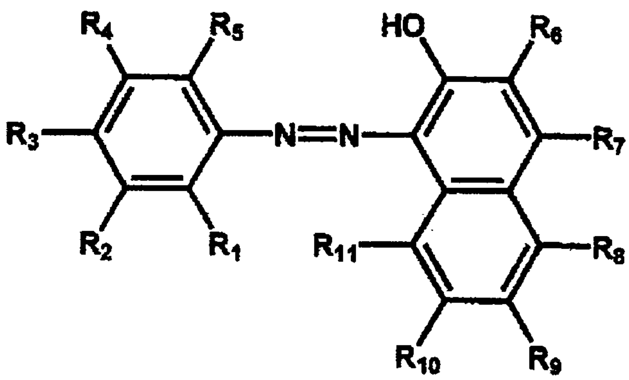

General Formula (1)

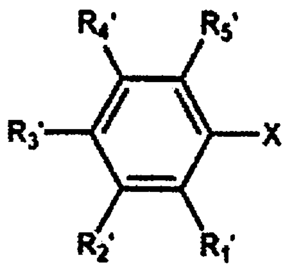

General Formula (2)

EP 4 692 249 A1

## Description

### Technical Field

Embodiments of the present invention relate to a coloring agent, a coloring composition, and a method for producing a coloring agent. More specifically, embodiments of the present invention relate to a coloring agent capable of realizing hues of magenta from red, a coloring composition such as a printing ink containing the coloring agent, and a method for producing the coloring agent.

### Related Art

Examples of coloring agents capable of realizing hues of magenta from red include organic pigments such as soluble azo pigments, insoluble azo pigments, and quinacridone pigments. These organic pigments are used in various applications such as plastic products, toners, paints, and printing inks.

Among the above organic pigments, soluble azo pigments have advantages of having bright hues and high coloring property and being inexpensive. However, soluble azo pigments have issues in terms of fastness. Furthermore, in some applications, there are also issues in that the presence of metal ions used for laking of pigments adversely affects various printing properties. In addition, quinacridone pigments have superior properties compared to other pigments in terms of fastness and brightness. However, quinacridone pigments have issues in that their coloring property or dispersion stability is significantly inferior compared to other pigments, and they are expensive.

On the other hand, naphthol-based azo pigments classified as insoluble azo pigments are being considered for use in various applications since they have a good balance of production cost, coloring property, and fastness. However, brightness and dispersibility are insufficient and improvement is desired. In addition, crystal stability is low, and problems such as pigment crystal growth and increased particle size may occur in the combination with dispersion media.

In response thereto, for example, in the field of digital printing, various studies are being conducted toward improvement of naphthol-based azo pigments. For example, Patent Document 1 discloses a pigment composition containing a naphthol-based azo pigment and a specific azonaphthoic acid component, and a magenta color toner using the pigment composition. In addition, Patent Document 2 discloses a magenta toner that contains a naphthol-based azo pigment, a binder resin, a coloring agent, and a wax component, and further contains a β-naphthol derivative and an aromatic amine in a specific ratio.

### Related Art Documents

### Patent Documents

Patent Document 1: Japanese Patent Application Laid-Open No. 2000-248191
Patent Document 2: Japanese Patent Application Laid-Open No. 2003-149869

## SUMMARY OF INVENTION

### Problem to Be Solved by Invention

However, the naphthol-based azo pigments disclosed in Patent Documents 1 and 2 are both coloring agents directed toward applications of a toner, and in the case of applying to applications of a paint or a printing ink, there is room for improvement from the viewpoint of dispersibility. In the case where dispersibility of pigments is insufficient, it becomes difficult to obtain desired properties in various applications.

For example, in aqueous dispersions such as aqueous inkjet inks or non-aqueous dispersions such as flexographic inks, in the case where dispersibility of pigments is poor, it becomes difficult to obtain sufficiently satisfactory coloring property, brightness, and transparency. In addition, in both aqueous dispersions and non-aqueous dispersions, problems such as viscosity increase tend to occur during long-term storage. Thus, a coloring agent excellent in dispersibility of pigments, capable of being applied to various applications, and capable of providing desired properties is desired.

Thus, an embodiment of the present invention provides a coloring agent taking a naphthol-based azo pigment as a base, which is excellent in dispersibility and capable of improving coloring property, brightness, and transparency. In addition, an embodiment of the present invention provides a coloring composition using the coloring agent and capable of being used in various applications such as a printing ink. Furthermore, an embodiment of the present invention provides a

method for producing the coloring agent.

Means for Solving Problem

In view of the above situation, the present inventors conducted studies on improvement of dispersibility of a coloring agent taking a naphthol-based azo pigment as a base. As a result, it has been found that various properties can be improved by constituting a coloring agent containing a naphthol-based azo pigment and a specific compound, thus completing the present invention.

That is, the present invention includes the following embodiments. However, the embodiments of the present invention are not limited to the following, and include various embodiments.

An embodiment relates to a coloring agent including a compound (A) represented by General Formula (1) below and a compound (B) represented by General Formula (2) below.

[Chem. 1]

General Formula (1)

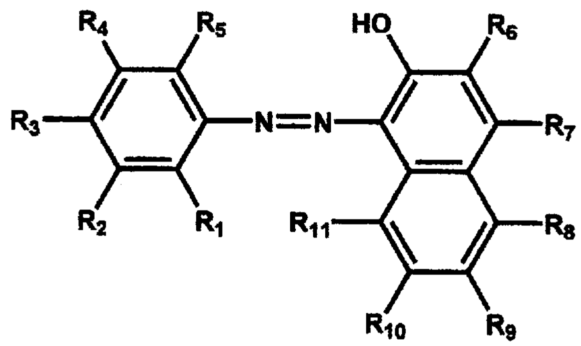

[Chem. 2]

General Formula (2)

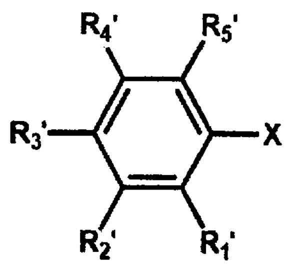

In General Formula (1) and General Formula (2), $R_1$ to $R_5$ and $R_1$' to $R_5$' are each independently a hydrogen atom, an alkoxy group, an alkyl group, a halogen group, a nitro group, a carboxy group, a sulfo group, a phosphoric acid group, a sulfamoyl group, a carbamoyl group, a benzamide group, an alkylsulfamoyl group, an alkylcarbamoyl group, a group represented by General Formula (101) below, a group represented by General Formula (102) below, or a group represented by Chemical Formula (103) below, $R_1$ to $R_5$ are not all hydrogen atoms simultaneously, and $R_1$' to $R_5$' are not all hydrogen atoms simultaneously.

$R_6$ to $R_{11}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, a group represented by General Formula (104) below, or a group represented by General Formula (105) below, and $R_6$ to $R_{11}$ are not all hydrogen atoms simultaneously.

X is a hydrogen atom, a hydroxyl group, or a chlorine atom.

[Chem. 3]

General Formula (101)

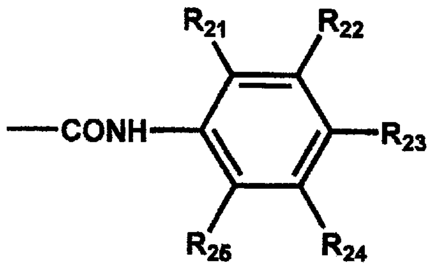

In General Formula (101), $R_{21}$ to $R_{25}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, or an aryl group which may have a substituent, or two adjacent groups among $R_{21}$ to $R_{25}$ may together form a saturated or unsaturated alkylene group, form a saturated or unsaturated heteroalkylene group containing one or more hetero atoms selected from the group consisting of an oxygen atom, a nitrogen atom, and a sulfur atom, or form a divalent group having a skeleton composed of a nitrogen atom and a carbonyl group and form a ring together with carbon atoms to which the two adjacent groups are respectively bonded.

[Chem. 4]

General Formula (102)

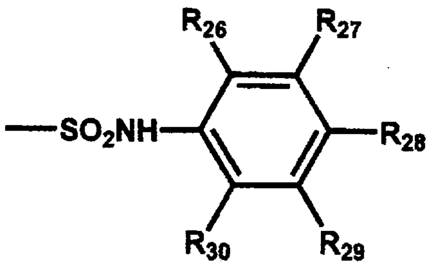

In General Formula (102), $R_{26}$ to $R_{30}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, or an aryl group which may have a substituent, or two adjacent groups among $R_{26}$ to $R_{30}$ may together form a saturated or unsaturated alkylene group, form a saturated or unsaturated heteroalkylene group containing one or more hetero atoms selected from the group consisting of an oxygen atom, a nitrogen atom, and a sulfur atom, or form a divalent group having a skeleton composed of a nitrogen atom and a carbonyl group and form a ring together with carbon atoms to which the two adjacent groups are respectively bonded.

[Chem. 5]

Chemical Formula (103)

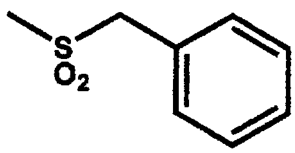

[Chem. 6]

General Formula (104)

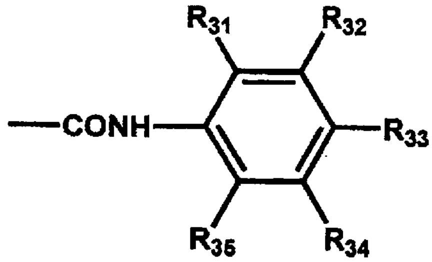

In General Formula (104), $R_{31}$ to $R_{35}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, or an aryl group which may have a substituent, or two adjacent groups among $R_{31}$ to $R_{35}$ may together form a saturated or unsaturated alkylene group, form a saturated or unsaturated heteroalkylene group containing one or more hetero atoms selected from the group consisting of an oxygen atom, a nitrogen atom, and a sulfur atom, or form a divalent group having a skeleton composed of a nitrogen atom and a carbonyl group and form a ring together with carbon atoms to which the two adjacent groups are respectively bonded.

[Chem. 7]

General Formula (105)

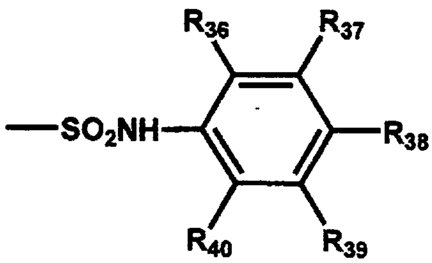

In General Formula (105), $R_{36}$ to $R_{40}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, or an aryl group which may have a substituent, or two adjacent groups among $R_{36}$ to $R_{40}$ may together form a saturated or unsaturated alkylene group, form a saturated or unsaturated heteroalkylene group containing one or more hetero atoms selected from the group consisting of an oxygen atom, a nitrogen atom, and a sulfur atom, or form a divalent group having a skeleton composed of a nitrogen atom and a carbonyl group and form a ring together with carbon atoms to which the two adjacent groups are respectively bonded.

In the above embodiment, a content ratio of the compound (B) with respect to a total mass of the compound (A) is preferably in the range of 0.01 to 10 mass%. The content ratio is more preferably 0.15 to 10 mass%.

An embodiment relates to a coloring composition including the coloring agent of the above embodiment and a dispersion medium. In an embodiment, the coloring composition may be a printing ink including the coloring agent, a resin, and a solvent. In another embodiment, the coloring composition may be an active energy ray curable ink including the coloring agent and a polymerizable compound.

An embodiment relates to a method for producing a coloring agent, the coloring agent including a compound (A) represented by General Formula (1) above and a compound (B) represented by General Formula (2) above,

the method for producing the coloring agent including performing a coupling reaction between a solution containing a coupler component represented by General Formula (7) below and a solution containing a diazonium salt represented by General Formula (6A) below obtained by diazotizing an aromatic amine, using an excess amount of the diazonium salt in a molar ratio with respect to the coupler component.

In the production method of the above embodiment, $R_1$' to $R_5$' in the General Formula (2) are the same groups as

$R_1$ to $R_5$ in the General Formula (1) at the corresponding positions, respectively.

[Chem. 8]

General Formula (7)

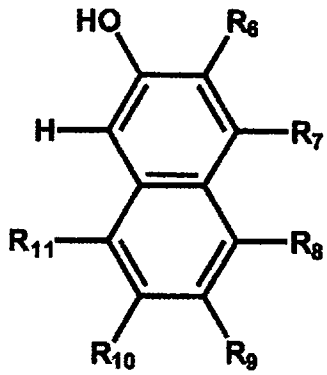

In General Formula (7), $R_6$ to $R_{11}$ are the same as $R_6$ to $R_{11}$ in the General Formula (1).

[Chem. 9]

General Formula (6A)

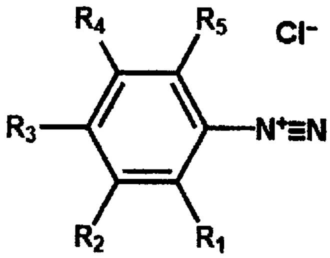

In General Formula (6A), $R_1$ to $R_5$ are the same as $R_1$ to $R_5$ in the General Formula (1).

In an embodiment, the coupling reaction using the solution containing the coupler component and the solution containing the diazonium salt is preferably carried out in the presence of a water-soluble organic solvent.

The disclosure of the present application is related to the subject matter described in Japanese Patent Application No. 2023-054361 filed on March 29, 2023, all disclosure contents of which are incorporated herein by reference.

Effects of Invention

According to the embodiments of the present invention, a coloring agent excellent in dispersibility and capable of improving coloring property, brightness, and transparency can be provided. In addition, a coloring composition using the coloring agent and capable of being used for various applications can be provided.

DESCRIPTION OF EMBODIMENTS

Hereinafter, embodiments of the present invention will be described more specifically. However, the present invention is not limited to the following embodiments, and various modifications may be made within the scope that does not change the gist, and various embodiments are included.

<1> Coloring agent

An embodiment of the present invention relates to a coloring agent containing a compound (A) represented by General Formula (1) below and a compound (B) represented by General Formula (2) below.

<Compound (A)>

In the coloring agent of the above embodiment, the compound (A) is a naphthol-based azo pigment having a structure represented by General Formula (1) below. In the coloring agent, as the compound (A), one type of the above naphthol-based azo pigment may be used alone, or two or more types may be used in combination. In an embodiment, from the viewpoint of facilitating color tone adjustment, the compound (A) constituting the coloring agent preferably includes two or more types of naphthol-based azo pigments.

[Chem. 10]

General Formula (1)

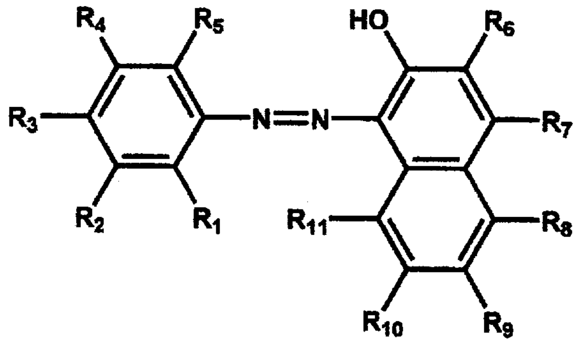

In General Formula (1), $R_1$ to $R_5$ are each independently a hydrogen atom, an alkoxy group, an alkyl group, a halogen group, a nitro group, a carboxy group, a sulfo group, a phosphoric acid group, a sulfamoyl group, a carbamoyl group, a benzamide group, an alkylsulfamoyl group, an alkylcarbamoyl group, a group represented by General Formula (101) below, a group represented by General Formula (102) below, or a group represented by Chemical Formula (103) below, and $R_1$ to $R_5$ are not all hydrogen atoms simultaneously.

$R_6$ to $R_{11}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, a group represented by General Formula (104) below, or a group represented by General Formula (105) below, and $R_6$ to $R_{11}$ are not all hydrogen atoms simultaneously.

Herein, the above "alkoxy group" may have 1 to 8 carbon atoms, and may have any of a linear structure, a branched structure, and a cyclic structure. In an embodiment, the alkoxy group preferably has a linear structure. The number of carbon atoms in the alkoxy group is preferably 1 to 4, more preferably 1 or 2, and even more preferably 1.

The above "alkyl group" may have 1 to 18 carbon atoms, and may have any of a linear structure, a branched structure, and a cyclic structure. In an embodiment, the alkyl group preferably has a linear structure. The number of carbon atoms in the alkyl group is preferably 1 to 12, more preferably 1 to 8, and even more preferably 1 to 4.

The above "halogen group" may be a fluorine atom, a chlorine atom, or a bromine atom. In an embodiment, a chlorine atom or a fluorine atom is preferable, and a chlorine atom is more preferable.

"Alkyl" in the above "alkylsulfamoyl group" may be the same as the alkyl group described above. In addition, the same also applies to "alkyl" in the above "alkylcarbamoyl group".

Although not particularly limited, in an embodiment, the alkyl in the alkylsulfamoyl group and the alkylcarbamoyl group is each independently preferably an alkyl group having 1 to 4 carbon atoms.

[Chem. 11]

General Formula (101)

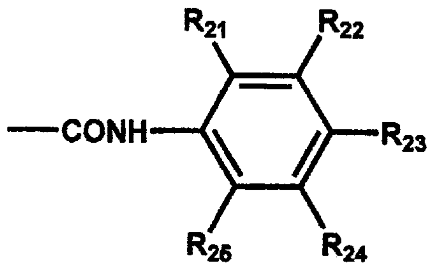

In General Formula (101), $R_{21}$ to $R_{25}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, or an aryl group which may have a substituent, or two adjacent groups among $R_{21}$ to $R_{25}$ may together form a saturated or unsaturated alkylene group, form a saturated or unsaturated heteroalkylene group containing one or more hetero atoms selected from the group consisting of an oxygen atom, a nitrogen atom, and a sulfur atom, or form a divalent group having a skeleton composed of a nitrogen atom and a carbonyl group and form a ring together with carbon atoms to which the two adjacent groups are respectively bonded.

In General Formula (101), details of the alkoxy group, the alkyl group, and the halogen group are as described above in the descriptions related to General Formula (1), respectively. In addition, the same also applies to the alkyl in the alkylsulfamoyl group and the alkylcarbamoyl group.

In General Formula (101), the "aryl group which may have a substituent" refers to an atomic group obtained by removing one hydrogen atom from an aromatic compound. The number of carbon atoms in the aryl group is preferably 6 to 30, more preferably 6 to 18, even more preferably 6 to 12, and particularly preferably 6 to 10.

In the above aryl group, one or more hydrogen atoms in the aromatic ring may be substituted with a substituent. The above substituent may be an alkoxy group, an alkyl group, a halogen group, a nitro group, a carboxy group, a sulfo group, a phosphoric acid group, a sulfamoyl group, a carbamoyl group, an alkylsulfamoyl group, or an alkylcarbamoyl group. Details of these substituents are as described above in the descriptions related to General Formula (1), respectively.

As an embodiment of the structure represented by General Formula (101), two adjacent groups among $R_{21}$ to $R_{25}$ may together form a divalent group and form a ring together with carbon atoms to which the two adjacent groups are respectively bonded. Herein, the "two adjacent groups" refers to two groups in a relationship in which the carbon atoms to which $R_{21}$ to $R_{25}$ are respectively bonded are adjacent to each other. Specifically, the two adjacent groups may be $R_{21}$ and $R_{22}$, $R_{22}$ and $R_{23}$, $R_{23}$ and $R_{24}$, or $R_{24}$ and $R_{25}$.

In General Formula (101), the carbon atoms to which the two adjacent groups are respectively bonded constitute a benzene ring. Thus, more specifically, in the case where the two groups together form a divalent group, a condensed ring with the benzene ring is formed. Although not particularly limited, the ring formed by the divalent group is preferably a 4-, 5- or 6-membered ring, and more preferably a 5- or 6-membered ring.

In the embodiment of forming a ring as described above, the divalent group formed by the two adjacent groups together may be, for example, a saturated or unsaturated alkylene group, a saturated or unsaturated heteroalkylene group, or a saturated or unsaturated group having a skeleton composed of a nitrogen atom and a carbonyl group. In the case where the divalent group is an unsaturated group, it preferably has a conjugated diene structure.

Examples of the saturated or unsaturated alkylene group include $-CH_2-$, $-(CH_2)_2-$, - CH=CH-CH=CH-, etc.

The saturated or unsaturated heteroalkylene group may contain one or more hetero atoms selected from the group consisting of an oxygen atom, a nitrogen atom, and a sulfur atom. The saturated or unsaturated heteroalkylene group may contain 1 to 3 hetero atoms. Examples include $-O-CH_2-CH_2-O-$, -C=N-CH=C-, etc.

Examples of the saturated or unsaturated group having a skeleton composed of a nitrogen atom and a carbonyl group include a urea bond (-HN-C(=O)-NH-) and an imide bond (-C(=O)-NH-C(=O)-).

In an embodiment, the divalent group is preferably a group selected from the group consisting of a urea bond (-HN-C(=O)-NH-), an imide bond (-C(=O)-NH-C(=O)-), and a conjugated diene bond (-CH=CH-CH=CH-, -C=N-CH=C-, etc.), and more preferably a urea bond. In the case where the divalent group is a urea bond, a benzimidazole ring is formed together with the benzene ring constituted by the carbon atoms to which these groups are bonded.

Hereinafter, the same also specifically applies to the case where substituents bonded to two adjacent carbon atoms constituting a benzene ring together form a divalent group and constitute a ring.

[Chem. 12]

General Formula (102)

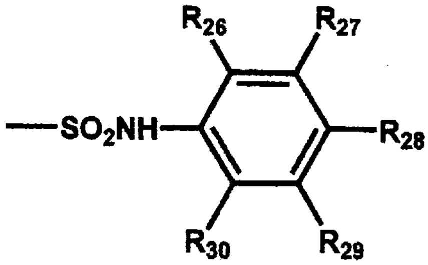

In General Formula (102), $R_{26}$ to $R_{30}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, or an aryl group which may have a substituent, or two adjacent groups among $R_{26}$ to $R_{30}$ may together form a saturated or unsaturated alkylene group, form a saturated or unsaturated heteroalkylene group containing one or more hetero atoms selected from the group consisting of an oxygen atom, a nitrogen atom, and a sulfur atom, or form a divalent group having a skeleton composed of a nitrogen atom and a carbonyl group and form a ring together with carbon atoms to which the two adjacent groups are respectively bonded. Details of each group described as $R_{26}$ to $R_{30}$ above are the same as the contents in the descriptions related to General Formula (101) above.

[Chem. 13]

Chemical Formula (103)

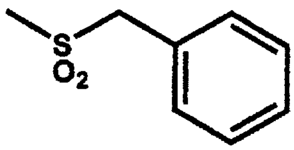

[Chem. 14]

General Formula (104)

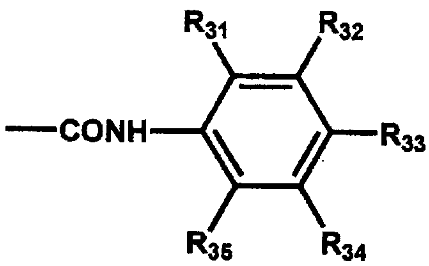

In General Formula (104), $R_{31}$ to $R_{35}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, or an aryl group which may have a substituent, or two adjacent groups among $R_{31}$ to $R_{35}$ may together form a saturated or unsaturated alkylene group, form a saturated or unsaturated heteroalkylene group containing one or more hetero atoms selected from the group consisting of an oxygen atom, a

nitrogen atom, and a sulfur atom, or form a divalent group having a skeleton composed of a nitrogen atom and a carbonyl group and form a ring together with carbon atoms to which the two adjacent groups are respectively bonded. Details of each group described as $R_{31}$ to $R_{35}$ above are the same as the contents in the descriptions related to General Formula (101) above.

[Chem. 15]

General Formula (105)

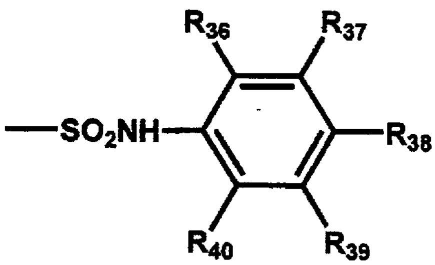

In General Formula (105), $R_{36}$ to $R_{40}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, or an aryl group which may have a substituent, or two adjacent groups among $R_{36}$ to $R_{40}$ may together form a saturated or unsaturated alkylene group, form a saturated or unsaturated heteroalkylene group containing one or more hetero atoms selected from the group consisting of an oxygen atom, a nitrogen atom, and a sulfur atom, or form a divalent group having a skeleton composed of a nitrogen atom and a carbonyl group and form a ring together with carbon atoms to which the two adjacent groups are respectively bonded. Details of each group described as $R_{36}$ to $R_{40}$ above are the same as the contents in the descriptions related to General Formula (101) above.

In an embodiment, an average primary particle diameter of the compound (A) is preferably 1000 nm or less, more preferably 350 nm or less, and even more preferably 200 nm or less. In addition, the average primary particle diameter of the compound (A) is preferably 10 nm or more, more preferably 30 nm or more, and even more preferably 50 nm or more. The average primary particle diameter may be obtained by calculating an average of longer diameters of 50 primary particles of pigment particles extracted from multiple photographs taken at a magnification of 10,000 times with a transmission electron microscope. With the average primary particle diameter of the compound (A) being in an optimal range, it becomes easy to achieve both coloring property and dispersibility.

In an embodiment, the compound (A) may be a conventional compound as a naphthol-based azo pigment, and may also be obtained as a commercial product. Examples of the compound (A) available as a commercial product include C.I. Pigment Red 5, 8, 10, 17, 22, 23, 31, 32, 114, 146, 147, 150, 170, 176, 185, 208, 245, 258, 268, and 269, and C.I. Pigment Violet 32 and 50, etc. One type or a combination of two or more types of these may be used as the compound (A). In an embodiment, the compound (A) is preferably a monoazo pigment containing one azo bond in the molecule.

In an embodiment, the compound (A) preferably includes at least one selected from the group consisting of C.I. Pigment Red 17, 22, 23, 31, 32, 114, 146, 147, 150, 176, 185, 245, 258, and 269. In an embodiment, the compound (A) more preferably includes at least one selected from the group consisting of C.I. Pigment Red 31, 32, 146, 147, 150, 176, and 269. In an embodiment, the compound (A) preferably includes two or more of the above C.I. Pigment Red pigments. Specific examples of combinations of two pigments include C.I. Pigment Red 269/Red 150, Red 150/Red 31, and Red 146/Red 147. Herein, the term "C.I." refers to a color index number.

In an embodiment, the compound (A) preferably has the following structure. In General Formula (1), $R_1$ to $R_5$ are each independently a group selected from the group consisting of a hydrogen atom, an alkyl group, a carboxy group, and a carbamoyl group, and include at least one or more of either a carboxy group or a carbamoyl group. Furthermore, any one of $R_6$ to $R_{11}$ is a group represented by General Formula (104), and $R_{31}$ to $R_{35}$ in General Formula (104) are each independently a group selected from the group consisting of a hydrogen atom, an alkoxy group, and a halogen group, and include at least one or more of either an alkoxy group or a halogen group.

<Compound (B)>

In the coloring agent of the above embodiment, the compound (B) is a compound having a structure represented by General Formula (2) below.

[Chem. 16]

General Formula (2)

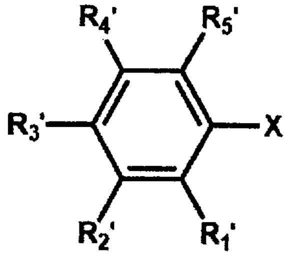

In General Formula (2), $R_1$' to $R_5$' are each independently a hydrogen atom, an alkoxy group, an alkyl group, a halogen group, a nitro group, a carboxy group, a sulfo group, a phosphoric acid group, a sulfamoyl group, a carbamoyl group, a benzamide group, an alkylsulfamoyl group, an alkylcarbamoyl group, a group represented by General Formula (101) above, a group represented by General Formula (102) above, or a group represented by Chemical Formula (103) above, and $R_1$' to $R_5$' are not all hydrogen atoms simultaneously.

In an embodiment, $R_1$' to $R_5$' preferably match $R_1$ to $R_5$ at corresponding positions in the compound (A). That is, for example, in relationships between $R_1$ and $R_1$', $R_2$ and $R_2$', etc., $R_1$ to $R_5$ and the respectively corresponding $R_1$' to $R_5$' are preferably the same groups as each other.

X is a hydrogen atom, a hydroxyl group, or a chlorine atom. In an embodiment, X is preferably a hydrogen atom.

In an embodiment, the compound (A) and the compound (B) in the coloring agent are preferably compounds defined as follows in General Formula (1) above and General Formula (2) above.

$R_1$ to $R_5$ and $R_1$' to $R_5$' are each independently a hydrogen atom, an alkoxy group, an alkyl group, a nitro group, a carboxy group, a carbamoyl group, a benzamide group, an alkylsulfamoyl group, a group represented by General Formula (101) above, or a group represented by Chemical Formula (103) above.

In addition, $R_6$ to $R_{11}$ are each independently a hydrogen atom, a carbamoyl group, or a group represented by General Formula (104) above.

In an embodiment, the compound (A) and the compound (B) are preferably compounds defined as follows in General Formula (1) above and General Formula (2) above.

At least two of $R_1$ to $R_5$ are a combination of two groups different from each other selected from the group consisting of an alkoxy group, an alkyl group, a nitro group, a carbamoyl group, a benzamide group or an alkylsulfamoyl group, a group represented by General Formula (101) above, and a group represented by Chemical Formula (103) above.

At least two of $R_1$' to $R_5$' are a combination of two groups different from each other selected from the group consisting of an alkoxy group, an alkyl group, a nitro group, a carbamoyl group, a benzamide group or an alkylsulfamoyl group, a group represented by General Formula (101) above, and a group represented by Chemical Formula (103) above. Herein, $R_1$' to $R_5$' are preferably the same groups as $R_1$ to $R_5$ at the corresponding positions, respectively.

At least one of $R_6$ to $R_{11}$ is a carbamoyl group or a group represented by General Formula (104) above.

In the above embodiment, $R_{21}$ to $R_{25}$ in General Formula (101) above are each preferably a hydrogen atom. In addition, preferably, $R_{31}$ to $R_{35}$ in General Formula (104) above are each independently a hydrogen atom, an alkoxy group, an alkyl group, a halogen group or a nitro group, or two adjacent groups among $R_{31}$ to $R_{35}$ together form a urea bond.

In an embodiment, in $R_1$ to $R_5$ of General Formula (1) above, the combination of two groups different from each other is preferably each independently alkyl group/nitro group, alkoxy group/nitro group, alkoxy group/group represented by General Formula (101) above, alkoxy group/alkylsulfamoyl group, alkoxy group/carbamoyl group, or alkoxy group/-alkylsulfamoyl group.

In the $R_1$' to $R_5$' of General Formula (2) above, the combination of two groups different from each other is preferably each independently alkyl group/nitro group, alkoxy group/nitro group, alkoxy group/group represented by General Formula (101) above, alkoxy group/alkylsulfamoyl group, alkoxy group/carbamoyl group, or alkoxy group/-alkylsulfamoyl group. Herein, $R_1$' to $R_5$' are preferably the same groups as $R_1$ to $R_5$ at the corresponding positions, respectively.

In the coloring agent of the above embodiment, the compound (A) preferably includes a compound represented by General Formula (3) below. In addition, the compound (B) preferably includes a compound represented by General Formula (4) below. From such a viewpoint, the coloring agent more preferably contains a compound represented by General Formula (3) below and a compound represented by General Formula (4) below.

[Chem. 17]

General Formula (3)

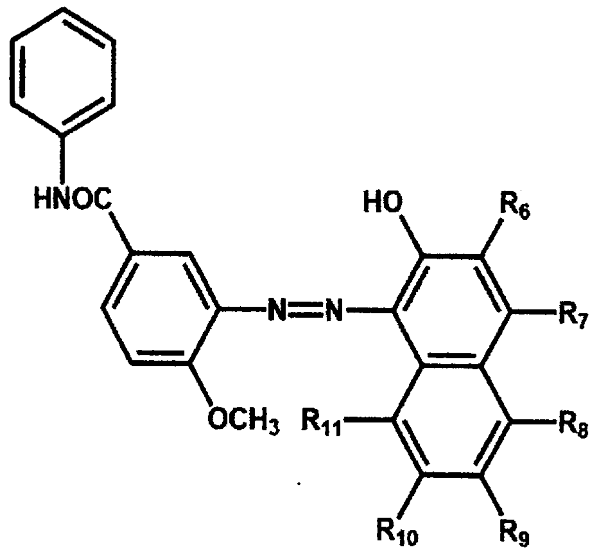

In General Formula (3), $R_6$ to $R_{11}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, a group represented by General Formula (104), or a group represented by General Formula (105), and $R_6$ to $R_{11}$ are not all hydrogen atoms simultaneously. Herein, details of each group described as $R_6$ to $R_{11}$ are the same as those described in the descriptions related to General Formula (1) above.

[Chem. 18]

General Formula (4)

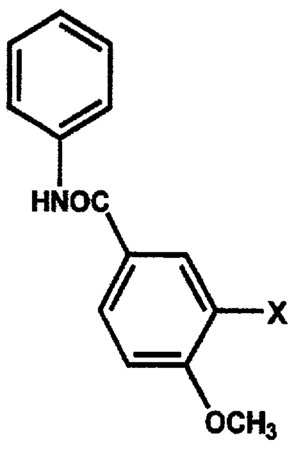

In General Formula (4), X is a hydrogen atom, a hydroxyl group, or a chlorine atom. In an embodiment, X is preferably a hydrogen atom.

In an embodiment, the compound (A) and the compound (B) in the coloring agent are preferably compounds defined as follows in General Formula (1) above and General Formula (2) above.

$R_1$ to $R_5$ and $R_1$' to $R_5$' are each independently a group represented by a hydrogen atom, an alkyl group, a carboxy group, or a carbamoyl group, and include at least one or more of either a carboxy group or a carbamoyl group. Herein, $R_1$' to $R_5$' are preferably the same groups as $R_1$ to $R_5$ at the corresponding positions, respectively.

In addition, $R_6$ is a group represented by General Formula (104) above, and $R_7$ to $R_{11}$ are hydrogen atoms. In General Formula (104) above, $R_{31}$ to $R_{35}$ are each independently a group represented by a hydrogen atom, an alkoxy group, or a halogen group, and $R_{31}$ to $R_{35}$ are not all hydrogen atoms simultaneously.

The main component in the coloring agent of the above embodiment is the compound (A) known as a naphthol-based azo pigment, and the coloring agent further contains the compound (B). A content ratio of the compound (A) in the coloring agent may be 50 mass% or more with respect to a total mass of the coloring agent. From the viewpoint of easily obtaining coloring property by the compound (A), the content ratio may preferably be 80 mass% or more, more preferably 90 mass% or more, and even more preferably 95 mass% or more. On the other hand, the content ratio may be 99.99 mass% or less. From the viewpoint of facilitating improvement in dispersibility and optical properties, the content ratio may preferably be 99.9 mass% or less, more preferably 99.7 mass% or less, and even more preferably 99.5 mass% or less.

In an embodiment, from the viewpoint of facilitating improvement in coloring property of the coloring agent and optical properties, the content ratio of the compound (A) based on the total mass of the coloring agent may preferably be 80 to 99.9 mass%, more preferably 90 to 99.7 mass%, and even more preferably 95 to 99.5 mass%.

Herein, the content ratio of the compound (A) in the coloring agent may be calculated by, for example, absorptiometry as described in Examples to be described later.

With the coloring agent of the above embodiment further containing the compound (B) in addition to the compound (A) serving as the main component, dispersibility, brightness, and transparency are improved. The inventors infer that, due to the presence of the compound (B) in the coloring agent, the aromatic ring moiety of the compound (B) adsorbs to the surface of the compound (A), which makes the surface of the compound (A) (pigment) hydrophobic. As a result, dispersion stability of the pigment in the dispersion can be easily improved. Thus, for example, in the case of preparing an aqueous dispersion using the coloring agent, good dispersion stability and viscosity stability can be easily obtained. The reason is inferred to be that the presence of the compound (B) in the coloring agent or on the surface of the compound (A) suppresses growth of crystal particles of the pigment.

In the coloring agent, a content ratio of the compound (B) with respect to a total mass of the compound (A) may be 0.001 mass% or more. In an embodiment, from the viewpoint of facilitating improvement in optical properties, the content ratio may preferably be 0.01 mass% or more. The content ratio may be, for example, 0.02 mass%, 0.03 mass%, 0.04 mass%, 0.05 mass%, or 0.06 mass%. In an embodiment, the content ratio may more preferably be 0.1 mass% or more. The content ratio may be, for example, 0.15 mass%, 0.2 mass%, 0.25 mass%, 0.3 mass%, 0.35 mass%, 0.36 mass%, 0.4 mass%, or 0.45 mass%. The content ratio may even more preferably be 0.5 mass% or more, particularly preferably 0.52 mass% or more.

On the other hand, from the viewpoint of coloring property, the content ratio may preferably be 10.0 mass% or less. The content ratio may be 5.4 mass% or less, 5.3 mass% or less, or 5.22 mass% or less. In an embodiment, the content ratio may more preferably be 1.6 mass% or less. The content ratio may be, for example, 1.5 mass% or less, 1.4 mass% or less, 1.3 mass% or less, 1.2 mass% or less, or 1.1 mass% or less. In an embodiment, the content ratio may even more preferably be 1.0 mass% or less, even more preferably 0.9 mass% or less, particularly preferably 0.65 mass% or less, and particularly more preferably 0.64 mass% or less.

In the case of adjusting the content ratio of the compound (B) with respect to the total mass of the compound (A) to the above range, optical properties such as brightness, gloss, and transparency of a coating film can be easily improved. In addition, hue stability of the coloring agent against alkali can be easily maintained. Furthermore, it becomes easy to maintain hue stability of a dispersion such as various printing inks using the coloring agent, and viscosity stability of the dispersion under temperature fluctuation storage.

In an embodiment, the coloring agent may further contain other components in addition to the compound (A) and the compound (B) within a range capable of maintaining desired properties. For example, the coloring agent may further contain components derived from raw materials used during production of the coloring agent, in addition to the compound (A) and the compound (B).

In an embodiment, the coloring agent may further contain a compound (C) represented by General Formula (5) below.

[Chem. 19]

General Formula (5)

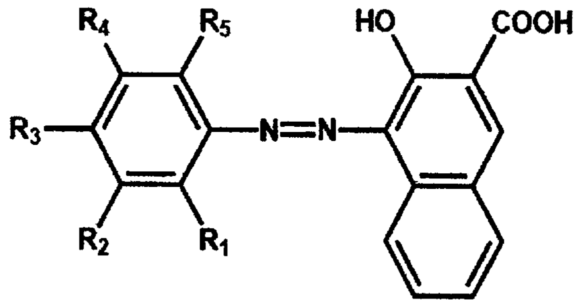

In General Formula (5), $R_1$ to $R_5$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, a group represented by General Formula (101) above, a group represented by General Formula (102) above, or a group represented by Chemical Formula (103) above, and $R_1$ to $R_5$ are not all hydrogen atoms simultaneously. Herein, details of each group described as $R_1$ to $R_5$ are the same as those described in the descriptions related to General Formula (101) above.

In the coloring agent, a content ratio of the compound (C) with respect to the total mass of the compound (A) may preferably be 0.001 mass% or more. In an embodiment, the content may be 0.005 mass% or more or 0.007 mass% or more. The content ratio may more preferably be 0.01 mass% or more. In an embodiment, the content may be 0.02 mass%. The content may even more preferably be 0.03 mass% or more.

On the other hand, the content ratio may preferably be 0.5 mass% or less, more preferably 0.46 mass% or less, and even more preferably 0.15 mass% or less. The content may be, for example, 0.14 mass%, 0.13 mass%, or 0.12 mass%. In an embodiment, the content ratio of the compound (C) may be 0 mass%.

In the case where the coloring agent contains the compound (C) in the above range, improvement in coloring property and transparency tends to become easier. In addition, dispersion stability in a solvent-based dispersion tends to be further improved. Thus, in an embodiment, the coloring agent contains the compound (A), the compound (B), and the compound (C), and the content ratio of the compound (C) is preferably 0.001 to 0.5 mass% with respect to the total mass of the compound (A). The content ratio may more preferably be 0.01 to 0.46 mass%, and even more preferably 0.03 to 0.12 mass%.

In an embodiment, the coloring agent may further contain a compound (D) represented by General Formula (6) below.

[Chem. 20]

General Formula (6)

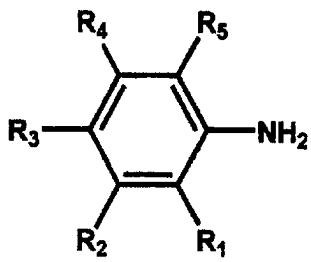

In General Formula (6), $R_1$ to $R_5$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, a group represented by General Formula (101) above, a group represented by General Formula (102) above, or a group represented by Chemical Formula (103) above, and $R_1$ to $R_5$ are not all hydrogen atoms simultaneously. Herein, details of each group described as $R_1$ to $R_5$ are the same as those described in the descriptions related to General Formula (101) above.

A content ratio of the compound (D) with respect to the total mass of the compound (A) may be 0.001 mass% or more. In the case where the coloring agent contains the compound (D), improvement in transparency and coloring

property tends to become easier. On the other hand, the content ratio of the compound (D) in the coloring agent is preferably 0.12 mass% or less. By adjusting the content ratio of the compound (D) to 0.12 mass% or less, thickening due to excessive miniaturization of particles can be easily suppressed. Thus, the content ratio of the compound (D) with respect to the total mass of the compound (A) is preferably in the range of 0.001 mass% to 0.12 mass%.

In an embodiment, particularly in the case of using the coloring agent for coloring or printing directed toward applications in textiles and food packaging, a lower content ratio of the compound (D) is preferable. In the case of considering use in the above applications, the content ratio of the compound (D) in the coloring agent may preferably be 0.12 mass% or less. The content ratio may more preferably be 0.005 mass% or less.

In an embodiment, the coloring agent may further contain a compound (E) represented by General Formula (7) below.

[Chem. 21]

General Formula (7)

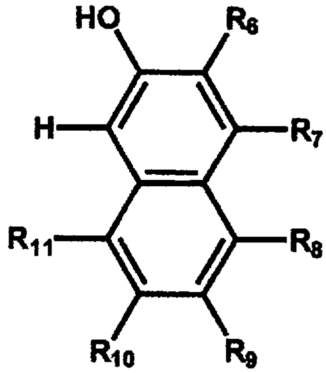

In General Formula (7), $R_6$ to $R_{11}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, a group represented by General Formula (104) above, or a group represented by General Formula (105) above, and $R_6$ to $R_{11}$ are not all hydrogen atoms simultaneously. Herein, details of each group described as $R_6$ to $R_{11}$ are the same as those described in the descriptions related to General Formula (101) above.

The content ratio of the compound (E) with respect to the total mass of the compound (A) may be 0.001 mass% or more. In the case where the coloring agent contains the compound (E), aggregation of primary particles is suppressed, and improvement in dispersibility tends to become easier. On the other hand, the content ratio of the compound (E) in the coloring agent is preferably 6 mass% or less. By adjusting the content ratio of the compound (E) in the coloring agent to 6 mass% or less, reduction in coloring property and reduction in printing suitability and coating film properties can be easily suppressed in various applications of ink. For example, in an application of inkjet ink, reduction in ejection performance due to precipitation of the compound (E) can be easily suppressed. In addition, in an application of gravure ink, reduction in laminate strength can be easily suppressed. Furthermore, in an application of active energy ray curable ink, problems such as inhibition of curability and reduction in storage stability can be easily avoided.

Thus, in an embodiment, in the case of using the coloring agent directed toward applications of ink or printing ink, the content ratio of the compound (E) in the coloring agent is preferably low. In the case of considering use in the above applications, the content ratio of the compound (E) in the coloring agent may preferably be 5.9 mass% or less. The content ratio may more preferably be 1.3 mass% or less, and even more preferably 1.1 mass% or less. The content ratio may be, for example, 1.0 mass%, 0.9 mass%, 0.8 mass%, 0.7 mass%, 0.6 mass%, 0.5 mass%, 0.4 mass%, 0.3 mass%, or 0.1 mass%. In an embodiment, the content ratio may be 0 mass%.

In an embodiment, the content ratio of the compound (E) in the coloring agent may be 0.01 mass% to 5.88 mass%, more preferably 0.01 to 1.26 mass%, and even more preferably 0.01 to 0.88 mass%.

As described above, in an embodiment, the coloring agent contains the compound (A) and the compound (B), and may further contain one or more selected from the group consisting of the compound (C), the compound (D), and the compound (E). Herein, the coloring agent of the above embodiment preferably satisfies one or more requirements among (i) to (iii) below.

(i) The content ratio of the compound (C) with respect to the total mass of the compound (A) is 0.001 mass% or more and 0.5 mass% or less.

(ii) The content ratio of the compound (D) with respect to the total mass of the compound (A) is 0.12 mass% or less.
(iii) The content ratio of the compound (E) with respect to the total mass of the compound (A) is 6 mass% or less.

In still another embodiment, the coloring agent may further contain other components in addition to the compound (A) and the compound (B), and optionally at least one selected from the group consisting of the compounds (C), (D) and (E), within a range capable of maintaining desired properties. For example, during production of an insoluble azo pigment, components such as a resin and/or a surfactant may be used for the purpose of surface modification of the pigment. The coloring agent of the above embodiment does not require surface modification since it has excellent dispersibility itself due to the presence of the compound (B). However, as will be described later, components such as a resin or a surfactant may also be used as necessary during production of the coloring agent. In that case, the coloring agent may further contain the resin or the surfactant used as necessary.
In an embodiment, in the case of using a resin during production of the coloring agent, a content ratio of the resin with respect to the total mass of the coloring agent (with the coloring agent taken as 100 mass%) may preferably be 0.1 to 10 mass%. The content ratio of the resin may more preferably be 0.5 to 5 mass%, and even more preferably 1 to 3 mass%. In addition, in the case of using a surfactant during production of the coloring agent, a content ratio of the surfactant with respect to the total mass of the coloring agent (with the coloring agent taken as 100 mass%) may preferably be 0.1 to 10 mass%. The content ratio of the surfactant may more preferably be 0.5 to 5 mass%, and even more preferably 1 to 3 mass%.
In the case where the coloring agent of the above embodiment further contains components other than the compound (A) and the compound (B), a content ratio thereof may preferably be 20 mass% or less, more preferably 10 mass% or less, and even more preferably 5 mass% or less, with respect to the total mass of the coloring agent. In the case of adjusting the content ratio to the above range, good properties achieved by the interaction between the compound (A) and the compound (B) can be easily maintained.

<2> Method for producing coloring agent

A method for producing the coloring agent of the above embodiment is not particularly limited. For example, the coloring agent may be produced by adding the compound (B) to the compound (A) and mixing them. Examples of a method for adding the compound (B) include a method of producing the compound (B) in the presence of the compound (A), a method of separately producing the compound (A) and the compound (B) and mixing them, a method of producing the compound (A) in the presence of the compound (B), etc., and any of these methods may be selected. The method of producing the compound (A) in the presence of the compound (B) is preferable since a coloring agent with high transparency can be easily obtained. The method of producing the compound (B) in the presence of the compound (A) is also preferable since a coloring agent with high dispersion stability can be easily obtained.
In the production of the coloring agent, the compound (A) may be produced by applying a conventional synthesis method for insoluble azo pigments. For example, a coupling reaction between a base component and a coupler component may be applied. More specifically, as the base component, an aromatic amine represented by General Formula (6) below is diazotized to prepare a solution (1) containing a diazonium salt represented by General Formula (6A) below. In addition, a solution (2) containing a coupler component represented by General Formula (7) is prepared. Then, by mixing the solutions (1) and (2), a coupling reaction between the base component and the diazonium salt is carried out. The compound (A) may be produced by carrying out such a coupling reaction.

[Chem. 22]

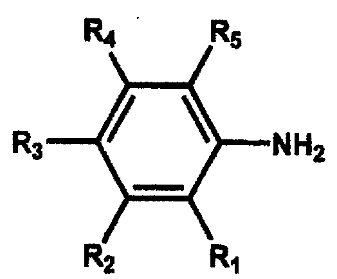

General Formula (6)

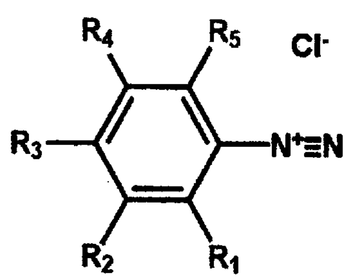

General Formula (6A)

$R_1$ to $R_5$ in General Formulas (6) and (6A) above are as described above.

[Chem. 23]

General Formula (7)

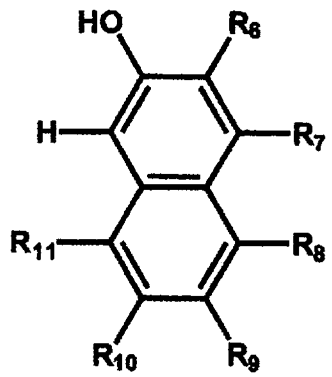

$R_6$ to $R_{11}$ in General Formula (7) above are as described above.

In the coloring agent of the above embodiment, in the case where the compound (A) includes two or more types of compounds, for example, a solution containing two or more types of coupler components is prepared, and a coupling reaction between this solution and a solution containing a diazonium salt is carried out to obtain the desired two or more types of compounds.

As another embodiment, a first solution containing only a first coupler component and a second solution containing only a second coupler component may be prepared respectively, and the coupling reaction may be carried out stepwise. In addition, similarly, a solution containing a diazonium salt using two or more types of base components is prepared, and a coupling reaction between this solution and a solution containing a coupler component is carried out to obtain the desired two or more types of compounds.

Both the solution containing the diazonium salt and the solution containing the coupler component contain at least water. The solution may be in the form of either a transparent aqueous solution or a suspension, but the form of an aqueous solution is preferable. In an embodiment, the coupling reaction is preferably carried out in the presence of a water-soluble organic solvent. From such a viewpoint, the solution containing the diazonium salt and/or the solution containing the coupler component preferably further contains a water-soluble organic solvent in addition to water. In an embodiment, at least the solution containing the coupler component preferably contains water and a water-soluble organic solvent. In the case of using a water-soluble organic solvent, solubility of the coupler component is improved, and thus reactivity and a yield tend to increase.

The solution containing the coupler component contains a coupler component, a base, and water, and may further contain a water-soluble organic solvent as necessary.

The solution containing the coupler component may be prepared, for example, by dissolving the coupler component in a heated basic aqueous solution. In addition, as another example, it may be prepared by mixing water, a water-soluble organic solvent, a coupler component, and a base at room temperature (about 10°C to 30°C) and dissolving the coupler component and the base. The dissolution temperature may be adjusted according to the type and amount of the water-soluble organic solvent to be added, the amount of water, and the type and amount of the base. For example, in the case where the solution contains a water-soluble organic solvent, mixing at about 15 to 50°C is preferable. In the case where the solution does not contain a water-soluble organic solvent, mixing at 50 to 95°C is preferable.

The base may be, for example, any base capable of dissolving in water and dissolving the coupler component. In addition, a base that does not form an insoluble salt when neutralized with an acid in an acid aqueous solution to be described later or in the solution containing the diazonium salt is preferable. Such a base has advantages in terms of cost, dissolving power of the coupler component, waste liquid treatment, etc. The base is preferably, for example, sodium hydroxide or potassium hydroxide.

The solution containing the diazonium salt contains a diazonium salt and water. The solution containing the diazonium salt may contain a reaction mixture of a base component used during preparation of the diazonium salt, an acid component, and sodium nitrite water.

The diazonium salt is obtained by diazotizing the base component of General Formula (6) above. A conventional method may be used for the diazotization method. For example, diazotization may be performed by adding and dissolving hydrochloric acid or sulfuric acid to a solution in which the base component is slurried with ice water, and further adding sodium nitrite. Sulfamic acid may be added to eliminate excess sodium nitrite used for diazotization. A water-soluble organic solvent may be added to the solution containing the diazonium salt.

The water-soluble organic solvent capable of being used during the coupling reaction is not particularly limited. The water-soluble organic solvent may be any organic solvent capable of being arbitrarily mixed with water. The water-soluble organic solvent may be used to obtain the solution containing the coupler component and/or the solution containing the diazonium salt.

Examples of the water-soluble organic solvent include aprotic polar solvents such as acetonitrile, dimethyl sulfoxide, N,N-dimethylformamide, N-methyl-2-pyrrolidone, etc., ketones such as acetone, methyl ethyl ketone, etc., cyclic ethers such as tetrahydrofuran, 1,4-dioxane, etc., dihydric alcohols such as ethylene glycol, diethylene glycol, polyethylene glycol, etc., monohydric alcohols such as methanol, ethanol, isopropanol, etc.

The water-soluble organic solvent may be one of the above solvents used alone or two or more of the above solvents used in combination. Although not particularly limited, the water-soluble organic solvent preferably includes at least one selected from the group consisting of aprotic polar solvents, ketones, monohydric alcohols, and cyclic ethers. In addition, a boiling point of the water-soluble organic solvent is preferably 100°C or lower. Such a water-soluble organic solvent with a boiling point of 100°C or lower has advantages in terms of solvent recovery from waste liquid. For example, at least one selected from the group consisting of acetonitrile, acetone, methanol, and tetrahydrofuran may be suitably used.

An addition amount of the water-soluble organic solvent may be adjusted according to the type of the water-soluble organic solvent. In an embodiment, even in the case where the water-soluble organic solvent is added to either the solution containing the coupler component or the solution containing the diazonium salt, the addition amount thereof is preferably configured to 1 to 50 mass% with respect to the mass of the entire slurry after coupling (in 100 mass%). The addition amount of the water-soluble organic solvent is more preferably 7 to 30 mass%, and even more preferably 12 to 21 mass%.

Examples of the coupling method include reverse coupling, normal coupling, acid precipitation normal coupling, etc. Among these, from the viewpoints of particle size control and a reaction yield, reverse coupling to be described below is preferable.

A conventional method may be used for the reverse coupling method. Examples include a method of adding a solution containing a coupler component to a solution containing a diazonium salt. The temperature during coupling is preferably 0 to 50°C. From the viewpoints of suppressing deterioration and decomposition of the diazonium salt and a reaction rate, 10 to 30°C is particularly preferable.

A buffer solution may be added in advance to the solution containing the diazonium salt. The type of buffer solution is not particularly limited, and any buffer solution having buffering capacity may be used. For example, an acetic acid-sodium acetate aqueous solution is preferably used. In the case of adding a buffer solution, the pH of the solution containing the diazonium salt is preferably adjusted to a range of 3.0 to 6.5. From the viewpoints of improving a reaction rate and improving dispersibility, the slurry after coupling is heated as necessary.

The compound (B) in the coloring agent may be produced according to a conventional method. For example, the compound (B) may also be derived from the raw materials used for producing the compound (A). In that case, $R_1$' to $R_5$' in General Formula (2) above become the same groups as $R_1$ to $R_5$ in General Formula (1) above at the corresponding positions, respectively.

From the above viewpoint, in an embodiment, the method for producing the coloring agent includes performing a coupling reaction between a solution containing a coupler component represented by General Formula (7) above and a solution containing a diazonium salt represented by General Formula (6A) above obtained by diazotizing an aromatic amine, using an excess amount of the diazonium salt in a molar ratio with respect to the coupler component.

As described above, in the case of using an excess amount of the diazonium salt during the coupling reaction, the compound (B) may be generated by thermally decomposing a part of the diazonium salt. Thus, according to the production method of the above embodiment, the compound (B) can be generated together with the compound (A).

Herein, the excess amount of the diazonium salt refers to the case where the ratio of a molar amount (y) of the diazonium salt to a molar amount (x) of the coupler component (i.e., the molar ratio (y)/(x)) becomes greater than 1. For example, in a mixed liquid of the solution containing the coupler component and the solution containing the diazonium salt, adjustment is preferably performed such that the molar ratio (y)/(x) calculated as "molar amount (y) of diazonium salt in solution/molar amount (x) of coupler component in solution" becomes 1.01 or more and 1.1 or less.

In an embodiment, the molar ratio (y)/(x) is more preferably 1.015 or more and 1.06 or less. In the case of adjusting the molar ratio (y)/(x) to the above range, it becomes easy to adjust the content of the compound (B) in the coloring agent to a preferable range.

In the production method of the above embodiment, the coupling reaction is preferably carried out in the presence of a water-soluble organic solvent. Thus, the solution containing the coupler component and the solution containing the diazonium salt each contain at least water and may further contain a water-soluble organic solvent as necessary. In the production method of the above embodiment, particularly preferable, at least the solution containing the coupler component contains a water-soluble organic solvent.

In the production method of the above embodiment, in the case where the molar amount of the diazonium salt is in excess with respect to the molar amount of the coupler component, solubility of the coupler component tends to decrease

during mixing of the solutions for the coupling reaction. However, by using a water-soluble organic solvent, the coupler component can be easily dissolved, and there is a tendency that production of the coloring agent with a good yield becomes easy. In addition, although the reason is not clear, in the case of carrying out thermal decomposition of the excess amount of the diazonium salt in the presence of a water-soluble organic solvent, the compound (B) tends to be generated efficiently.

Decomposition of the excess amount of the diazonium salt may be performed according to a method of heating the solution after the coupling reaction or a method of light irradiation. Either method may be used, but the method of heating the solution after the coupling reaction is preferable. As long as the diazonium salt can be decomposed, the heating temperature and the heating time are not limited and may be appropriately adjusted.

In an embodiment, from the viewpoint of the time required for treatment, the heating temperature is preferably 45°C or higher, more preferably 55°C or higher, and even more preferably 65°C or higher. On the other hand, from the viewpoint of energy cost, the heating temperature is preferably 95°C or lower, more preferably 85°C or lower, and even more preferably 75°C or lower. In an embodiment, the heating time is preferably about 30 minutes to 4 hours, more preferably 30 minutes to 2 hours, and even more preferably 30 minutes to 1 hour.

In addition, a pH of the mixed solution when performing heating is not particularly limited, as long as the diazonium salt is capable of being decomposed. In an embodiment, the pH of the mixed solution is preferably 2 or higher, more preferably 3 or higher, and even more preferably 4 or higher. In addition, the pH of the mixed solution is preferably 7 or lower, more preferably 6 or lower, and even more preferably 5 or lower. Herein, the mixed solution refers to a solution obtained by mixing the solution containing the coupler component and the solution containing the diazonium salt, and is also referred to as a reaction solution.

In the case of adjusting the pH of the mixed solution to the above range and performing heating, first, unreacted coupler component and diazonium salt react to generate the compound (A), and then the excess amount (remaining in the reaction mixture) of the diazonium salt decomposes to generate the compound (B). In this manner, in the case of performing the coupling reaction under the above conditions, with the compound (B) adsorbing to the surface of the compound (A), crystal growth of pigment particles during subsequent heating-stirring and drying is suppressed, and a pigment with high transparency and excellent dispersion stability can be easily obtained.

In addition, after performing heating under the above heating conditions and before performing filtration, the pH may be adjusted for the purpose of enhancing purification efficiency. An acid and a base used for pH adjustment may be the same as the acid and the base used during preparation of the solution containing the coupler component, the solution containing the diazonium salt, and the buffer solution described above, and these may be suitably used.

In another embodiment, as the method for producing the coloring agent, the method of producing the compound (A) in the presence of the compound (B) may be adopted. In that case, the compound (B) is preferably added to the solution containing the coupler component. In the case of producing the coloring agent according to such a method, a coloring agent with high transparency can be easily obtained even with a small amount of the compound (B).

The slurry of the coloring agent obtained by the coupling reaction is preferably subjected to removal of water, solvents, water-soluble salts, etc. using conventional suction filter, filter press, ultrafiltration device, etc. In this manner, a press cake of the coloring agent can be easily obtained. The press cake of the coloring agent may be washed using a solvent such as water and an organic solvent as necessary. The press cake of the coloring agent may be used directly in this state for production of a coloring composition. According to conventional methods, it may be dried and pulverized to produce a powdered coloring composition for use.

In an embodiment, when producing the coloring agent, a known technique may be applied as a method for producing a naphthol-based azo pigment. For example, when producing the coloring agent, a component known to those skilled in the art may be used as necessary in addition to the raw materials of the pigment. For example, a known component such as a resin and/or a surfactant may be used for the purpose of coexisting with the coloring agent.

In an embodiment, the above known component may be added to the solution containing the coupler component, the solution containing the diazonium salt, or the acid solution for acid precipitation. In the case of adding the above known component to the solution containing the coupler component, the known component may be added before or after dissolving the coupler component. In another embodiment, the above known component may be added to the slurry after the coupling reaction. In addition, a pigment press cake obtained by filtering and washing the pigment after the coupling reaction may be made into a slurry again, during which the above known component may be added.

In the case of using a component such as a resin and/or a surfactant during the production of the coloring agent, these exist on the surface of the coloring agent even after production. Thus, preferably, the resin and/or the surfactant is hydrophilic or has a property of dissolving by basicity. By using a resin and/or a surfactant in this manner, there is a tendency that it becomes easy to improve dispersibility by agglomeration relaxation of the coloring agent and impart affinity of the coloring agent to a dispersion resin and a solvent selected according to various applications. The coloring agent of the above embodiment does not necessarily require the above component since it has excellent dispersibility itself due to the presence of the compound (B). However, in the case of using the above component, effects in production can also be obtained, such as improvement of reactivity by promoting dissolution of the coupler component and suppression of crystal

growth of the pigment in the coloring agent.

The resin capable of being used for the above purpose may be, for example, a resin having an acid group such as styrene-(meth)acrylic acid copolymer, (meth)acrylic acid-(meth)acrylic acid alkyl ester copolymer, styrene-(meth)acrylic acid-(meth)acrylic acid alkyl ester copolymer, styrene-α-methylstyrene-(meth)acrylic acid copolymer, styrene-α-methylstyrene-(meth)acrylic acid-(meth)acrylic acid alkyl ester copolymer, polyacrylic acid, polymethacrylic acid, vinylnaphthalene-(meth)acrylic acid copolymer, styrene-maleic (anhydride) copolymer, maleic acid-maleic anhydride copolymer, vinylnaphthalene-maleic (anhydride) copolymer, α-olefin-maleic (anhydride) copolymer, α-olefin-maleic acid alkyl ester copolymer, polyester-modified acrylic acid polymer, etc., acrylic copolymers, and salts thereof. The above resins may be used alone or as a combination of two or more types.

In the case of using the above resin during production of the coloring agent, a compound capable of forming a salt with the above resin may be further used. For example, a basic compound such as an inorganic base and an organic base may be used.

Examples of the inorganic base include alkali metal hydroxides such as lithium hydroxide, sodium hydroxide, potassium hydroxide, etc., alkali metal salts of silicic acid such as sodium orthosilicate, sodium metasilicate, sodium sesquisilicate, etc., alkali metal salts of phosphoric acid such as trisodium phosphate, alkali metal salts of carbonic acid such as disodium carbonate, sodium hydrogen carbonate, dipotassium carbonate, etc., alkali metal salts of boric acid such as sodium borate, and ammonia.

Examples of the organic base include alkylamines such as methylamine, dimethylamine, trimethylamine, ethylamine, diethylamine, triethylamine, etc., alkanolamines such as aminoethanol, methylaminoethanol, dimethylaminoethanol, ethylaminoethanol, butylaminoethanol, diethylaminoethanol, dibutylaminoethanol, diethanolamine, triethanolamine, etc., amines having a nonionic group such as methoxypoly(oxyethylene/oxypropylene)-2-propylamine, etc.

The basic compound may be one type used alone or two or more types used in combination.

In still another embodiment, a surfactant may be used during production of the coloring agent. The surfactant may be, for example, an anionic, nonionic, or amphoteric surfactant.

Examples of the anionic surfactant include fatty acid salt, alkyl sulfate ester salt, alkylaryl sulfonate, alkylnaphthalene sulfonate, alkyl sulfate, dialkyl sulfonate, dialkyl sulfosuccinate, alkyl diaryl ether disulfonate, alkyl phosphate, polyoxyethylene alkyl ether sulfate, polyoxyethylene alkylaryl ether sulfate, naphthalene sulfonic acid formalin condensate, polyoxyethylene alkyl ether phosphate, polyoxyethylene alkyl phosphate ester salt, glycerol borate fatty acid ester, and polyoxyethylene glycerol fatty acid ester.

Examples of the amphoteric surfactant include betaine, sulfobetaine, alkyl betaine, and alkylamine oxide.

Examples of the nonionic surfactant include polyoxyethylene alkyl ether, polyoxyethylene alkylaryl ether, polyoxyethylene oxypropylene block copolymer, sorbitan fatty acid ester, polyoxyethylene sorbitan fatty acid ester, polyoxyethylene sorbitol fatty acid ester, glycerin fatty acid ester, polyoxyethylene fatty acid ester, and polyoxyethylene alkylamine.

In an embodiment, among the above surfactants, a combination of an amphoteric surfactant and an anionic surfactant is preferable. Although not particularly limited, in the case of adding a surfactant to the solution containing the coupler component, an anionic or amphoteric surfactant is preferable. In the case of adding to the slurry obtained after the coupling reaction, a nonionic surfactant may be used.

The surfactant may be one type used alone or two or more types used in combination.

## <3> Coloring composition

An embodiment of the present invention relates to a coloring composition containing the coloring agent of the above embodiment. In the coloring composition, components other than the coloring agent may be appropriately selected according to the application. In an embodiment, for applications directed toward forming a coating film, the coloring composition may contain a dispersion medium in addition to the coloring agent, and the dispersion medium may contain at least one or more selected from the group consisting of a resin and a polymerizable compound. The dispersion medium may further contain a solvent.

In the coloring composition, the dispersion medium is selected according to the application of the coloring composition. In an embodiment, the coloring composition contains the coloring agent and a resin, and may further contain a solvent as necessary. In another embodiment, the coloring composition contains the coloring agent and a polymerizable compound, and may further contain at least one of a resin and a solvent as necessary. The coloring compositions of the above embodiments may each further contain various additives as necessary. Examples of the coloring composition include a pigment dispersion, a toner, a paint, and a printing ink. Hereinafter, the coloring composition will be described according to more specific embodiments.

<Pigment dispersion>

In an embodiment, the coloring composition may be in the form of a coloring agent dispersion (hereinafter referred to as a pigment dispersion) that takes the coloring agent of the above embodiment as a main component and further contains a dispersion medium for dispersing the coloring agent. The dispersion medium contains at least a resin and may further contain a solvent according to the application. The pigment dispersion may be suitably used, for example, as a masterbatch for coloring plastics. The masterbatch contains at least a coloring agent and a resin, and may be suitably used for coloring a plastic molded body.

In addition, the pigment dispersion may be suitably used as an intermediate of, for example, a paint and a printing ink. The pigment dispersion used as the intermediate may contain a coloring agent, a resin, and a solvent. The resin contained in the pigment dispersion may contain a resin-type pigment dispersant.

In the case of using the pigment dispersion in various applications, it is preferable that viscosity increase hardly occurs and dispersion stability of the pigment is excellent. The pigment dispersion of the present embodiment is excellent in terms of good dispersibility and low initial viscosity in comparison with pigment dispersions containing conventional naphthol-based azo pigments. In addition, the pigment dispersion of the present embodiment is also excellent in terms of hue stability against alkali and viscosity stability under temperature fluctuation storage.

In the case where the pigment dispersion contains a solvent, the solvent may be any of water, a water-soluble solvent, and a water-insoluble solvent. In the case where the solvent contains at least water, an aqueous pigment dispersion may be constituted. The water-soluble solvent and the water-insoluble solvent are not particularly limited. For example, they may be the same as a water-soluble solvent and a water-insoluble solvent constituting a paint to be described later.

A disperser used for preparing the aqueous pigment dispersion is not particularly limited. Examples of the disperser include a horizontal sand mill, a vertical sand mill, an annular bead mill, an attritor, a microfluidizer, a high-speed mixer, a homo mixer, a homogenizer, a high-pressure homogenizer, a ball mill, a paint shaker, a roll mill, a stone mortar type mill, an ultrasonic disperser, a high-pressure disperser, a counter collision type disperser, an oblique collision type disperser, etc. In addition, a disperser and a mixer commonly used for preparing various dispersions in the technical field may be appropriately selected and used.

In addition, before performing dispersing, a treatment may be performed, such as pre-dispersing using a kneading mixer (e.g., kneader or three-roll mill) or solid dispersing by a two-roll mill. In addition, after dispersing with various dispersers, processes may be performed, including a post-treatment of storing in a heated state at 30 to 80°C for several hours to about one week, and a post-treatment using an ultrasonic disperser or a collision-type beadless disperser, and these processes are effective for imparting dispersion stability to the pigment dispersion.

<Toner>

In an embodiment, the coloring composition may be suitably used in an application of a toner. The coloring composition for a toner contains the coloring agent of the above embodiment and a dispersion medium (resin). The coloring composition for a toner may further contain components known to those skilled in the art as toner components such as a charge control agent.

The toner may be either a dry toner or a wet toner. The toner may also be produced using the coloring composition for a toner according to other conventional methods in the technical field.

The resin constituting the coloring composition for a toner is not particularly limited. Examples include styrene-acrylic acid ester copolymer, styrene-based copolymer, polyester resin, etc. These resins are also called binder resins.

In an embodiment, the binder resin for a toner is preferably a polyester resin or a styrene-based copolymer, and more preferably a polyester resin. The coloring agent of the present embodiment has particularly excellent suitability for a polyester resin among the above binder resins. Thus, in an embodiment, the coloring composition for a toner preferably contains a coloring agent and a binder resin containing a polyester resin. In such a coloring composition for a toner, the coloring agent of the above embodiment is uniformly and finely dispersed in the binder resin containing a polyester resin. Thus, a high-quality toner can be provided by the coloring composition of the above embodiment.

<Paint>

In an embodiment, the coloring composition may be suitably used in applications of a paint. The coloring composition for a paint contains the coloring agent of the above embodiment, a resin, and a solvent. The coloring composition for a paint is preferably prepared using a pigment dispersion containing a coloring agent, a resin, and a solvent. For example, the coloring composition for a paint may be prepared by mixing a pigment dispersion, a resin for a paint, and a solvent. Herein, the resin in the pigment dispersion and the resin used for preparing the paint may be the same as or different from each other.

As the resin for a paint, a thermosetting resin and/or a thermoplastic resin may be used. The thermosetting resin is preferably a resin with a glass transition temperature of 10°C or higher.

Examples of the thermosetting resin include an acrylic resin, a polyester resin, a polyurethane resin, a melamine resin, etc. In addition, the thermosetting resin preferably has a functional group capable of reacting with a curing agent. Examples of the functional group include carboxyl group, hydroxyl group, etc. Examples of the curing agent include an isocyanate curing agent, an epoxy curing agent, an aziridine curing agent, an amine curing agent, etc.

The thermoplastic resin is preferably a resin with a glass transition temperature of 30°C or higher. Examples of the thermoplastic resin include a nitrocellulose resin, an acrylic resin, a polyester resin, etc. The thermosetting resin and the thermoplastic resin may be used in combination.

The solvent may be any of water, a water-insoluble solvent, and a water-soluble solvent. In the case where the solvent contains at least water, an aqueous paint may be constituted.

Specific examples of the water-insoluble solvent include toluene, xylene, butyl acetate, methyl acetate, methyl isobutyl ketone, aliphatic hydrocarbon, etc.

The water-soluble solvent may be, for example, monohydric alcohol, dihydric alcohol, etc. Examples of the water-soluble solvent include monohydric alcohol such as ethanol, n-propanol, isopropanol, isobutanol, etc., dihydric alcohol such as ethylene glycol, diethylene glycol, triethylene glycol, propylene glycol, etc., and trihydric or higher polyhydric alcohol such as glycerin and the like. The water-soluble solvent may be a water-dilutable monoether derived from polyhydric alcohol, and examples include methoxypropanol or methoxybutanol. In addition, examples also include a water-dilutable glycol ether such as butyl glycol or butyl diglycol.

In an embodiment, from the viewpoint of constituting an aqueous paint, the solvent preferably contains water and a water-soluble solvent.

In an embodiment, the paint may further contain an effect material. The effect material may be particles with an average thickness of 0.5 to 10 μm and an average particle diameter of 5 to 50 μm. Examples of the effect material include a metal flake, mica, and a coated glass flake. Examples of the metal flake include an aluminum flake, a gold powder, etc. Examples of the mica include general mica, coated mica, etc. Examples of the coated glass flake include a glass flake coated with a metal oxide such as titanium oxide and the like. A content of the effect material is preferably 0.1 to 10 mass% with respect to a total mass of the paint (in 100 mass%).

The paint may further contain other components. For example, a coloring pigment and various additives commonly used in the technical field may be blended as necessary. A method for producing the paint, and a coating method and a drying method thereof are not particularly limited, and methods known in the technical field may be applied. Examples of the applications of the paint include a paint for metals, a paint for plastics, etc.

<Printing ink>

In an embodiment, the coloring composition may be suitably used in applications of a printing ink. The coloring composition for a printing ink contains the coloring agent of the above embodiment and a dispersion medium, and the dispersion medium is appropriately selected according to the type of the printing ink. Printing inks may be broadly classified into solvent-based printing inks, aqueous printing inks, and active energy ray curable printing inks depending on the presence or absence of a solvent and the type of the dispersion medium. In addition, according to the form of printing, printing inks are subdivided into, for example, offset printing inks, flexographic printing inks, gravure printing inks, color filter inks, inkjet printing inks, etc. The coloring agent of the present embodiment is excellent in dispersibility and is excellent in coloring property, brightness, and transparency, and thus may be suitably used in various applications of a printing ink. Hereinafter, representative printing inks will be exemplified.

In an embodiment, the printing ink contains the coloring agent of the above embodiment, a resin, and a solvent. These printing inks are distinguished from an active energy ray curable printing ink to be described later.

Examples of the printing inks as described above include offset printing inks, flexographic printing inks, gravure printing inks, color filter inks, etc. Hereinafter, these various printing inks will be briefly described as a flexographic ink, a gravure ink, a color filter ink, and an inkjet ink. In addition, in the case where the solvent constituting the printing ink contains at least water, the printing ink is referred to as an aqueous printing ink.

The coloring composition for a printing ink is preferably prepared using a pigment dispersion containing a coloring agent, a resin, and a solvent. For example, the coloring composition for a printing ink may be prepared by mixing a pigment dispersion, a resin for a printing ink, and a solvent. Herein, the resin in the pigment dispersion and the resin used for preparing the printing ink may be the same as or different from each other.

In the printing ink of the above embodiment, the resin may be, for example, a rosin resin, a rosin-modified phenol resin, polyurethane, nitrocellulose, an acrylic resin, a styrene-acrylic resin, a petroleum resin, etc.

In the printing ink of the above embodiment, the solvent may be any of water, a water-insoluble solvent, and a water-soluble solvent.

Examples of the water-insoluble solvent include toluene, xylene, butyl acetate, methyl acetate, methyl ethyl

ketone, methyl isobutyl ketone, butyl alcohol, aliphatic hydrocarbon, etc.

Examples of the water-soluble solvent include ethanol, n-propanol, isopropanol, isobutanol, ethylene glycol, diethylene glycol, triethylene glycol, propylene glycol, and glycerin. In addition, examples also include a water-dilutable monoether derived from polyhydric alcohol. For example, examples include methoxypropanol or methoxybutanol. In addition, examples also include a water-dilutable glycol ether such as butyl glycol or butyl diglycol.

In an embodiment, from the viewpoint of constituting an aqueous printing ink, the solvent contains at least water. The solvent may further contain either a water-insoluble solvent or a water-soluble solvent. In an embodiment, the solvent preferably contains water and a water-soluble solvent.

The printing ink may further contain an effect material. The type and the addition amount of the effect material may be as exemplified in the descriptions of the paint above.

The printing ink may contain other components. For example, a coloring pigment and various additives commonly used in the technical field may be blended as necessary. A method for producing the printing ink, and a coating method and a drying method thereof are not particularly limited, and methods known in the technical field may be used.

<Inkjet ink>

In an embodiment, the coloring composition may be suitably used in applications for an inkjet (IJ) printing ink. Hereinafter, the inkjet (IJ) printing ink will be briefly described as an IJ ink. In an embodiment, the coloring composition for an IJ ink contains a coloring agent and a resin. In another embodiment, the coloring composition for an IJ ink contains a coloring agent and a resin, and preferably further contains a solvent. The coloring composition for an IJ ink is preferably prepared using a pigment dispersion containing a coloring agent, a resin, and, wherever necessary, a solvent. In another embodiment, the coloring composition for an IJ ink may be configured with a composition in which the resin is changed to a polymerizable compound or a composition in which a resin and a polymerizable compound are used in combination, in the coloring composition for an IJ ink of the embodiment described above.

For example, the coloring composition for an IJ ink may be prepared by mixing a pigment dispersion and a resin for an IJ ink. Herein, the resin in the pigment dispersion and the resin used for preparing the IJ ink may be the same as or different from each other.

IJ inks may be broadly classified into (solvent-based) IJ inks, aqueous IJ inks, and active energy ray curable IJ inks depending on the presence or absence and the type of a solvent, and the type of the resin or the polymerizable compound serving as the dispersion medium. Furthermore, active energy ray curable IJ inks may be broadly classified into photocurable IJ inks and electron beam curable IJ inks according to the curing means of the polymerizable compound. Although not particularly limited, the coloring composition of the above embodiment may be suitably used as an aqueous IJ ink. Hereinafter, an aqueous IJ ink will be described as an example of the IJ ink.

Taking a total mass of the aqueous IJ ink as 100 mass%, a content of the coloring agent is preferably 0.5 to 30 mass%, and more preferably 1 to 15 mass%.

The resin used in the aqueous IJ ink is important for obtaining fixation property of the ink to a printed matter (base material).

Examples of the resin include acrylic resins, olefin-maleic acid-based resins, styrene-acrylic resins, a polyester-based resins, polyamide-based resins, polyurethane-based resins, etc. The form of the resin may be, for example, a water-soluble resin, an emulsion particle, etc. Among these, the form of the emulsion particle is preferable. The emulsion particle may be, for example, a particle of a single composition, or a core-shell type particle, and may be selected in any manner for use. In the case of using the emulsion particle, a viscosity of the aqueous IJ ink is easily lowered, and a printed matter excellent in water resistance is easily obtained.

In 100 mass% of a non-volatile content in the aqueous IJ ink, a content of the resin is preferably 2 to 30 mass%, and more preferably 3 to 20 mass%. In the case where the IJ ink contains the resin within the above range, ejection stability tends to improve, and fixation property also tends to improve.

From the viewpoint of constituting the aqueous IJ ink, the solvent contains at least water. The solvent may further contain either a water-insoluble solvent or a water-soluble solvent. In an embodiment, the solvent preferably contains water and a water-soluble solvent.

Examples of the water-soluble solvent include glycol ethers, diols, etc. These solvents permeate into the base material very quickly, and permeate quickly even into low-liquid-absorbing or non-liquid-absorbing base materials.

Examples of the low-liquid-absorbing or non-liquid-absorbing base material include a coated paper, an art paper, a vinyl chloride sheet, a film, and a fabric. In the case of using a solvent excellent in permeability into the base material as described above, drying during printing is fast, and accurate printing can be easily realized. In addition, among water-soluble solvents, in the case of using a solvent with a high boiling point, the solvent also acts as a wetting agent.

The water-soluble solvent is important for preventing drying and solidification at a nozzle portion in a printer head of the aqueous IJ ink and for obtaining ejection stability of the ink.

Examples of the water-soluble solvent capable of being suitably used from this viewpoint include ethylene glycol, diethylene glycol, propylene glycol, triethylene glycol, polyethylene glycol, glycerin, tetraethylene glycol, dipropylene glycol, ketone alcohol, diethylene glycol monobutyl ether, ethylene glycol monobutyl ether, ethylene glycol monoethyl ether, 1,2-hexanediol, N-methyl-2-pyrrolidone, substituted pyrrolidone, 2,4,6-hexanetriol, tetrafurfuryl alcohol, 4-methoxy-4-methylpentanone, etc.

In an embodiment, a total content of water and the water-soluble solvent is preferably 15 to 50 mass% in 100 mass% of the IJ ink. Herein, a content ratio of the water-soluble solvent may preferably be 10 to 90 mass%, more preferably 20 to 80 mass%, and even more preferably 30 to 70 mass%, with respect to a total mass of water and the water-soluble solvent.

The IJ ink may further contain additives. Examples of the additives include a drying accelerator, a penetrant, a preservative, a chelating agent, a pH adjuster, a defoaming agent, a wetting agent, a surfactant, etc.

In an embodiment, the IJ ink may be suitably used particularly as an ink of magenta color. The IJ ink may be combined with inks of other colors than magenta to constitute an ink set. For example, examples of other colors capable of being used in combination with the IJ ink include cyan color, yellow color, black color, white color, red color, green color, blue color, orange color, pink color, gold color, silver color, and bronze color.

The ink set may be, for example, a four-color ink set in which cyan color, yellow color, and black color are added to the magenta color using the IJ ink of the above embodiment. In another embodiment, the ink set may be suitably used as an ink set of five or more colors with further addition of spot colors such as orange color, red color, and green color. The pigment concentration, viscosity, dynamic viscoelasticity, surface tension, coating order, evaporation rate of volatile component, etc. of each ink are design matters and may be appropriately adjusted according to desired properties.

The IJ ink of the above embodiment may be coated on various conventional base materials. The base material may be, for example, a high-water-absorbing base material such as a plain paper, a fabric, a knit, etc., a low-water-absorbing base material such as an art paper, a coated paper, vinyl chloride, wood, concrete, a polyethylene film, a polypropylene film, a polyethylene terephthalate film, natural leather, artificial leather, etc., or a non-water-absorbing base material such as metal (aluminum, stainless steel, etc.).

<Active energy ray curable flexographic ink>

In an embodiment, the coloring composition may be configured as an active energy ray curable flexographic printing ink. Hereinafter, the active energy ray curable flexographic printing ink will be briefly described as an active energy ray curable flexographic ink. For applications of such a printing ink, the coloring composition for an active energy ray curable flexographic ink contains the coloring agent of the above embodiment and a polymerizable compound as a dispersion medium. A photopolymerization initiator may also be contained. A content ratio of the coloring agent in the active energy ray curable flexographic ink is not particularly limited. In an embodiment, the content ratio of the coloring agent is preferably 5 to 30 mass%, and more preferably 10 to 25 mass%, with respect to a total mass of the ink.

In the ink of the above embodiment, the polymerizable compound is preferably a compound having one or more ethylenically unsaturated bonds in the molecule. The polymerizable compound contains a monomer and/or an oligomer (hereinafter, "monomer and/or oligomer" will be briefly described as "monomer").

The monomer preferably has a polymerizable group such as a (meth)acryloyl group, an allyl group, a vinyl group, a vinyl ether group, etc. in the molecule. From the viewpoint of curability, the monomer preferably includes a monomer having either a (meth)acryloyl group or a vinyl group, more preferably includes a monomer having 3 or more and 6 or less (meth)acryloyl groups in the molecule, and even more preferably includes a monomer having 6 (meth)acryloyl groups in the molecule.

The monomer having a (meth)acryloyl group is not particularly limited, but examples include the following.

Trifunctional (meth)acrylate monomer having three (meth)acryloyl groups in the molecule: trimethylolpropane tri(meth)acrylate, EO-modified (3) trimethylolpropane tri(meth)acrylate, EO-modified (6) trimethylolpropane tri(meth) acrylate, PO-modified (3) trimethylolpropane tri(meth)acrylate, ε-caprolactone-modified tris-(2-acryloxyethyl) isocyanurate, ethoxylated isocyanuric acid tri(meth)acrylate, tris(2-hydroxyethyl) isocyanurate tri(meth)acrylate, pentaerythritol tri(meth)acrylate, etc.

Tetrafunctional (meth)acrylate monomer having four acryloyl groups in the molecule: pentaerythritol tetra(meth) acrylate, EO-modified (4) pentaerythritol tetra(meth)acrylate, ditrimethylolpropane tetra(meth)acrylate, etc.

Pentafunctional (meth)acrylate monomer having five (meth)acryloyl groups in the molecule: dipentaerythritol penta(meth)acrylate, etc.

Hexafunctional (meth)acrylate monomer having six (meth)acryloyl groups in the molecule: dipentaerythritol hexa(meth)acrylate, etc.

Examples of the monomer having a vinyl group include N-vinyl-2-pyrrolidone, N-vinylcaprolactam, etc.

Examples of the oligomer include a urethane (meth)acrylate oligomer such as an aliphatic urethane (meth) acrylate oligomer, an aromatic urethane (meth)acrylate oligomer, etc., a (meth)acrylic ester oligomer, a polyester (meth)acrylate oligomer, an epoxy (meth)acrylate oligomer, etc. The oligomer preferably contains about 2 to 16 ethylenically unsaturated bonds. Among these, a urethane (meth)acrylate oligomer is preferable, and a urethane (meth)acrylate oligomer having 6 to 12 (meth)acryloyl groups is more preferable. The 6- to 12-functional urethane (meth)acrylate oligomer is also available as a commercial product.

A weight average molecular weight (Mw) of the oligomer is preferably 400 to 10,000, more preferably 500 to 5,000, even more preferably 800 to 4,000, and still more preferably 1,000 to 2,000. Herein, the "weight average molecular weight (Mw)" may be obtained as a polystyrene-equivalent molecular weight by general gel permeation chromatography (hereinafter, GPC).

In the ink of the above embodiment, the polymerizable compound may be one type used alone or two or more types used in combination. A content ratio of the polymerizable compound is preferably 25 to 90 mass%, and more preferably 35 to 80 mass%, with respect to a total mass of the active energy ray curable flexographic ink.

In an embodiment, the active energy ray curable flexographic ink contains a compound having one or more ethylenically unsaturated bonds in the molecule as the polymerizable compound, and preferably contains a photopolymerization initiator in the case of irradiating light as an active energy ray. As the photopolymerization initiator, a radically polymerizable photopolymerization initiator is preferably contained. The photopolymerization initiator undergoes a chemical change and generates radicals due to action of light, or photoelectron transfer or energy transfer with a sensitizing dye in the case of using the sensitizing dye in combination.

The photoradical polymerization initiator is not particularly limited, and conventional ones may be used. Examples include benzophenone-based compounds, dialkoxyacetophenone-based compounds, $\alpha$-hydroxyalkylphenone-based compounds, $\alpha$-aminoalkylphenone-based compounds, acylphosphine oxide-based compounds, thioxanthone-based compounds, etc.

The polymerization initiator may be one type used alone or two or more types used in combination. A content ratio of the polymerization initiator is preferably 0.5 to 20 mass%, and more preferably 5 to 15 mass%, with respect to a total mass of the active energy ray curable flexographic ink.

In an embodiment, the active energy ray curable flexographic ink may also contain a polymerization initiation aid. By containing the polymerization initiation aid, curability can be further enhanced. Examples of the polymerization initiation aid include triethanolamine, methyldiethanolamine, triisopropanolamine, aliphatic amine, ethyl 2-dimethylaminobenzoate, ethyl 4-dimethylaminobenzoate, isoamyl 4-dimethylaminobenzoate, dibutylethanolamine, etc.

A content ratio of the polymerization initiation aid is preferably 0.1 to 5 mass%, and more preferably 0.5 to 3 mass%, with respect to the total mass of the active energy ray curable flexographic ink.

In an embodiment, the active energy ray curable flexographic ink preferably contains a wax to further enhance friction resistance, anti-blocking properties, slip properties, and scratch resistance. The wax is not particularly limited, and conventional waxes may be used. For example, there are natural waxes and synthetic waxes. Examples of natural waxes include carnauba wax, Japan wax, lanolin, montan wax, paraffin wax, microcrystalline wax, etc. Examples of synthetic waxes include Fischer-Tropsch wax, polyethylene wax, polypropylene wax, polytetrafluoroethylene wax, polyamide wax silicone compound, etc.

A content ratio of the wax is preferably 0.1 to 5 mass%, and more preferably 0.5 to 4 mass%, with respect to the total mass of the active energy ray curable flexographic ink, from the viewpoint of balance of friction resistance, gloss, and piling.

In an embodiment, the active energy ray curable flexographic ink may further contain a resin in addition to the polymerizable compound as a dispersion medium. By containing the resin, it becomes easy to alleviate curing shrinkage of the coating film that occurs during curing, suppress curling of the base material, and further improve adhesion to the base material.

Examples of the resin include polyvinyl chloride, poly(meth)acrylic acid ester, an epoxy resin, a polyester resin, a polyurethane resin, a cellulose derivative (e.g., ethyl cellulose, cellulose acetate, nitrocellulose), vinyl chloride-vinyl acetate copolymer, a polyamide resin, a polyvinyl acetal resin, a diallyl phthalate resin, an alkyd resin, a rosin-modified alkyd resin, a rosin-modified alkyd resin, a petroleum resin, a urea resin, a synthetic rubber such as butadiene-acrylonitrile copolymer, etc. Among these, a diallyl phthalate resin and a polyester resin are preferable. A diallyl phthalate resin is more preferable.

A weight average molecular weight of the resin is preferably 1,000 to 100,000, and may more preferably be 2,000 to 70,000.

The resin may be one type used alone or two or more types used in combination. In addition, from the viewpoint of curability, a content ratio of the resin is preferably 1 to 15 mass%, and may more preferably be 1 to 5 mass%, with respect to the total mass of the active energy ray curable flexographic ink.

In an embodiment, the active energy ray curable flexographic ink may contain a polymerization inhibitor. Examples of the polymerization inhibitor include 4-methoxyphenol, hydroquinone, methylhydroquinone, t-butylhydroquinone, 2,6-di-t-butyl-4-methylphenol, phenothiazine, aluminum salt of N-nitrosophenylhydroxylamine, etc.

A content ratio of the polymerization inhibitor is preferably 0.01 to 2 mass% with respect to the total mass of the

active energy ray curable flexographic ink, from the viewpoint of enhancing storage stability of the active energy ray curable flexographic ink while maintaining curability.

The active energy ray curable flexographic ink may contain other components such as various additives in addition to the above components as necessary, within a range that does not reduce the effects of the present invention. Various additives such as an extender pigment, a leveling agent, a surfactant, a defoaming agent, an ultraviolet absorber, an antistatic agent, and an antioxidant may be added to the ink as necessary. In addition, the coloring agent of the above embodiment does not necessarily require a dispersant since it has excellent dispersibility itself due to the presence of the compound (B) in addition to the compound (A). However, from the viewpoint of further enhancing dispersibility, the active energy ray curable flexographic ink may contain a conventional dispersant as necessary.

Preferably, the active energy ray curable flexographic ink does not substantially contain water. "Not substantially contain" means that the content in the ink composition is 1 mass% or less.

An embodiment of the present invention relates to an article such as a printed matter having a coating film composed of the paint or the printing ink of the above embodiment. Formation of the printed matter may be carried out according to methods known in the technical field. For example, in the case of the active energy ray curable flexographic ink, the printed matter may be formed by printing the ink on a recorded medium according to a flexographic printing method, and then irradiating an active energy ray to cure the ink.

The recorded medium is not particularly limited, and conventional recorded media may be used. Specifically, examples include a coating paper such as an art paper, a coated paper, a cast paper, etc., a non-coating paper such as a wood-free paper, an ordinary grade paper, a newsprint, etc., a synthetic paper such as a Yupo paper, a plastic film such as PET (polyethylene terephthalate), PP (polypropylene), OPP (biaxially oriented polypropylene), etc.

A method for curing the active energy ray curable flexographic ink is not particularly limited, and a conventional method may be used. For example, the ink may be cured by irradiating $\alpha$-ray, $\gamma$-ray, electron beam, X-ray, ultraviolet ray, visible light, or infrared light. Among these, ultraviolet ray and electron beam are preferable, and ultraviolet ray is more preferable. A peak wavelength of the active energy ray is preferably 200 to 600 nm, and more preferably 350 to 420 nm.

An active energy ray source is not particularly limited, and a conventional active energy ray source may be used. Specifically, examples include a mercury lamp, a xenon lamp, a metal halide lamp, an LED (light emitting diode) such as an ultraviolet light emitting diode (UV-LED), an ultraviolet laser diode (UV-LD), a gas/solid laser, etc. Among these, an ultraviolet light emitting diode (UV-LED) is preferable in terms of a small size, a long life, high efficiency, and low cost.

Although the embodiments of the present invention have been described above, the present invention is not limited to the embodiments described above and includes various embodiments.

## Examples

The present invention will be described more specifically with reference to Examples below. The present invention is not limited to Examples below. Unless otherwise specified, "parts" represents "parts by mass" and "%" represents "mass%".

Abbreviations and product names described in Examples below refer to the following.

<Coupler>

Naphthol AS: 3-hydroxy-2-naphthanilide
Naphthol AS-BI: 5-(3-hydroxy-2-naphtoylamino)benzimidazolone
Naphthol AS-BS: 3-hydroxy-3'-nitro-2-naphthanilide
Naphthol AS-CA: N-(5-chloro-2-methoxyphenyl)-3-hydroxy-2-naphthamide
Naphthol AS-D: 3-hydroxy-2'-methyl-2-naphthanilide
Naphthol AS-KB: 5'-chloro-3-hydroxy-2'-methyl-2-naphthanilide
Naphthol AS-LC: 4'-chloro-3-hydroxy-2',5'-dimethoxy-2-naphthanilide
BON amide: 3-hydroxy-2-naphthamide
BON acid: 3-hydroxy-2-naphthoic acid
Naphthol AS-RL: 3-hydroxy-4'-methoxy-2-naphthanilide
Naphthol AS-OL: 3-hydroxy-2'-methoxy-2-naphthanilide
Naphthol AS-E: 4'-chloro-3-hydroxy-2-naphthanilide

<Base>

M-20: 3-amino-4-methoxybenzamide
M-40: 3-amino-4-methoxybenzanilide
M-60: 3-amino-4-methylbenzamide
R185 base: 4-amino-5-methoxy-N,2-dimethylbenzenesulfonamide
V32 base: 4-amino-2,5-dimethoxy-N-methylbenzenesulfonamide
Azoic DC31: 4-benzylsulfonyl-2-aminomethoxybenzene
Fast Scarlet G: 2-methyl-5-nitroaniline
Fast Scarlet RC: 2-methoxy-5-nitroaniline
Fast Violet B: 4-benzoylamino-2-methoxy-5-methylaniline
M-70: 4-aminobenzamide

<Compound (A)>

C.I. Pigment Red 269: N-(5-chloro-2-methoxyphenyl)-3-hydroxy-4-[2-methoxy-5-(phenylcarbamoyl)phenylazo]-2-naphthamide
C.I. Pigment Red 150: 3-hydroxy-4-((2-methoxy-5-((phenylamino)carbonyl)phenyl)azo)-2-naphthalenecarboxyamide
C.I. Pigment Red 31: 4-((5-(anilino)carbonyl-2-methoxyphenyl)azo)-3-hydroxy-N-(3-nitrophenyl)naphthalene-2-carboxyamide
C.I. Pigment Red 17: 3-hydroxy-4-((2-methyl-5-nitrophenyl)azo)-N-(2-methylphenyl)-2-naphthalenecarboxyamide
C.I. Pigment Red 22: 3-hydroxy-4-((2-methyl-5-nitrophenyl)azo)-N-phenyl-2-naphthalenecarboxyamide
C.I. Pigment Red 23: 1-(2-methoxy-5-nitrophenylazo)-2-hydroxy-3-(3-nitrophenylcarbamoyl)naphthalene
C.I. Pigment Red 32: 4-((5-(anilino)carbonyl-2-methoxyphenyl)azo)-3-hydroxy-N-phenylnaphthalene-2-carboxyamide
C.I. Pigment Red 266: 4-((4-(aminocarbonyl)phenyl)azo)-3-hydroxy-N-(2-methoxyphenyl)naphthalene-2-carboxyamide
Compound (A)-1: 4-((5-carbamoyl-2-methylphenyl)azo)-3-hydroxy-N-(4-methoxyphenyl)naphthalene-2-carboxyamide
Compound (A)-2: 4-((4-(aminocarbonyl)phenyl)azo)-3-hydroxy-N-(4-methoxyphenyl)naphthalene-2-carboxyamide
Compound (A)-3: 4-((4-carboxyphenyl)azo)-3-hydroxy-N-(4-methoxyphenyl)naphthalene-2-carboxyamide
Compound (A)-4: 4-((5-carbamoyl-2-methylphenyl)azo)-3-hydroxy-N-(2-methoxyphenyl)naphthalene-2-carboxyamide
Compound (A)-5: 4-((4-carboxyphenyl)azo)-3-hydroxy-N-(2-methoxyphenyl)naphthalene-2-carboxyamide
Compound (A)-6: 4-((4-carboxyphenyl)azo)-3-hydroxy-N-(4-chlorophenyl)naphthalene-2-carboxyamide
C.I. Pigment Red 114: 1-(2-methyl-5-nitrophenylazo)-2-hydroxy-3-(3-nitrophenylcarbamoyl)naphthalene
C.I. Pigment Red 146: N-(4-chloro-2,5-dimethoxyphenyl)-3-hydroxy-4-((2-methoxy-5-((phenylamino)carbonyl)phenyl)azo)naphthalene-2-carboxyamide
C.I. Pigment Red 147: 3-hydroxy-4-((2-methoxy-5-((phenylamino)carbonyl)phenyl)azo)-N-(5-chloro-2-methylphenyl)-2-naphthalenecarboxyamide
C.I. Pigment Red 176: N-(2,3-dihydro-2-oxo-1H-benzimidazol-5-yl)-3-hydroxy-4-((2-methoxy-5-((phenylamino)carbonyl)phenyl)azo)naphthalene-2-carboxyamide
C.I. Pigment Red 185: N-(2,3-dihydro-2-oxo-1H-benzimidazol-5-yl)-2-hydroxy-4-((2-methoxy-5-methyl-4-((methylamino)sulfonyl)phenyl)azo)naphthalene-2-carboxyamide
C.I. Pigment Red 245: 4-((5-carbamoyl-2-methoxyphenyl)azo)-3-hydroxy-N-phenylnaphthalene-2-carboxyamide
C.I. Pigment Red 258: 4-((5-benzylsulfonyl-2-methoxyphenyl)azo)-3-hydroxy-N-phenylnaphthalene-2-carboxyamide
C.I. Pigment Red 268: 4-((5-carbamoyl-2-methylphenyl)azo)-3-hydroxy-N-phenylnaphthalene-2-carboxyamide
C.I. Pigment Violet 32: N-(2,3-dihydro-2-oxo-1H-benzimidazol-5-yl)-2-hydroxy-4-((2,5-dimethoxy-4-((methylamino)sulfonyl)phenyl)azo)naphthalene-2-carboxyamide
C.I. Pigment Violet 50: 4-((4-(anilino)carbonyl-2-methoxyphenyl-3-methyl)azo)-3-hydroxy-N-phenylnaphthalene-2-carboxyamide

<Compound (B)>

4MPB: 4-methoxy-N-phenylbenzamide (manufactured by Wako Pure Chemical Industries, Ltd.)
4MB: 4-methylbenzamide (manufactured by Wako Pure Chemical Industries, Ltd.)
4MBA: 4-methoxybenzamide (manufactured by Wako Pure Chemical Industries, Ltd.) p-nitrotoluene (manufactured by Wako Pure Chemical Industries, Ltd.)
4-nitroanisole (manufactured by TCI)
DA-FVB: N-(5-methoxy-2-methylphenyl)benzamide
DA-DC31: 1-(benzylsulfonyl)-4-methoxybenzene
DA-R185: 5-methoxy-N,2-dimethylbenzenesulfonamide
DA-V32: 2,5-dimethoxy-N-methylbenzenesulfonamide
benzamide (manufactured by Tokyo Chemical Industry Co., Ltd.)
benzoic acid (manufactured by Tokyo Chemical Industry Co., Ltd.)

<1> Production of coloring agent

(Example 1) Production of coloring agent 1

As a base component, 237.4 parts of 3-amino-4-methoxybenzanilide was added to 3518 parts of water and stirred to prepare a suspension, and further 1465 parts of ice was added to adjust the temperature to 5°C or below. 389.0 parts of 35% hydrochloric acid was added thereto and stirred for 30 minutes. Thereafter, an aqueous solution prepared by adding 69.9 parts of sodium nitrite to 104.8 parts of water was added and stirred for 1 hour to perform diazotization.
Sulfamic acid was added to the reaction mixture obtained by the above diazotization to eliminate excess nitrous acid. Sulfamic acid was added until free nitrous acid was no longer detected with potassium iodide paper. 203.0 parts of sodium acetate and 22.4 parts of 80% acetic acid were added thereto to obtain a solution containing diazonium salt.
On the other hand, a mixture of 1639 parts of methanol, 199.0 parts of a 40% sodium hydroxide aqueous solution, and 62.0 parts of water was adjusted to 15 to 25°C. 327.8 parts of Naphthol AS-CA as a coupler component was added thereto and dissolved. Further, 0.9 parts of 4-methoxy-N-phenylbenzamide (manufactured by Wako Pure Chemical Industries, Ltd.) as the compound (B) was added to obtain a coupler solution. This solution was added over 20 minutes to the solution containing diazonium salt adjusted to 25°C to perform a coupling reaction.
A slurry obtained in the coupling reaction was stirred for 1 hour, then heated to 70°C and further stirred at 68 to 72°C for 1 hour. The pH at this time was 4.5. A 40% sodium hydroxide aqueous solution was added to adjust the pH to 10.5 to 11.5, and further stirred for 15 minutes. After cooling to 50°C or below, this slurry was filtered and washed with water to obtain a press cake of the coloring agent. This press cake was dried under conditions of 80°C for 18 hours, and then pulverized to obtain 561.2 parts of a coloring agent 1.

(Example 2 to Example 17) Production of coloring agent 2 to coloring agent 17

As the base component, 237.4 parts of 3-amino-4-methoxybenzanilide was changed to the corresponding base type and base mass part in Table 1; as the coupler component, 327.8 parts by mass of Naphthol AS-CA was changed to the corresponding first coupler type and first coupler mass part in Table 1; and 0.9 parts by mass of the compound (B) was changed to the corresponding parts by mass in Table 1. Except for the above, a coloring agent 2 to a coloring agent 17 were obtained in the same manner as Example 1.

(Example 18) Production of coloring agent 18

As the base component, 245.9 parts of 3-amino-4-methoxybenzanilide was added to 3643 parts of water and stirred to prepare a suspension, and further 1517 parts of ice was added to adjust the temperature to 5°C or below. 402.9 parts of 35% hydrochloric acid was added thereto and stirred for 30 minutes. Thereafter, an aqueous solution prepared by adding 72.3 parts of sodium nitrite to 108.5 parts of water was added and stirred for 1 hour to perform diazotization. Sulfamic acid was added to the reaction mixture to eliminate excess nitrous acid. Sulfamic acid was added until free nitrous acid was no longer detected with potassium iodide paper. 210.2 parts of sodium acetate and 23.2 parts of 80% acetic acid were added thereto to obtain a solution containing diazonium salt.
On the other hand, a mixture of 1639 parts of methanol, 199.0 parts of a 40% sodium hydroxide aqueous solution, and 62.0 parts of water was adjusted to 15 to 25°C. 327.8 parts of Naphthol AS-CA as the coupler component was added thereto and dissolved to obtain a coupler solution. This solution was added over 20 minutes to the solution containing diazonium salt adjusted to 25°C to perform a coupling reaction.
A slurry obtained in the coupling reaction was stirred for 1 hour, then heated to 70°C and further stirred at 68 to 72°C for 1 hour. The pH at this time was 4.5. A 40% sodium hydroxide aqueous solution was added to adjust the pH to 10.5 to 11.5, and further stirred for 15 minutes. After cooling to 50°C or below, this slurry was filtered and washed with water to

obtain a press cake of the coloring agent. This press cake was dried under conditions of 80°C for 18 hours, and then pulverized to obtain 573.2 parts of a coloring agent 18.

(Example 19 to Example 34) Production of coloring agent 19 to coloring agent 34

As the base component, 245.9 parts of 3-amino-4-methoxybenzanilide was changed to the corresponding base type and base mass part in Table 1; and as the coupler component, 327.8 parts by mass of Naphthol AS-CA was changed to the corresponding first coupler type and first coupler mass part in Table 1. Except for the above, a coloring agent 19 to a coloring agent 34 were obtained in the same manner as Example 18.

(Example 35) Production of coloring agent 35

A solution containing diazonium salt was prepared in the same manner as Example 18.

On the other hand, a mixture of 1475 parts of methanol, 179.1 parts of a 40% sodium hydroxide aqueous solution, and 55.8 parts of water was adjusted to 15 to 25°C. 295.0 parts of Naphthol AS-CA as a first coupler component was added thereto and dissolved to obtain a first coupler solution. Furthermore, a mixture of 164 parts of methanol, 19.9 parts of a 40% sodium hydroxide aqueous solution, and 6.2 parts of water was adjusted to 15 to 25°C. 18.7 parts of BON amide as a second coupler component was added thereto and dissolved to obtain a second coupler solution. The first coupler solution was added over 18 minutes to the solution containing diazonium salt adjusted to 25°C, and further the second coupler solution was added over 2 minutes to perform a coupling reaction.

A slurry obtained in the above coupling reaction was stirred for 1 hour, then heated to 70°C and further stirred at 68 to 72°C for 1 hour. The pH at this time was 4.5. A 40% sodium hydroxide aqueous solution was added to adjust the pH to 10.5 to 11.5, and further stirred for 15 minutes. After cooling to 50°C or below, this slurry was filtered and washed with water to obtain a press cake of the coloring agent. This press cake was dried under conditions of 80°C for 18 hours, and then pulverized to obtain 559.2 parts of a coloring agent 35.

(Example 36 to Example 39) Production of coloring agent 36 to coloring agent 39

As the first coupler component, Naphthol AS-CA was changed to the first coupler type and first coupler mass part in the table; and as the second coupler component, BON amide was changed to the second coupler type and second coupler mass part in the table. Except for the above, coloring agents 36 to 39 were obtained in the same manner as Example 35 The solution used for dissolving the coupler, the amount of base, and the time taken for coupling were appropriately changed according to the amounts of the first coupler and the second coupler.

(Example 40) Production of coloring agent 40

As the coupler component, 327.8 parts of Naphthol AS-CA was changed to 178.9 parts of Naphthol AS-LC and 155.9 parts of Naphthol AS-KB, and 1639 parts of methanol was changed to 1311 parts of N-methyl-2-pyrrolidone and 420 parts of water. Except for the above, 580.6 parts of a coloring agent 40 was obtained in the same manner as Example 18.

(Example 41 to Example 44) Production of coloring agent 41 to coloring agent 44

As the coupler component, 327.8 parts of Naphthol AS-CA was changed to the corresponding first coupler type and first coupler mass part and the second coupler type and second coupler mass part in Table 1. Except for the above, a coloring agent 40 to a coloring agent 44 were obtained in the same manner as Example 18.

(Example 45) Production of coloring agent 45

As the base component, 245.9 parts of 3-amino-4-methoxybenzanilide was changed to 244.7 parts, 3643 parts of water was changed to a mixture of 1450 parts of acetonitrile and 2200 parts of water, 0.74 parts of 3-amino-4-methoxybenzanilide was added to the coupler solution, and methanol used for coupler dissolution was changed to acetonitrile of the same amount. Except for the above, 578.3 parts of a coloring agent 45 was obtained in the same manner as Example 18.

(Example 46) Production of coloring agent 46

As the base component, 237.4 parts of 3-amino-4-methoxybenzanilide was changed to 218 parts, and the compound (B) added to the coupler component was changed to 1.1 parts. Except for the above, 496.3 parts of a coloring

agent 46 was obtained in the same manner as Example 1.

(Example 47 to Example 55) Production of coloring agent 47 to coloring agent 55

As the base component, 245.9 parts of 3-amino-4-methoxybenzanilide was changed to the corresponding base type and base mass part in Table 1; as the coupler component, 327.8 parts by mass of Naphthol AS-CA was changed to the corresponding first coupler type and first coupler mass part in Table 1; and further, methanol used for coupler dissolution was changed to acetone of the same amount. Except for the above, a coloring agent 47 to a coloring agent 55 were obtained in the same manner as Example 18.

(Example 56) Production of coloring agent 56

As the base component, 245.9 parts of 3-amino-4-methoxybenzanilide was changed to 266.5 parts; methanol used for coupler dissolution was changed to a mixture of 820 parts of tetrahydrofuran and 820 parts of water; and as the compound (B), 27.5 parts of 4MPB was added to the coupler solution. Except for the above, a coloring agent 56 was obtained in the same manner as Example 18.

(Example 57) Production of coloring agent 57

As the base component, 147.2 parts of 3-amino-4-methylbenzamide was added to 3518 parts of water and stirred to prepare a suspension, and 1465 parts of ice was further added to adjust the temperature to 5°C or below. 389.0 parts of 35% hydrochloric acid was added thereto and stirred for 30 minutes. Thereafter, an aqueous solution prepared by adding 69.9 parts of sodium nitrite to 104.8 parts of water was added and stirred for 1 hour to perform diazotization.

Sulfamic acid was added to the reaction mixture obtained by the above diazotization to eliminate excess nitrous acid. Sulfamic acid was added until free nitrous acid was no longer detected with potassium iodide paper. 203.0 parts of sodium acetate and 22.4 parts of 80% acetic acid were added thereto to obtain a solution containing diazonium salt.

On the other hand, a mixture of 1700 parts of water and 199.0 parts of a 40% sodium hydroxide aqueous solution was adjusted to 15 to 25°C. 293.3 parts of Naphthol AS-RL as the coupler component was added thereto and dissolved. Furthermore, 0.2 parts of 4-methylbenzamide (manufactured by Wako Pure Chemical Industries, Ltd.) was added as the compound (B) to obtain a coupler solution. This solution was added over 20 minutes to the solution containing diazonium salt adjusted to 25°C to perform a coupling reaction.

A slurry obtained in the coupling reaction was stirred for 1 hour, then heated to 70°C and further stirred at 68 to 72°C for 1 hour. The pH at this time was 4.5. After cooling to 50°C or below, this slurry was filtered and washed with water to obtain a press cake of the coloring agent. This press cake was dried under conditions of 80°C for 18 hours, and then pulverized to obtain 436.7 parts of a coloring agent 57.

(Example 58 to Example 63) Production of coloring agent 58 to coloring agent 63

As the base component, 147.2 parts of 3-amino-4-methylbenzamide was changed to the corresponding base type and base mass part in Table 1; as the coupler component, 293.3 parts of Naphthol AS-RL was changed to the corresponding first coupler type and first coupler mass part in Table 1; and 0.2 parts by mass of the compound (B) was changed to the corresponding type and parts by mass of the compound (B) in Table 1-7. Except for the above, a coloring agent 58 to a coloring agent 63 were obtained in the same manner as Example 1.

(Example 64) Production of coloring agent 64

As the base component, 157.7 parts of 3-amino-4-methylbenzamide was added to 3643 parts of water and stirred to prepare a suspension, and further 1517 parts of ice was added to adjust the temperature to 5°C or below. 402.9 parts of 35% hydrochloric acid was added thereto and stirred for 30 minutes. Thereafter, an aqueous solution prepared by adding 72.3 parts of sodium nitrite to 108.5 parts of water was added and stirred for 1 hour to perform diazotization. Sulfamic acid was added to the reaction mixture to eliminate excess nitrous acid. Sulfamic acid was added until free nitrous acid was no longer detected with potassium iodide paper. 210.2 parts of sodium acetate and 23.2 parts of 80% acetic acid were added thereto to obtain a solution containing diazonium salt.

On the other hand, a mixture of 1670 parts of water and 199.0 parts of a 40% sodium hydroxide aqueous solution was adjusted to 15 to 25°C. 293.3 parts of Naphthol AS-RL as the coupler component was added thereto and dissolved to obtain a coupler solution. This solution was added over 20 minutes to the solution containing diazonium salt adjusted to 25°C to perform a coupling reaction.

A slurry obtained in the coupling reaction was stirred for 1 hour, then heated to 70°C and further stirred at 68 to

72°C for 1 hour. The pH at this time was 4.5. After cooling to 50°C or below, this slurry was filtered and washed with water to obtain a press cake of the coloring agent. This press cake was dried under conditions of 80°C for 18 hours, and then pulverized to obtain 454.6 parts of a coloring agent 64.

(Example 65 to Example 70) Production of coloring agent 65 to coloring agent 70

As the base component, 157.7 parts of 3-amino-4-methylbenzamide was changed to the corresponding base type and base mass part in Table 1; and as the coupler component, 293.3 parts of Naphthol AS-RL was changed to the corresponding first coupler type and first coupler mass part in Table 1. Except for the above, a coloring agent 65 to a coloring agent 70 were obtained in the same manner as Example 64.

(Comparative Example 1 to Comparative Example 17) Production of coloring agent 101 to coloring agent 117

A coloring agent 101 to a coloring agent 117 were obtained in the same manner as Example 1 to Example 17, except that the compound (B) was not added.

(Comparative Example 18 to Comparative Example 24) Production of coloring agent 118 to coloring agent 124

A coloring agent 118 to a coloring agent 124 were obtained in the same manner as Example 57 to Example 63, except that the compound (B) was not added.

In Examples 1 to 70 and Comparative Examples 1 to 24, the raw materials used for producing the coloring agents are collectively shown in Table 1-1, Table 1-2, and Table 1-2A.

[Table 1-1]

| Table 1-1 | Coloring agent | Compound (A) C.I. Pigment | Coupler solution | | | | | Diazo solution | | Diazonium salt/coupler molar ratio |
|---|---|---|---|---|---|---|---|---|---|---|
| | | | First coupler type | First coupler mass part | Second coupler type | Second coupler mass part | Compound (B) mass part | Base type | Base mass part | |
| Example 1 | 1 | Red269 | Naphthol AS-CA | 327.8 | - | - | 0.9 | M-40 | 237.4 | 0.98 |
| Example 2 | 2 | Red150 | BON amide | 187.2 | - | - | 0.3 | M-40 | 237.4 | 0.98 |
| Example 3 | 3 | Red31 | Naphthol AS-BS | 308.3 | - | - | 0.3 | M-40 | 237.4 | 0.98 |
| Example 4 | 4 | Red17 | Naphthol AS-D | 277.3 | - | - | 0.2 | Fast Scarlet G | 149.1 | 0.98 |
| Example 5 | 5 | Red22 | Naphthol AS | 263.3 | - | - | 0.2 | Fast Scarlet G | 149.1 | 0.98 |
| Example 6 | 6 | Red23 | Naphthol AS-BS | 308.3 | - | - | 0.2 | Fast Scarlet RC | 164.8 | 0.98 |
| Example 7 | 7 | Red32 | Naphthol AS | 263.3 | - | - | 0.7 | M-40 | 237.4 | 0.98 |
| Example 8 | 8 | Red114 | Naphthol AS-BS | 308.3 | - | - | 0.2 | Fast Scarlet G | 149.1 | 0.98 |
| Example 9 | 9 | Red 146 | Naphthol AS-LC | 357.8 | - | - | 0.9 | M-40 | 237.4 | 0.98 |
| Example 10 | 10 | Red147 | Naphthol AS-KB | 311.8 | - | - | 1.1 | M-40 | 237.4 | 0.98 |
| Example 11 | 11 | Red176 | Naphthol AS-BI | 319.3 | - | - | 1.1 | M-40 | 237.4 | 0.98 |
| Example 12 | 12 | Red185 | Naphthol AS-BI | 319.3 | - | - | 0.3 | R185 base | 225.7 | 0.98 |
| Example 13 | 13 | Red245 | Naphthol AS | 263.3 | - | - | 0.2 | M-20 | 162.9 | 0.98 |
| Example 14 | 14 | Red258 | Naphthol AS | 263.3 | - | - | 0.1 | Azoic DC31 | 271.8 | 0.98 |
| Example 15 | 15 | Red268 | Naphthol AS | 263.3 | - | - | 0.2 | M-60 | 147.2 | 0.98 |
| Example 16 | 16 | Violet32 | Naphthol AS-BI | 319.3 | - | - | 0.3 | V32 base | 241.4 | 0.98 |
| Example 17 | 17 | Violet50 | Naphthol AS | 263.3 | - | - | 0.4 | Fast Violet B | 251.2 | 0.98 |
| Example 18 | 18 | Red269 | Naphthol AS-CA | 327.8 | - | - | - | M-40 | 245.9 | 1.015 |
| Example 19 | 19 | Red150 | BON amide | 187.2 | - | - | - | M-40 | 245.9 | 1.015 |
| Example 20 | 20 | Red31 | Naphthol AS-BS | 308.3 | - | - | - | M-40 | 245.9 | 1.015 |
| Example 21 | 21 | Red17 | Naphthol AS-D | 277.3 | - | - | - | Fast Scarlet G | 154.4 | 1.015 |
| Example 22 | 22 | Red22 | Naphthol AS | 263.3 | - | - | - | Fast Scarlet G | 154.4 | 1.015 |
| Example 23 | 23 | Red23 | Naphthol AS-BS | 308.3 | - | - | - | Fast Scarlet RC | 170.7 | 1.015 |

(continued)

| Table 1-1 | Coloring agent | Compound (A) C.I. Pigment | Coupler solution | | | | | Diazo solution | | Diazonium salt/coupler molar ratio |
|---|---|---|---|---|---|---|---|---|---|---|
| | | | First coupler type | First coupler mass part | Second coupler type | Second coupler mass part | Compound (B) mass part | Base type | Base mass part | |
| Example 24 | 24 | Red32 | Naphthol AS | 263.3 | - | - | - | M-40 | 245.9 | 1.015 |
| Example 25 | 25 | Red114 | Naphthol AS-BS | 308.3 | - | - | - | Fast Scarlet G | 154.4 | 1.015 |
| Example 26 | 26 | Red146 | Naphthol AS-LC | 357.8 | - | - | - | M-40 | 245.9 | 1.015 |
| Example 27 | 27 | Red147 | Naphthol AS-KB | 311.8 | - | - | - | M-40 | 245.9 | 1.015 |
| Example 28 | 28 | Red176 | Naphthol AS-BI | 319.3 | - | - | - | M-40 | 245.9 | 1.015 |
| Example 29 | 29 | Red185 | Naphthol AS-BI | 319.3 | - | - | - | R185 base | 233.7 | 1.015 |
| Example 30 | 30 | Red245 | Naphthol AS | 263.3 | - | - | - | M-20 | 168.7 | 1.015 |
| Example 31 | 31 | Red258 | Naphthol AS | 263.3 | - | - | - | Azoic DC31 | 281.5 | 1.015 |
| Example 32 | 32 | Red268 | Naphthol AS | 263.3 | - | - | - | M-60 | 152.5 | 1.015 |
| Example 33 | 33 | Violet32 | Naphthol AS-BI | 319.3 | - | - | - | V32 base | 250 | 1.015 |
| Example 34 | 34 | Violet50 | Naphthol AS | 263.3 | - | - | - | Fast Violet B | 260.1 | 1.015 |
| Example 35 | 35 | Red269+Red150 | Naphthol AS-CA | 295 | BON amide | 18.7 | - | M-40 | 245.9 | 1.015 |
| Example 36 | 36 | Red269+Red150 | Naphthol AS-CA | 229.4 | BON amide | 56.2 | - | M-40 | 245.9 | 1.015 |
| Example 37 | 37 | Red269+Red150 | Naphthol AS-CA | 163.9 | BON amide | 93.6 | - | M-40 | 245.9 | 1.015 |
| Example 38 | 38 | Red31+Red150 | Naphthol AS-BS | 92.5 | BON amide | 131 | - | M-40 | 245.9 | 1.015 |
| Example 39 | 39 | Red31+Red150 | Naphthol AS-BS | 123.3 | BON amide | 112.3 | - | M-40 | 245.9 | 1.015 |
| Example 40 | 40 | Red146+Red147 | Naphthol AS-LC | 178.9 | Naphthol AS-KB | 155.9 | - | M-40 | 245.9 | 1.015 |

[Table 1-2]

| Table 1-2 | Coloring agent | Compound (A) C.I. Pigment | Coupler solution | | | | | Diazo solution | | Diazonium salt/coupler molar ratio |
|---|---|---|---|---|---|---|---|---|---|---|
| | | | First coupler type | First coupler mass part | Second coupler type | Second coupler mass part | Compound (B) mass part | Base type | Base mass part | |
| Example 41 | 41 | Red269 | Naphthol AS-CA | 325.7 | BON acid | 1.2 | - | M-40 | 245.9 | 1.015 |
| Example 42 | 42 | Red269 | Naphthol AS-CA | 327.2 | BON acid | 0.3 | - | M-40 | 245.9 | 1.015 |
| Example 43 | 43 | Red269 | Naphthol AS-CA | 327.6 | BON acid | 0.08 | - | M-40 | 245.9 | 1.015 |
| Example 44 | 44 | Red269 | Naphthol AS-CA | 327.7 | BON acid | 0.02 | - | M-40 | 245.9 | 1.015 |
| Example 45 | 45 | Red269 | Naphthol AS-CA | 327.8 | - | - | - | M-40 | 244.7 | 1.01 |
| Example 46 | 46 | Red269 | Naphthol AS-CA | 327.8 | - | - | 1.1 | M-40 | 218 | 0.9 |
| Example 47 | 47 | Red269 | Naphthol AS-CA | 327.8 | - | - | - | M-40 | 254.4 | 1.05 |
| Example 48 | 48 | Red150 | BON amide | 187.2 | - | - | - | M-40 | 254.4 | 1.05 |
| Example 49 | 49 | Red31 | Naphthol AS-BS | 308.3 | - | - | - | M-40 | 254.4 | 1.05 |
| Example 50 | 50 | Red32 | Naphthol AS | 263.3 | - | - | - | M-40 | 254.4 | 1.05 |
| Example 51 | 51 | Red 146 | Naphthol AS-LC | 357.8 | - | - | - | M-40 | 254.4 | 1.05 |
| Example 52 | 52 | Red147 | Naphthol AS-KB | 311.8 | - | - | - | M-40 | 254.4 | 1.05 |
| Example 53 | 53 | Red176 | Naphthol AS-BI | 319.3 | - | - | - | M-40 | 254.4 | 1.05 |
| Example 54 | 54 | Red245 | Naphthol AS | 263.3 | - | - | - | M-20 | 176.2 | 1.06 |
| Example 55 | 55 | Red268 | Naphthol AS | 263.3 | - | - | - | M-60 | 159.2 | 1.06 |
| Example 56 | 56 | Red269 | Naphthol AS-CA | 327.8 | - | - | 27.5 | M-40 | 266.5 | 1.1 |
| Comparative Example 1 | 101 | Red269 | Naphthol AS-CA | 327.8 | - | - | - | M-40 | 237.4 | 0.98 |
| Comparative Example 2 | 102 | Red150 | BON amide | 187.2 | - | - | - | M-40 | 237.4 | 0.98 |
| Comparative Example 3 | 103 | Red31 | Naphthol AS-BS | 308.3 | - | - | - | M-40 | 237.4 | 0.98 |
| Comparative Example 4 | 104 | Red17 | Naphthol AS-D | 277.3 | - | - | - | Fast Scarlet G | 149.1 | 0.98 |
| Comparative Example 5 | 105 | Red22 | Naphthol AS | 263.3 | - | - | - | Fast Scarlet G | 149.1 | 0.98 |
| Comparative Example 6 | 106 | Red23 | Naphthol AS-BS | 308.3 | - | - | - | Fast Scarlet RC | 164.8 | 0.98 |
| Comparative Example 7 | 107 | Red32 | Naphthol AS | 263.3 | - | - | - | M-40 | 237.4 | 0.98 |

(continued)

| Table 1-2 | Coloring agent | Compound (A) C.I. Pigment | Coupler solution | | | | | Diazo solution | | Diazonium salt/coupler molar ratio |
|---|---|---|---|---|---|---|---|---|---|---|
| | | | First coupler type | First coupler mass part | Second coupler type | Second coupler mass part | Compound (B) mass part | Base type | Base mass part | |
| Comparative Example 8 | 108 | Red114 | Naphthol AS-BS | 308.3 | - | - | - | Fast Scarlet G | 149.1 | 0.98 |
| Comparative Example 9 | 109 | Red 146 | Naphthol AS-LC | 357.8 | - | - | - | M-40 | 237.4 | 0.98 |
| Comparative Example 10 | 110 | Red 147 | Naphthol AS-KB | 311.8 | - | - | - | M-40 | 237.4 | 0.98 |
| Comparative Example 11 | 111 | Red176 | Naphthol AS-BI | 319.3 | - | - | - | M-40 | 237.4 | 0.98 |
| Comparative Example 12 | 112 | Red185 | Naphthol AS-BI | 319.3 | - | - | - | R185 base | 225.7 | 0.98 |
| Comparative Example 13 | 113 | Red245 | Naphthol AS | 263.3 | - | - | - | M-20 | 162.9 | 0.98 |
| Comparative Example 14 | 114 | Red258 | Naphthol AS | 263.3 | - | - | - | Azoic DC31 | 271.8 | 0.98 |
| Comparative Example 15 | 115 | Red268 | Naphthol AS | 263.3 | - | - | - | M-60 | 147.2 | 0.98 |
| Comparative Example 16 | 116 | Violet32 | Naphthol AS-BI | 319.3 | - | - | - | V32 base | 241.4 | 0.98 |
| Comparative Example 17 | 117 | Violet50 | Naphthol AS | 263.3 | - | - | - | Fast Violet B | 251.2 | 0.98 |

[Table 1-2A]

| Table 1-2A | Coloring agent | Compound (A) | Coupler solution | | | | Diazo solution | | Diazonium salt/coupler molar ratio |
|---|---|---|---|---|---|---|---|---|---|
| | | | First coupler type | First coupler mass part | Compound (B) type | Compound (B) mass part | Base type | Base mass part | |
| Example 57 | 57 | Compound (A)-1 | Naphthol AS-RL | 293.3 | 4MB | 0.2 | M-60 | 147.2 | 0.98 |
| Example 58 | 58 | Compound (A)-2 | Naphthol AS-RL | 293.3 | Benzamide | 0.2 | M-70 | 133.4 | 0.98 |
| Example 59 | 59 | Compound (A)-3 | Naphthol AS-RL | 293.3 | Benzoic acid | 0.2 | 4-aminobenzoic acid | 134.4 | 0.98 |
| Example 60 | 60 | Compound (A)-4 | Naphthol AS-OL | 293.3 | 4MB | 0.2 | M-60 | 147.2 | 0.98 |
| Example 61 | 61 | C.I. Pigment Red266 | Naphthol AS-OL | 293.3 | Benzamide | 0.2 | M-70 | 133.4 | 0.98 |
| Example 62 | 62 | Compound (A)-5 | Naphthol AS-OL | 293.3 | Benzoic acid | 0.2 | 4-aminobenzoic acid | 134.4 | 0.98 |
| Example 63 | 63 | Compound (A)-6 | Naphthol AS-E | 297.7 | Benzoic acid | 0.2 | 4-aminobenzoic acid | 134.4 | 0.98 |
| Example 64 | 64 | Compound (A)-1 | Naphthol AS-RL | 293.3 | - | - | M-60 | 157.7 | 1.05 |
| Example 65 | 65 | Compound (A)-2 | Naphthol AS-RL | 293.3 | - | - | M-70 | 143 | 1.05 |
| Example 66 | 66 | Compound (A)-3 | Naphthol AS-RL | 293.3 | - | - | 4-aminobenzoic acid | 144 | 1.05 |
| Example 67 | 67 | Compound (A)-4 | Naphthol AS-OL | 293.3 | - | - | M-60 | 157.7 | 1.05 |
| Example 68 | 68 | C.I. Pigment Red266 | Naphthol AS-OL | 293.3 | - | - | M-70 | 143 | 1.05 |
| Example 69 | 69 | Compound (A)-5 | Naphthol AS-OL | 293.3 | - | - | 4-aminobenzoic acid | 144 | 1.05 |
| Example 70 | 70 | Compound (A)-6 | Naphthol AS-E | 297.7 | - | - | 4-aminobenzoic acid | 144 | 1.05 |

(continued)

| Table 1-2A | Coloring agent | Compound (A) | Coupler solution | | | | Diazo solution | | Diazonium salt/coupler molar ratio |
|---|---|---|---|---|---|---|---|---|---|
| | | | First coupler type | First coupler mass part | Compound (B) type | Compound (B) mass part | Base type | Base mass part | |
| Comparative Example 18 | 118 | Compound (A)-1 | Naphthol AS-RL | 293.3 | - | - | M-60 | 147.2 | 0.98 |
| Comparative Example 19 | 119 | Compound (A)-2 | Naphthol AS-RL | 293.3 | - | - | M-70 | 133.4 | 0.98 |
| Comparative Example 20 | 120 | Compound (A)-3 | Naphthol AS-RL | 293.3 | - | - | 4-aminobenzoic acid | 134.4 | 0.98 |
| Comparative Example 21 | 121 | Compound (A)-4 | Naphthol AS-OL | 293.3 | - | - | M-60 | 147.2 | 0.98 |
| Comparative Example 22 | 122 | C.I. Pigment Red266 | Naphthol AS-OL | 293.3 | - | - | M-70 | 133.4 | 0.98 |
| Comparative Example 23 | 123 | Compound (A)-5 | Naphthol AS-OL | 293.3 | - | - | 4-aminobenzoic acid | 134.4 | 0.98 |
| Comparative Example 24 | 124 | Compound (A)-6 | Naphthol AS-E | 297.7 | - | - | 4-aminobenzoic acid | 134.4 | 0.98 |

In addition, for each coloring agent produced in Examples 1 to 70 and Comparative Examples 1 to 24, the specific combinations of the compound (A) and the compound (B) are collectively shown in Table 1-3 to Table 1-7 below.

[Table 1-3]

| Table 1-3 | Compound (A) | | | | | | | | | | | | | Compound (B) | | | | | |
|---|---|---|---|---|---|---|---|---|---|---|---|---|---|---|---|---|---|---|---|
| | $R_1$ | $R_2$ | $R_3$ | $R_4$ | $R_5$ | $R_{21}$-$R_{25}$ | $R_6$ | $R_7$-$R_{11}$ | $R_{31}$ | $R_{32}$ | $R_{33}$ | $R_{34}$ | $R_{35}$ | $R_1$' | $R_2$' | $R_3$' | $R_4$' | $R_5$' | $R_{21}$-$R_{25}$ |
| Example 1 | $CH_3O$- | H | H | Formula (101) | H | H | Formula (104) | H | $CH_3O$- | H | H | Cl | H | $CH_3O$- | H | H | Formula (101) | H | H |
| Example 2 | $CH_3O$- | H | H | Formula (101) | H | H | $NH_2CO$- | H | - | - | - | - | - | $CH_3O$- | H | H | Formula (101) | H | H |
| Example 3 | $CH_3O$- | H | H | Formula (101) | H | H | Formula (104) | H | H | $NO_2$- | H | H | H | $CH_3O$- | H | H | Formula (101) | H | H |
| Example 4 | $CH_3$- | H | H | $NO_2$- | H | - | Formula (104) | H | $CH_3$- | H | H | H | H | $CH_3O$- | H | H | Formula (101) | H | H |
| Example 5 | $CH_3$- | H | H | $NO_2$- | H | - | Formula (104) | H | H | H | H | H | H | $CH_3O$- | H | H | Formula (101) | H | H |
| Example 6 | $CH_3O$- | H | H | $NO_2$- | H | - | Formula (104) | H | H | $NO_2$- | H | H | H | $CH_3O$- | H | H | Formula (101) | H | H |
| Example 7 | $CH_3O$- | H | H | Formula (101) | H | H | Formula (104) | H | H | H | H | H | H | $CH_3O$- | H | H | Formula (101) | H | H |
| Example 8 | $CH_3$- | H | H | $NO_2$- | H | - | Formula (104) | H | H | $NO_2$- | H | H | H | $CH_3O$- | H | H | Formula (101) | H | H |
| Example 9 | $CH_3O$- | H | H | Formula (101) | H | H | Formula (104) | H | $CH_3O$- | H | Cl | $CH_3O$- | H | $CH_3O$- | H | H | Formula (101) | H | H |
| Example 10 | $CH_3O$- | H | H | Formula (101) | H | H | Formula (104) | H | $CH_3$- | H | H | Cl | H | $CH_3O$- | H | H | Formula (101) | H | H |
| Example 11 | $CH_3O$- | H | H | Formula (101) | H | H | Formula (104) | H | H | -NHCONH- | | H | H | $CH_3O$- | H | H | Formula (101) | H | H |
| Example 12 | $CH_3O$- | H | $CH_3NHSO_2$- | $CH_3$- | H | - | Formula (104) | H | H | -NHCONH- | | H | H | $CH_3O$- | H | H | Formula (101) | H | H |
| Example 13 | $CH_3O$- | H | H | $NH_2CO$- | H | - | Formula (104) | H | H | H | H | H | H | $CH_3O$- | H | H | Formula (101) | H | H |
| Example 14 | $CH_3O$- | H | H | Formula (103) | H | - | Formula (104) | H | H | H | H | H | H | $CH_3O$- | H | H | Formula (101) | H | H |
| Example 15 | $CH_3$- | H | H | $NH_2CO$- | H | - | Formula (104) | H | H | H | H | H | H | $CH_3O$- | H | H | Formula (101) | H | H |

(continued)

| Table 1-3 | Compound (A) | | | | | | | | | | | | | | Compound (B) | | | | | |
|---|---|---|---|---|---|---|---|---|---|---|---|---|---|---|---|---|---|---|---|---|
| | $R_1$ | $R_2$ | $R_3$ | $R_4$ | $R_5$ | $R_{21}$-$R_{25}$ | $R_6$ | $R_7$-$R_{11}$ | $R_{31}$ | $R_{32}$ | $R_{33}$ | $R_{34}$ | $R_{35}$ | $R_1$' | $R_2$' | $R_3$' | $R_4$' | $R_5$' | $R_{21}$-$R_{25}$ |
| Example 16 | $CH_3O$- | H | $CH_3NHSO_2$- | $CH_3O$- | H | - | Formula (104) | H | H | -NHCONH- | | H | H | $CH_3O$- | H | H | Formula (101) | H | H |
| Example 17 | $CH_3O$- | H | $C_6H_5CONH$- | $CH_3$- | H | - | Formula (104) | H | H | H | H | H | H | $CH_3O$- | H | H | Formula (101) | H | H |
| Example 18 | $CH_3O$- | H | H | Formula (101) | H | H | Formula (104) | H | $CH_3O$- | H | H | Cl | H | $CH_3O$- | H | H | Formula (101) | H | H |
| Example 19 | $CH_3O$- | H | H | Formula (101) | H | H | $NH_2CO$- | H | - | - | - | - | - | $CH_3O$- | H | H | Formula (101) | H | H |
| Example 20 | $CH_3O$- | H | H | Formula (101) | H | H | Formula (104) | H | H | $NO_2$- | H | H | H | $CH_3O$- | H | H | Formula (101) | H | H |

[Table 1-4]

| Table 1-4 | Compound (A) | | | | | | | | | | | | | Compound (B) | | | | | |
|---|---|---|---|---|---|---|---|---|---|---|---|---|---|---|---|---|---|---|---|
| | $R_1$ | $R_2$ | $R_3$ | $R_4$ | $R_5$ | $R_{21}$-$R_{25}$ | $R_6$ | $R_7$-$R_{11}$ | $R_{31}$ | $R_{32}$ | R33 | $R_{34}$ | $R_{35}$ | $R_1$' | $R_2$' | $R_3$' | $R_4$' | $R_5$' | $R_{21}$-$R_{25}$ |
| Example 21 | $CH_3$- | H | H | $NO_2$- | H | - | Formula (104) | H | $CH_3$- | H | H | H | H | $CH_3$- | H | H | $NO_2$- | H | - |
| Example 22 | $CH_3$- | H | H | $NO_2$- | H | - | Formula (104) | H | H | H | H | H | H | $CH_3$- | H | H | $NO_2$- | H | - |
| Example 23 | $CH_3O$- | H | H | $NO_2$- | H | - | Formula (104) | H | H | $NO_2$- | H | H | H | $CH_3O$- | H | H | $NO_2$- | H | - |
| Example 24 | $CH_3O$- | H | H | Formula (101) | H | H | Formula (104) | H | H | H | H | H | H | $CH_3O$- | H | H | Formula (101) | H | H |
| Example 25 | $CH_3$- | H | H | $NO_2$- | H | - | Formula (104) | H | H | $NO_2$- | H | H | H | $CH_3$- | H | H | $NO_2$- | H | - |
| Example 26 | $CH_3O$- | H | H | Formula (101) | H | H | Formula (104) | H | $CH_3O$- | H | Cl | $CH_3O$- | H | $CH_3O$- | H | H | Formula (101) | H | H |
| Example 27 | $CH_3O$- | H | H | Formula (101) | H | H | Formula (104) | H | $CH_3$- | H | H | Cl | H | $CH_3O$- | H | H | Formula (101) | H | H |
| Example 28 | $CH_3O$- | H | H | Formula (101) | H | H | Formula (104) | H | H | -NHCONH- | | H | H | $CH_3O$- | H | H | Formula (101) | H | H |
| Example 29 | $CH_3O$- | H | $CH_3NHSO_2$- | $CH_3$- | H | - | Formula (104) | H | H | -NHCONH- | | H | H | $CH_3O$- | H | $CH_3NHSO_2$- | $CH_3$- | H | - |
| Example 30 | $CH_3O$- | H | H | $NH_2CO$- | H | - | Formula (104) | H | H | H | H | H | H | $CH_3O$- | H | H | $NH_2CO$- | H | - |
| Example 31 | $CH_3O$- | H | H | Formula (103) | H | - | Formula (104) | H | H | H | H | H | H | $CH_3O$- | H | H | Formula (103) | H | - |
| Example 32 | $CH_3$- | H | H | $NH_2CO$- | H | - | Formula (104) | H | H | H | H | H | H | $CH_3$- | H | H | $NH_2CO$- | H | - |
| Example 33 | $CH_3O$- | H | $CH_3NHSO_2$- | $CH_3O$- | H | - | Formula (104) | H | H | -NHCONH- | | H | H | $CH_3O$- | H | $CH_3NHSO_2$- | $CH_3O$- | H | - |
| Example 34 | $CH_3O$- | H | $C_6H_5CONH$- | $CH_3$- | H | - | Formula (104) | H | H | H | H | H | H | $CH_3O$- | H | Formula (101) | $CH_3$- | H | - |

(continued)

| Table 1-4 | Compound (A) | | | | | | | | | | | | | Compound (B) | | | | | |
|---|---|---|---|---|---|---|---|---|---|---|---|---|---|---|---|---|---|---|---|
| | $R_1$ | $R_2$ | $R_3$ | $R_4$ | $R_5$ | $R_{21}$-$R_{25}$ | $R_6$ | $R_7$-$R_{11}$ | $R_{31}$ | $R_{32}$ | R33 | $R_{34}$ | $R_{35}$ | $R_1$' | $R_2$' | $R_3$' | $R_4$' | $R_5$' | $R_{21}$-$R_{25}$ |
| Example 35 | $CH_3O$- | H | H | Formula (101) | H | H | Formula (104) | H | $CH_3O$- | H | H | Cl | H | $CH_3O$- | H | H | Formula (101) | H | H |
| | $CH_3O$- | H | H | Formula (101) | H | H | $NH_2CO$- | H | - | - | - | - | - | | | | | | |
| Example 36 | $CH_3O$- | H | H | Formula (101) | H | H | Formula (104) | H | $CH_3O$- | H | H | Cl | H | $CH_3O$- | H | H | Formula (101) | H | H |
| | $CH_3O$- | H | H | Formula (101) | H | H | $NH_2CO$- | H | - | - | - | - | - | | | | | | |
| Example 37 | $CH_3O$- | H | H | Formula (101) | H | H | Formula (104) | H | $CH_3O$- | H | H | Cl | H | $CH_3O$- | H | H | Formula (101) | H | H |
| | $CH_3O$- | H | H | Formula (101) | H | H | $NH_2CO$- | H | - | - | - | - | - | | | | | | |
| Example 38 | $CH_3O$- | H | H | Formula (101) | H | H | Formula (104) | H | H | $NO_2$- | H | H | H | $CH_3O$- | H | H | Formula (101) | H | H |
| | $CH_3O$- | H | H | Formula (101) | H | H | $NH_2CO$- | H | - | - | - | - | - | | | | | | |
| Example 39 | $CH_3O$- | H | H | Formula (101) | H | H | Formula (104) | H | H | $NO_2$- | H | H | H | $CH_3O$- | H | H | Formula (101) | H | H |
| | $CH_3O$- | H | H | Formula (101) | H | H | $NH_2CO$- | H | - | - | - | - | - | | | | | | |
| Example 40 | $CH_3O$- | H | H | Formula (101) | H | H | Formula (104) | H | $CH_3O$- | H | Cl | $CH_3O$- | H | $CH_3O$- | H | H | Formula (101) | H | H |
| | $CH_3O$- | H | H | Formula (101) | H | H | Formula (104) | H | $CH_3$- | H | H | Cl | H | | | | | | |

[Table 1-5]

| Table 1-5 | Compound (A) | | | | | | | | | | | | | Compound (B) | | | | | |
|---|---|---|---|---|---|---|---|---|---|---|---|---|---|---|---|---|---|---|---|
| | $R_1$ | $R_2$ | $R_3$ | $R_4$ | $R_5$ | $R_{21}$-$R_{25}$ | $R_6$ | $R_7$-$R_{11}$ | $R_{31}$ | $R_{32}$ | $R_{33}$ | R34 | $R_{35}$ | $R_1'$ | $R_2'$ | $R_3'$ | $R_4'$ | $R_5'$ | $R_{21}$-$R_{25}$ |
| Example 41 | $CH_3O$- | H | H | Formula (101) | H | H | Formula (104) | H | $CH_3O$- | H | H | Cl | H | $CH_3O$- | H | H | Formula (101) | H | H |
| Example 42 | $CH_3O$- | H | H | Formula (101) | H | H | Formula (104) | H | $CH_3O$- | H | H | Cl | H | $CH_3O$- | H | H | Formula (101) | H | H |
| Example 43 | $CH_3O$- | H | H | Formula (101) | H | H | Formula (104) | H | $CH_3O$- | H | H | Cl | H | $CH_3O$- | H | H | Formula (101) | H | H |
| Example 44 | $CH_3O$- | H | H | Formula (101) | H | H | Formula (104) | H | $CH_3O$- | H | H | Cl | H | $CH_3O$- | H | H | Formula (101) | H | H |
| Example 45 | $CH_3O$- | H | H | Formula (101) | H | H | Formula (104) | H | $CH_3O$- | H | H | Cl | H | $CH_3O$- | H | H | Formula (101) | H | H |
| Example 46 | $CH_3O$- | H | H | Formula (101) | H | H | Formula (104) | H | $CH_3O$- | H | H | Cl | H | $CH_3O$- | H | H | Formula (101) | H | H |
| Example 47 | $CH_3O$- | H | H | Formula (101) | H | H | Formula (104) | H | $CH_3O$- | H | H | Cl | H | $CH_3O$- | H | H | Formula (101) | H | H |
| Example 48 | $CH_3O$- | H | H | Formula (101) | H | H | $NH_2CO$- | H | - | - | - | - | - | $CH_3O$- | H | H | Formula (101) | H | H |
| Example 49 | $CH_3O$- | H | H | Formula (101) | H | H | Formula (104) | H | H | $NO_2$- | H | H | H | $CH_3O$- | H | H | Formula (101) | H | H |
| Example 50 | $CH_3O$- | H | H | Formula (101) | H | H | Formula (104) | H | H | H | H | H | H | $CH_3O$- | H | H | Formula (101) | H | H |
| Example 51 | $CH_3O$- | H | H | Formula (101) | H | H | Formula (104) | H | $CH_3O$- | H | Cl | $CH_3O$- | H | $CH_3O$- | H | H | Formula (101) | H | H |
| Example 52 | $CH_3O$- | H | H | Formula (101) | H | H | Formula (104) | H | $CH_3$- | H | H | Cl | H | $CH_3O$- | H | H | Formula (101) | H | H |
| Example 53 | $CH_3O$- | H | H | Formula (101) | H | H | Formula (104) | H | H | -NHCONH- | | H | H | $CH_3O$- | H | H | Formula (101) | H | H |
| Example 54 | $CH_3O$- | H | H | $NH_2CO$- | H | - | Formula (104) | H | H | H | H | H | H | $CH_3O$- | H | H | $NH_2CO$- | H | - |
| Example 55 | $CH_3$- | H | H | $NH_2CO$- | H | - | Formula (104) | H | H | H | H | H | H | $CH_3$- | H | H | $NH_2CO$- | H | - |

(continued)

| Table 1-5 | Compound (A) | | | | | | | | | | | | | Compound (B) | | | | | |
|---|---|---|---|---|---|---|---|---|---|---|---|---|---|---|---|---|---|---|---|
| | $R_1$ | $R_2$ | $R_3$ | $R_4$ | $R_5$ | $R_{21}$-$R_{25}$ | $R_6$ | $R_7$-$R_{11}$ | $R_{31}$ | $R_{32}$ | $R_{33}$ | R34 | $R_{35}$ | $R_1$' | $R_2$' | $R_3$' | $R_4$' | $R_5$' | $R_{21}$-$R_{25}$ |
| Example 56 | $CH_3O$- | H | H | Formula (101) | H | H | Formula (104) | H | $CH_3O$- | H | H | Cl | H | $CH_3O$- | H | H | Formula (101) | H | H |

[Table 1-6]

| Table 1-6 | Compound (A) | | | | | | | | | | | | | Compound (B) | | | | | |
|---|---|---|---|---|---|---|---|---|---|---|---|---|---|---|---|---|---|---|---|
| | $R_1$ | $R_2$ | $R_3$ | $R_4$ | $R_5$ | $R_{21}$-$R_{25}$ | $R_6$ | $R_7$-$R_{11}$ | $R_{31}$ | $R_{32}$ | $R_{33}$ | R34 | $R_{35}$ | $R_1$' | $R_2$' | $R_3$' | $R_4$' | $R_5$' | $R_{21}$-$R_{25}$ |
| Comparative Example 1 | $CH_3O$- | H | H | Formula (101) | H | H | Formula (104) | H | $CH_3O$- | H | H | Cl | H | - | - | - | - | - | - |
| Comparative Example 2 | $CH_3O$- | H | H | Formula (101) | H | H | $NH_2CO$- | H | - | - | - | - | - | - | - | - | - | - | - |
| Comparative Example 3 | $CH_3O$- | H | H | Formula (101) | H | H | Formula (104) | H | H | $NO_2$- | H | H | H | - | - | - | - | - | - |
| Comparative Example 4 | $CH_3$- | H | H | $NO_2$- | H | - | Formula (104) | H | $CH_3$- | H | H | H | H | - | - | - | - | - | - |
| Comparative Example 5 | $CH_3$- | H | H | $NO_2$- | H | - | Formula (104) | H | H | H | H | H | H | - | - | - | - | - | - |
| Comparative Example 6 | $CH_3O$- | H | H | $NO_2$- | H | - | Formula (104) | H | H | $NO_2$- | H | H | H | - | - | - | - | - | - |
| Comparative Example 7 | $CH_3O$- | H | H | Formula (101) | H | H | Formula (104) | H | H | H | H | H | H | - | - | - | - | - | - |
| Comparative Example 8 | $CH_3$- | H | H | $NO_2$- | H | - | Formula (104) | H | H | $NO_2$- | H | H | H | - | - | - | - | - | - |
| Comparative Example 9 | $CH_3O$- | H | H | Formula (101) | H | H | Formula (104) | H | $CH_3O$- | H | Cl | $CH_3O$- | H | - | - | - | - | - | - |
| Comparative Example 10 | $CH_3O$- | H | H | Formula (101) | H | H | Formula (104) | H | $CH_3$- | H | H | Cl | H | - | - | - | - | - | - |
| Comparative Example 11 | $CH_3O$- | H | H | Formula (101) | H | H | Formula (104) | H | H | -NHCONH- | | H | H | - | - | - | - | - | - |
| Comparative Example 12 | $CH_3O$- | H | $CH_3NHSO_2$- | $CH_3$- | H | - | Formula (104) | H | H | -NHCONH- | | H | H | - | - | - | - | - | - |
| Comparative Example 13 | $CH_3O$- | H | H | $NH_2CO$- | H | - | Formula (104) | H | H | H | H | H | H | - | - | - | - | - | - |
| Comparative Example 14 | $CH_3O$- | H | H | Formula (103) | H | - | Formula (104) | H | H | H | H | H | H | - | - | - | - | - | - |
| Comparative Example 15 | $CH_3$- | H | H | $NH_2CO$- | H | - | Formula (104) | H | H | H | H | H | H | - | - | - | - | - | - |

(continued)

| Table 1-6 | Compound (A) | | | | | | | | | | | | | Compound (B) | | | | | |
|---|---|---|---|---|---|---|---|---|---|---|---|---|---|---|---|---|---|---|---|
| | $R_1$ | $R_2$ | $R_3$ | $R_4$ | $R_5$ | $R_{21}$-$R_{25}$ | $R_6$ | $R_7$-$R_{11}$ | $R_{31}$ | $R_{32}$ | $R_{33}$ | R34 | $R_{35}$ | $R_1$' | $R_2$' | $R_3$' | $R_4$' | $R_5$' | $R_{21}$-$R_{25}$ |
| Comparative Example 16 | $CH_3O$- | H | $CH_3NHSO_2$- | $CH_3O$- | H | - | Formula (104) | H | H | -NHCONH- | | H | H | - | - | - | - | - | - |
| Comparative Example 17 | $CH_3O$- | H | $C_6H_5CONH$- | $CH_3$- | H | - | Formula (104) | H | H | H | H | H | H | - | - | - | - | - | - |

[Table 1-7]

| Table 1-7 | Compound (A) | | | | | | | | | | | | | Compound (B) | | | | | |
|---|---|---|---|---|---|---|---|---|---|---|---|---|---|---|---|---|---|---|---|
| | $R_1$ | $R_2$ | $R_3$ | $R_4$ | $R_5$ | $R_{21}$-$R_{25}$ | $R_6$ | $R_7$-$R_{11}$ | $R_{31}$ | R32 | $R_{33}$ | $R_{34}$ | $R_{35}$ | $R_1$' | $R_2$' | $R_3$' | $R_4$' | $R_5$' | $R_{21}$-$R_{25}$ |
| Example 57 | $CH_3$- | H | H | $NH_2CO$- | H | - | Formula (104) | H | H | H | $CH_3O$- | H | H | $CH_3$- | H | H | $NH_2CO$- | H | - |
| Example 58 | H | H | $NH_2CO$- | H | H | - | Formula (104) | H | H | H | $CH_3O$- | H | H | H | H | $NH_2CO$- | H | H | - |
| Example 59 | H | H | COOH- | H | H | - | Formula (104) | H | H | H | $CH_3O$- | H | H | H | H | COOH- | H | H | - |
| Example 60 | $CH_3$- | H | H | $NH_2CO$- | H | - | Formula (104) | H | $CH_3O$- | H | H | H | H | $CH_3$- | H | H | $NH_2CO$- | H | - |
| Example 61 | H | H | $NH_2CO$- | H | H | - | Formula (104) | H | $CH_3O$- | H | H | H | H | H | H | $NH_2CO$- | H | H | - |
| Example 62 | H | H | COOH- | H | H | - | Formula (104) | H | $CH_3O$- | H | H | H | H | H | H | COOH- | H | H | - |
| Example 63 | H | H | COOH- | H | H | - | Formula (104) | H | H | H | Cl | H | H | H | H | COOH- | H | H | - |
| Example 64 | $CH_3$- | H | H | $NH_2CO$- | H | - | Formula (104) | H | H | H | $CH_3O$- | H | H | $CH_3$- | H | H | $NH_2CO$- | H | - |
| Example 65 | H | H | $NH_2CO$- | H | H | - | Formula (104) | H | H | H | $CH_3O$- | H | H | H | H | $NH_2CO$- | H | H | - |
| Example 66 | H | H | COOH- | H | H | - | Formula (104) | H | H | H | $CH_3O$- | H | H | H | H | COOH- | H | H | - |
| Example 67 | $CH_3$- | H | H | $NH_2CO$- | H | - | Formula (104) | H | $CH_3O$- | H | H | H | H | $CH_3$- | H | H | $NH_2CO$- | H | - |
| Example 68 | H | H | $NH_2CO$- | H | H | - | Formula (104) | H | $CH_3O$- | H | H | H | H | H | H | $NH_2CO$- | H | H | - |
| Example 69 | H | H | COOH- | H | H | - | Formula (104) | H | $CH_3O$- | H | H | H | H | H | H | COOH- | H | H | - |
| Example 70 | H | H | COOH- | H | H | - | Formula (104) | H | H | H | Cl | H | H | H | H | COOH- | H | H | - |
| Comparative Example 18 | $CH_3$- | H | H | $NH_2CO$- | H | - | Formula (104) | H | H | H | $CH_3O$- | H | H | - | - | - | - | - | - |

(continued)

| Table 1-7 | Compound (A) | | | | | | | | | | | | | Compound (B) | | | | | |
|---|---|---|---|---|---|---|---|---|---|---|---|---|---|---|---|---|---|---|---|
| | $R_1$ | $R_2$ | $R_3$ | $R_4$ | $R_5$ | $R_{21}$-$R_{25}$ | $R_6$ | $R_7$-$R_{11}$ | $R_{31}$ | R32 | $R_{33}$ | $R_{34}$ | $R_{35}$ | $R_1$' | $R_2$' | $R_3$' | $R_4$' | $R_5$' | $R_{21}$-$R_{25}$ |
| Comparative Example 19 | H | H | $NH_2CO$- | H | H | - | Formula (104) | H | H | H | $CH_3O$- | H | H | - | - | - | - | - | - |
| Comparative Example 20 | H | H | COOH- | H | H | - | Formula (104) | H | H | H | $CH_3O$- | H | H | - | - | - | - | - | - |
| Comparative Example 21 | $CH_3$- | H | H | $NH_2CO$- | H | - | Formula (104) | H | $CH_3O$- | H | H | H | H | - | - | - | - | - | - |
| Comparative Example 22 | H | H | $NH_2CO$- | H | H | - | Formula (104) | H | $CH_3O$- | H | H | H | H | - | - | - | - | - | - |
| Comparative Example 23 | H | H | COOH- | H | H | - | Formula (104) | H | $CH_3O$- | H | H | H | H | - | - | - | - | - | - |
| Comparative Example 24 | H | H | COOH- | H | H | - | Formula (104) | H | H | H | Cl | H | H | - | - | - | - | - | - |

<2> Quantification method for coloring agent

The following relates to identification and quantification methods for each component of the coloring agent.

<Quantitative analysis of each component: Compound (A)>

Quantitative analysis was performed using absorptiometry according to a method described below for the compound (A) contained in the coloring agents produced in Examples 1 to 70 and Comparative Examples 1 to 24.

(Preparation of standard sample)

0.75 g of the coloring agent, 30 ml of dimethyl sulfoxide, and 75 g of 0.3 mm zirconia beads were loaded into a 50 ml glass bottle, and dispersed using a paint shaker (SK450 manufactured by Fast & Fluid) at a vibration frequency of 172 rpm for 2 hours. The obtained dispersion was centrifuged using a centrifuge (Centrifuge 5810, manufactured by Eppendorf) at a rotational speed of 9500 rpm for 30 minutes. To the residue after centrifugation, 30 ml of dimethyl sulfoxide and 0.1 g of a 25% sodium hydroxide aqueous solution were added and stirred with a stirrer for 15 minutes, which was filtered, washed with water, dried at 80°C for 18 hours, and pulverized to obtain a standard sample of the coloring agent.

(Preparation of measurement sample)

40 mg of the coloring agent was precisely weighed into a 25 ml volumetric flask, made up to volume with 0.1 g of a 28% sodium methoxide methanol solution and dimethyl sulfoxide (remainder), and thoroughly shaken and mixed to dissolve. This solution was diluted 100-fold by volume with dimethyl sulfoxide to prepare a measurement sample.

(Measurement method)

The measurement sample was placed in a quartz cell with an optical path length of 10 mm, and an absorbance was measured using a UH4150 spectrophotometer manufactured by Hitachi, and an absorption coefficient per gram (absorbance/mass concentration) was calculated. The absorption coefficient per gram was obtained according to the absorbance of the peak in the range of 400 to 700 nm (548 nm in the case of Pigment Red 269). Similarly, the absorption coefficient per gram was measured and calculated for the standard sample, and "absorption coefficient per gram of coloring agent ÷ absorption coefficient per gram of standard sample of coloring agent" was taken as a content ratio of the compound (A).

<Quantitative analysis of each component: Compounds (B), (C), (D), and (E)>

Quantitative analysis was performed using high performance liquid chromatography according to a method described below for the components contained in the coloring agents produced in Examples 1 to 70 and Comparative Examples 1 to 24.

(Extraction method)

0.75 g of the coloring agent, 30 ml of dimethyl sulfoxide, and 75 g of 0.3 mm zirconia beads were loaded into a 50 ml glass bottle, dispersed using a paint shaker (SK450 manufactured by Fast & Fluid) at a vibration frequency of 172 rpm for 2 hours, and the obtained dispersion was centrifuged using a centrifuge (Centrifuge 5810, manufactured by Eppendorf) at a rotational speed of 9500 rpm for 30 minutes. The supernatant after centrifugation was filtered through a 0.2 μm filter. A liquid thus obtained was taken as a measurement sample.

(Analysis method)

The amounts of the compound (B), the compound (C), the compound (D), and the compound (E) in the measurement sample were quantitatively analyzed using liquid chromatography. The compound (C) in the coloring agent is the substance shown in Chemical Formula (9) below, and the compound (B), the compound (D), and the compound (E) are as shown in Table 2-1, Table 2-2, and Table 2-3.

[Chem. 24]

Chemical Formula (9)

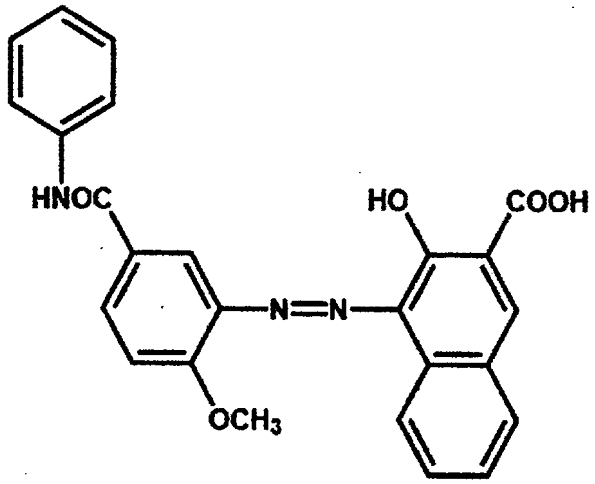

Conditions for liquid chromatography were as follows, and the same quantitative analysis was repeated twice to calculate an average value. Furthermore, from the calculated values, a content of each compound in the coloring agent was converted.

(Conditions)

Apparatus: High Performance Liquid Chromatography Waters 2695 (manufactured by Waters)
Column: Symmetry C18 180 mm × 2.1 mm 5 μm (manufactured by Waters)
Sample: 10 μL
Detector: UV-vis (compound (B): 310 nm, compound (C): 502 nm, compound (D): 310 nm, compound (E): 350 nm)
Eluent: The composition shown in Table 2A was used. (A) is a 1g/L ammonium acetate aqueous solution, and (B) is acetonitrile.
Temperature: 35°C
Flow rate: 0.3 ml/min
Creation of calibration curve: A calibration curve was created from the results similarly quantified using the target compounds.

[Table 2A]

Table 2A

| Measurement time (min) | Eluent composition | |
|---|---|---|
| | A (volume%) | B (volume%) |
| 0 | 90 | 10 |
| 5 | 90 | 10 |
| 35 | 10 | 90 |
| 40 | 10 | 90 |
| 41 | 90 | 10 |
| 45 | 90 | 10 |

The results of quantitative analysis performed as described above for the coloring agents are shown in Table 2-1, Table 2-2, and Table 2-3. The content ratio of the compound (A) is a content ratio with respect to the entire coloring agent, and the content ratio of each of the other components is a content ratio with respect to the total mass of the compound (A) in the same coloring agent. In the case where there are multiple corresponding components, a total value thereof is described. The coloring agents may also contain moisture or other trace components in addition to the components shown in Table 2-1, Table 2-2, and Table 2-3.

[Table 2-1]

| Table 2-1 | Coloring agent | Compound (A) C.I. Pigment | Compound (A) (mass%) | Compound (B) type | Compound (B) (mass%) | Compound (C) (mass%) | Compound (D) type | Compound (D) (mass%) | Compound (E) type | Compound (E) (mass%) |
|---|---|---|---|---|---|---|---|---|---|---|
| Example 1 | 1 | Red269 | 97.3% | 4MPB | 0.115% | 0% | M-40 | 0.004% | Naphthol AS-CA | 1.043% |
| Example 2 | 2 | Red150 | 98.1% | 4MPB | 0.057% | 0% | M-40 | 0.005% | BON amide | 0.332% |
| Example 3 | 3 | Red31 | 97.3% | 4MPB | 0.045% | 0% | M-40 | 0.004% | Naphthol AS-BS | 1.066% |
| Example 4 | 4 | Red17 | 97.4% | 4MPB | 0.034% | 0% | Fast Scarlet G | 0.003% | Naphthol AS-D | 1.041% |
| Example 5 | 5 | Red22 | 97.4% | 4MPB | 0.036% | 0% | Fast **Scarlet** G | 0.003% | Naphthol AS | 1.027% |
| Example 6 | 6 | Red23 | 97.2% | 4MPB | 0.035% | 0% | Fast Scarlet RC | 0.003% | Naphthol AS-BS | 1.213% |
| Example 7 | 7 | Red32 | 97.5% | 4MPB | 0.098% | 0% | M-40 | 0.004% | Naphthol AS | 0.857% |
| Example 8 | 8 | Red114 | 97.2% | 4MPB | 0.032% | 0% | Fast Scarlet G | 0.003% | Naphthol AS-BS | 1.259% |
| Example 9 | 9 | Red146 | 97.2% | 4MPB | 0.11% | 0% | M-40 | 0.004% | Naphthol AS-LC | 1.139% |
| Example 10 | 10 | Red147 | 97.2% | 4MPB | 0.149% | 0% | M-40 | 0.004% | Naphthol AS-KB | 1.078% |
| Example 11 | 11 | Red176 | 97.4% | 4MPB | 0.146% | 0% | M-40 | 0.004% | Naphthol AS-BI | 0.924% |
| Example 12 | 12 | Red185 | 97.5% | 4MPB | 0.042% | 0% | R185 base | 0.004% | Naphthol AS-BI | 0.946% |
| Example 13 | 13 | Red245 | 97.4% | 4MPB | 0.038% | 0% | M-20 | 0.003% | Naphthol AS | 1.001% |
| Example 14 | 14 | Red258 | 97.7% | 4MPB | 0.011% | 0% | Azoic DC31 | 0.005% | Naphthol AS | 0.795% |

(continued)

| Table 2-1 | Coloring agent | Compound (A) C.I. Pigment | Compound (A) (mass%) | Compound (B) type | Compound (B) (mass%) | Compound (C) (mass%) | Compound (D) type | Compound (D) (mass%) | Compound (E) type | Compound (E) (mass%) |
|---|---|---|---|---|---|---|---|---|---|---|
| Example 15 | 15 | Red268 | 97.4% | 4MPB | 0.035% | 0% | M-60 | 0.003% | Naphthol AS | 1.03% |
| Example 16 | 16 | Violet32 | 97.5% | 4MPB | 0.045% | 0% | V32 base | 0.004% | Naphthol AS-BI | 0.931% |
| Example 17 | 17 | Violet50 | 97.6% | 4MPB | 0.05% | 0% | Fast Violet B | 0.004% | Naphthol AS | 0.821% |
| Example 18 | 18 | Red269 | 97.4% | 4MPB | 0.52% | 0% | M-40 | 0.004% | Naphthol AS-CA | 0.504% |
| Example 19 | 19 | Red 150 | 97.9% | 4MPB | 0.509% | 0% | M-40 | 0.005% | BON amide | 0.057% |
| Example 20 | 20 | Red31 | 97.1% | 4MPB | 0.638% | 0% | M-40 | 0.004% | Naphthol AS-BS | 0.742% |
| Example 21 | 21 | Red17 | 97.8% | p-nitrotoluene | 0.356% | 0% | Fast Scarlet G | 0.003% | Naphthol AS-D | 0.322% |
| Example 22 | 22 | Red22 | 97.8% | p-nitrotoluene | 0.37% | 0% | Fast Scarlet G | 0.003% | Naphthol AS | 0.318% |
| Example 23 | 23 | Red23 | 97.1% | 4-nitroanisole | 0.492% | 0% | Fast Scarlet RC | 0.003% | Naphthol AS-BS | 0.846% |
| Example 24 | 24 | Red32 | 97.7% | 4MPB | 0.507% | 0% | M-40 | 0.004% | Naphthol AS | 0.265% |
| Example 25 | 25 | Red114 | 97.1% | p-nitrotoluene | 0.459% | 0% | Fast Scarlet G | 0.003% | Naphthol AS-BS | 0.879% |
| Example 26 | 26 | Red146 | 97.1% | 4MPB | 0.589% | 0% | M-40 | 0.004% | Naphthol AS-LC | 0.795% |
| Example 27 | 27 | Red147 | 97.1% | 4MPB | 0.639% | 0% | M-40 | 0.004% | Naphthol AS-KB | 0.751% |
| Example 28 | 28 | Red 176 | 97.7% | 4MPB | 0.452% | 0% | M-40 | 0.004% | Naphthol AS-BI | 0.286% |

(continued)

| Table 2-1 | Coloring agent | Compound (A) C.I. Pigment | Compound (A) (mass%) | Compound (B) type | Compound (B) (mass%) | Compound (C) (mass%) | Compound (D) type | Compound (D) (mass%) | Compound (E) type | Compound (E) (mass%) |
|---|---|---|---|---|---|---|---|---|---|---|
| Example 29 | 29 | Red185 | 97.7% | DA-R185 | 0.438% | 0% | R185 base | 0.004% | Naphthol AS-BI | 0.292% |
| Example 30 | 30 | Red245 | 97.8% | 4MBA | 0.397% | 0% | M-20 | 0.003% | Naphthol AS | 0.309% |
| Example 31 | 31 | Red258 | 97.7% | DA-DC31 | 0.542% | 0% | Azoic DC31 | 0.005% | Naphthol AS | 0.245% |
| Example 32 | 32 | Red268 | 97.8% | 4MB | 0.366% | 0% | M-60 | 0.003% | Naphthol AS | 0.319% |
| Example 33 | 33 | Violet32 | 97.7% | DA-V32 | 0.463% | 0% | V32 base | 0.004% | Naphthol AS-BI | 0.288% |
| Example 34 | 34 | Violet50 | 97.7% | DA-FVB | 0.515% | 0% | Fast Violet B | 0.004% | Naphthol AS | 0.253% |
| Example 35 | 35 | Red269+Red150 | 97.4% | 4MPB | 0.542% | 0% | M-40 | 0.004% | Naphthol AS-CA, BON amide | 0.503% |
| Example 36 | 36 | Red269+Red150 | 97.4% | 4MPB | 0.57% | 0% | M-40 | 0.004% | Naphthol AS-CA, BON amide | 0.482% |
| Example 37 | 37 | Red269+Red150 | 97.7% | 4MPB | 0.509% | 0% | M-40 | 0.004% | Naphthol AS-CA, BON amide | 0.26% |
| Example 38 | 38 | Red31+Red150 | 97.7% | 4MPB | 0.54% | 0% | M-40 | 0.005% | Naphthol AS-BS, BON amide | 0.239% |
| Example 39 | 39 | Red31+Red150 | 97.4% | 4MPB | 0.616% | 0% | M-40 | 0.004% | Naphthol AS-BS, BON amide | 0.429% |
| Example 40 | 40 | Red146+Red147 | 97.1% | 4MPB | 0.603% | 0% | M-40 | 0.004% | Naphthol AS-LC, Naphthol AS-KB | 0.761% |

[Table 2-2]

| Table 2-2 | Coloring agent | Compound (A) C.I. Pigment | Compound (A) (mass%) | Compound (B) type | Compound (B) (mass%) | Compound (C) (mass%) | Compound (D) type | Compound (D) (mass%) | Compound (E) type | Compound (E) (mass%) |
|---|---|---|---|---|---|---|---|---|---|---|
| Example 41 | 41 | Red269 | 97% | 4MPB | 0.526% | 0.462% | M-40 | 0.004% | Naphthol AS-CA | 0.508% |
| Example 42 | 42 | Red269 | 97.3% | 4MPB | 0.527% | 0.116% | M-40 | 0.004% | Naphthol AS-CA | 0.511% |
| Example 43 | 43 | Red269 | 97.4% | 4MPB | 0.527% | 0.029% | M-40 | 0.004% | Naphthol AS-CA | 0.511% |
| Example 44 | 44 | Red269 | 97.4% | 4MPB | 0.527% | 0.007% | M-40 | 0.004% | Naphthol AS-CA | 0.511% |
| Example 45 | 45 | Red269 | 97.4% | 4MPB | 0.42% | 0% | M-40 | 0.117% | Naphthol AS-CA | 0.51% |
| Example 46 | 46 | Red269 | 92.2% | 4MPB | 0.162% | 0% | M-40 | 0.004% | Naphthol AS-CA | 5.884% |
| Example 47 | 47 | Red269 | 96.7% | 4MPB | 1.251% | 0% | M-40 | 0.004% | Naphthol AS-CA | 0.504% |
| Example 48 | 48 | Red150 | 96.9% | 4MPB | 1.466% | 0% | M-40 | 0.005% | BON amide | 0.057% |
| Example 49 | 49 | Red31 | 96.3% | 4MPB | 1.39% | 0% | M-40 | 0.004% | Naphthol AS-BS | 0.737% |
| Example 50 | 50 | Red32 | 96.9% | 4MPB | 1.319% | 0% | M-40 | 0.004% | Naphthol AS | 0.26% |
| Example 51 | 51 | Red146 | 96.4% | 4MPB | 1.278% | 0% | M-40 | 0.004% | Naphthol AS-LC | 0.786% |
| Example 52 | 52 | Red147 | 96.3% | 4MPB | 1.381% | 0% | M-40 | 0.004% | Naphthol AS-KB | 0.74% |
| Example 53 | 53 | Red 176 | 97% | 4MPB | 1.192% | 0% | M-40 | 0.004% | Naphthol AS-BI | 0.285% |
| Example 54 | 54 | Red245 | 96.9% | 4MBA | 1.219% | 0% | M-20 | 0.004% | Naphthol AS | 0.306% |
| Example 55 | 55 | Red268 | 97% | 4MB | 1.134% | 0% | M-60 | 0.003% | Naphthol AS | 0.317% |

(continued)

| Table 2-2 | Coloring agent | Compound (A) C.I. Pigment | Compound (A) (mass%) | Compound (B) type | Compound (B) (mass%) | Compound (C) (mass%) | Compound (D) type | Compound (D) (mass%) | Compound (E) type | Compound (E) (mass%) |
|---|---|---|---|---|---|---|---|---|---|---|
| Example 56 | 56 | Red269 | 92.5% | 4MPB | 5.311% | 0% | M-40 | 0.004% | Naphthol AS-CA | 0.475% |
| Comparative Example 1 | 101 | Red269 | 97.4% | 4MPB | 0% | 0% | M-40 | 0.004% | Naphthol AS-CA | 1.046% |
| Comparative Example 2 | 102 | Red 150 | 98.1% | 4MPB | 0% | 0% | M-40 | 0.005% | BON amide | 0.336% |
| Comparative Example 3 | 103 | Red31 | 97.4% | 4MPB | 0% | 0% | M-40 | 0.004% | Naphthol AS-BS | 1.06% |
| Comparative Example 4 | 104 | Red17 | 97.4% | p-nitrotoluene | 0% | 0% | Fast Scarlet G | 0.003% | Naphthol AS-D | 1.047% |
| Comparative Example 5 | 105 | Red22 | 97.4% | p-nitrotoluene | 0% | 0% | Fast Scarlet G | 0.003% | Naphthol AS | 1.033% |
| Comparative Example 6 | 106 | Red23 | 97.2% | 4-nitroanisole | 0% | 0% | Fast Scarlet RC | 0.003% | Naphthol AS-BS | 1.231% |
| Comparative Example 7 | 107 | Red32 | 97.6% | 4MPB | 0% | 0% | M-40 | 0.004% | Naphthol AS | 0.845% |
| Comparative Example 8 | 108 | Red114 | 97.2% | p-nitrotoluene | 0% | 0% | Fast Scarlet G | 0.003% | Naphthol AS-BS | 1.258% |
| Comparative Example 9 | 109 | Red146 | 97.3% | 4MPB | 0% | 0% | M-40 | 0.004% | Naphthol AS-LC | 1.134% |
| Comparative Example 10 | 110 | Red147 | 97.4% | 4MPB | 0% | 0% | M-40 | 0.004% | Naphthol AS-KB | 1.071% |
| Comparative Example 11 | 111 | Red 176 | 97.5% | 4MPB | 0% | 0% | M-40 | 0.004% | Naphthol AS-BI | 0.932% |
| Comparative Example 12 | 112 | Red185 | 97.5% | DA-R185 | 0% | 0% | **R185** base | 0.004% | Naphthol AS-BI | 0.959% |
| Comparative Example 13 | 113 | Red245 | 97.5% | 4MBA | 0% | 0% | M-20 | 0.003% | Naphthol AS | 1.006% |

(continued)

| Table 2-2 | Coloring agent | Compound (A) C.I. Pigment | Compound (A) (mass%) | Compound (B) type | Compound (B) (mass%) | Compound (C) (mass%) | Compound (D) type | Compound (D) (mass%) | Compound (E) type | Compound (E) (mass%) |
|---|---|---|---|---|---|---|---|---|---|---|
| Comparative Example 14 | 114 | Red258 | 97.7% | DA-DC31 | 0% | 0% | Azoic DC31 | 0.005% | Naphthol AS | 0.805% |
| Comparative Example 15 | 115 | Red268 | 97.4% | 4MB | 0% | 0% | M-60 | 0.003% | Naphthol AS | 1.043% |
| Comparative Example 16 | 116 | Violet32 | 97.5% | DA-V32 | 0% | 0% | V32 base | 0.004% | Naphthol AS-BI | 0.933% |
| Comparative Example 17 | 117 | Violet50 | 97.6% | DA-FVB | 0% | 0% | Fast Violet B | 0.004% | Naphthol AS | 0.837% |

[Table 2-3]

| Table 2-3 | Coloring agent | C.I. Pigment | Compound (A) (mass%) | Compound (B) type | Compound (B) (mass%) | Compound (C) (mass%) | Compound (D) type | Compound (D) (mass%) | Compound (E) type | **Compound** (E) (mass%) |
|---|---|---|---|---|---|---|---|---|---|---|
| Example 57 | 57 | Compound (A)-1 | 98.4% | 4MB | 0.033% | 0% | M-60 | 0.03% | Naphthol AS-RL | 0.066% |
| Example 58 | 58 | Compound (A)-2 | 98.4% | Benzamide | 0.031% | 0% | M-70 | 0.028% | Naphthol AS-RL | 0.068% |
| Example 59 | 59 | Compound (A)-3 | 98.4% | Benzoic acid | 0.031% | 0% | 4-aminobenzoic acid | 0.028% | Naphthol AS-RL | 0.068% |
| Example 60 | 60 | Compound (A)-4 | 98.4% | 4MB | 0.033% | 0% | M-60 | 0.03% | Naphthol AS-OL | 0.066% |
| Example 61 | 61 | Red266 | 98.4% | Benzamide | 0.031% | 0% | M-70 | 0.028% | Naphthol AS-OL | 0.068% |
| Example 62 | 62 | Compound (A)-5 | 98.4% | Benzoic acid | 0.031% | 0% | 4-aminobenzoic acid | 0.028% | Naphthol AS-OL | 0.068% |
| Example 63 | 63 | Compound (A)-6 | 97.2% | Benzoic acid | 0.031% | 0% | 4-aminobenzoic acid | 0.028% | Naphthol AS-E | 1.164% |
| Example 64 | 64 | Compound (A)-1 | 97.6% | 4MB | 0.842% | 0% | M-60 | 0.026% | Naphthol AS-RL | 0.011% |
| Example 65 | 65 | Compound (A)-2 | 97.7% | Benzamide | 0.78% | 0% | M-70 | 0.025% | Naphthol AS-RL | 0.011% |
| Example 66 | 66 | Compound (A)-3 | 97.7% | Benzoic acid | 0.785% | 0% | 4-aminobenzoic acid | 0.025% | Naphthol AS-RL | 0.011% |
| Example 67 | 67 | Compound (A)-4 | 97.6% | 4MB | 0.842% | 0% | M-60 | 0.026% | Naphthol AS-OL | 0.011% |
| Example 68 | 68 | Red266 | 97.7% | Benzamide | 0.78% | 0% | M-70 | 0.025% | Naphthol AS-OL | 0.011% |
| Example 69 | 69 | Compound (A)-5 | 97.7% | Benzoic acid | 0.785% | 0% | 4-aminobenzoic acid | 0.025% | Naphthol AS-OL | 0.011% |
| Example 70 | 70 | Compound (A)-6 | 97.3% | Benzoic acid | 0.819% | 0% | 4-aminobenzoic acid | 0.024% | Naphthol AS-E | 0.343% |

(continued)

| Table 2-3 | Coloring agent | C.I. Pigment | Compound (A) (mass%) | Compound (B) type | Compound (B) (mass%) | Compound (C) (mass%) | Compound (D) type | Compound (D) (mass%) | Compound (E) type | **Compound** (E) (mass%) |
|---|---|---|---|---|---|---|---|---|---|---|
| Comparative Example 18 | 118 | Compound (A)-1 | 98.4% | 4MB | 0% | 0% | M-60 | 0.03% | Naphthol AS-RL | 0.067% |
| Comparative Example 19 | 119 | Compound (A)-2 | 98.4% | Benzamide | 0% | 0% | M-70 | 0.028% | Naphthol AS-RL | 0.069% |
| Comparative Example 20 | 120 | Compound (A)-3 | 98.4% | Benzoic acid | 0% | 0% | 4-aminobenzoic acid | 0.028% | Naphthol AS-RL | 0.069% |
| Comparative Example 21 | 121 | Compound (A)-4 | 98.4% | 4MB | 0% | 0% | M-60 | 0.03% | Naphthol AS-OL | 0.067% |
| Comparative Example 22 | 122 | Red266 | 98.4% | Benzamide | 0% | 0% | M-70 | 0.028% | Naphthol AS-OL | 0.069% |
| Comparative Example 23 | 123 | Compound (A)-5 | 98.4% | Benzoic acid | 0% | 0% | 4-aminobenzoic acid | 0.028% | Naphthol AS-OL | 0.069% |
| Comparative Example 24 | 124 | Compound (A)-6 | 97.3% | Benzoic acid | 0% | 0% | 4-aminobenzoic acid | 0.028% | Naphthol AS-E | 1.171% |

The compound (B) for quantification used compounds synthesized according to the following methods in addition to the commercially available products described above.

(Production Example 1) Production of DA-R185

7.4 parts of powdered sodium nitrite was added in small portions to 7.4 parts of 97% concentrated sulfuric acid at 0°C with gentle stirring. A solution of 6 parts of R185 base dissolved in 7.4 parts of 97% concentrated sulfuric acid was added dropwise during stirring. The temperature of the reaction was maintained at 5°C or below, and stirring was performed in an ice bath for 2 hours. Next, this reaction mixture was poured into a mixture containing 15 parts of hypophosphorous acid and 150 parts of ice with vigorous stirring. This mixture was stirred for 4 hours and then left to stand overnight at 20 to 25°C. The pH of this reaction mixture was adjusted to 8 by adding an ammonia solution, and then extracted three times with 50 parts of chloroform. This extract was dried with sodium sulfate, and after a chromatographic treatment on alumina, the solvent was removed with a rotary evaporator to obtain 4.2 parts of DA-R185.

(Production Example 2) Production of DA-FVB

DA-FVB was obtained in the same manner as Production Example 1, except that 6 parts of R185 base in Production Example 1 was changed to 6.7 parts of Fast Violet B.

(Production Example 3) Production of DA-DC31

DA-DC31 was obtained in the same manner as Production Example 1, except that 6 parts of R185 base in Production Example 1 was changed to 7.3 parts of Azoic DC31.

(Production Example 4) Production of DA-V32

DA-V32 was obtained in the same manner as Production Example 1, except that 6 parts of R185 base in Production Example 1 was changed to 6.5 parts of V32 base.

<3> Coloring composition

The following relates to specific examples of coloring compositions containing the coloring agents prepared above.

<A> Pigment dispersion (A1) Preparation of pigment dispersion

(Example A-1) Preparation of pigment dispersion a-1

The following raw materials and 70 parts of zirconia beads with a diameter of 1.25 mm were loaded into a 70 ml glass bottle, and dispersed for 60 minutes using a paint shaker manufactured by Red Devil to obtain a dispersion.

- Coloring agent 1: 3.15 parts
- Polyester-modified acrylic acid polymer (manufactured by Allnex, ADDITOL XW6528): 5.25 parts
- Wetting agent (manufactured by Allnex, ADDITOL VXW6374): 0.95 parts
- Defoaming agent (manufactured by Allnex, ADDITOL VXW6211): 0.63 parts
- Ion-exchanged water: 21.52 parts

Next, the zirconia beads were removed from the dispersion to obtain a pigment dispersion a-1.

(Examples A-2 to A-70, Comparative Examples A-1 to A-24) Preparation of pigment dispersions a-2 to a-70, a-101 to a-124

Pigment dispersions a-2 to a-70 and a-101 to a-124 were obtained in the same manner as Example A-1, except that the coloring agent 1 of Example A-1 was changed as shown in Table 3-1, Table 3-2, and Table 3-3.

(A2) Evaluation of pigment dispersion

<Initial viscosity and viscosity stability>

For the obtained pigment dispersion, an initial viscosity at 25°C was measured using an E-type viscometer ("ELD type viscometer" manufactured by Toki Sangyo Co., Ltd.). Similarly, a viscosity was measured after accelerated aging at 60°C for 1 week. Based on the obtained measured values, a viscosity increase rate with respect to the initial viscosity was calculated as one indicator of viscosity stability, and evaluated according to the following evaluation criteria. The results are shown in Table 3-1, Table 3-2, and Table 3-3. The lower the initial viscosity, the more excellent the dispersibility. In addition, the smaller the viscosity increase rate, the more excellent the dispersion stability. According to the evaluation criteria below, "4", "3", and "2" represent practically usable levels. Table 3-1, Table 3-2, and Table 3-3 only show the compound (A) which is the main component of the coloring agent, and details of each coloring agent are as shown above in Table 2-1, Table 2-2, and Table 2-3.

(Evaluation criteria for initial viscosity)

4: Initial viscosity is less than 5.0 mPa·s. Extremely good
3: Initial viscosity is 5.0 mPa·s or more and less than 7.5 mPa·s. Good
2: Initial viscosity is 7.5 mPa·s or more and less than 10.0 mPa·s. Practically usable
1: Initial viscosity is 10.0 mPa·s or more. Poor

(Evaluation criteria for viscosity stability)

4: Viscosity increase rate is less than 20%. Extremely good
3: Viscosity increase rate is 20% or more and less than 30%. Good
2: Viscosity increase rate is 30% or more and less than 40%. Practically usable
1: Viscosity increase rate is 40% or more. Poor

[Table 3-1]

| Table 3-1 | Coloring agent | Aqueous dispersion | Compound (A) C.I. Pigment | Initial viscosity | Viscosity stability |
|---|---|---|---|---|---|
| Example A-1 | 1 | a-1 | Red269 | 3 | 3 |
| Example A-2 | 2 | a-2 | Red150 | 3 | 3 |
| Example A-3 | 3 | a-3 | Red31 | 3 | 3 |
| Example A-4 | 4 | a-4 | Red17 | 3 | 3 |
| Example A-5 | 5 | a-5 | Red22 | 3 | 3 |
| Example A-6 | 6 | a-6 | Red23 | 3 | 3 |
| Example A-7 | 7 | a-7 | Red32 | 3 | 3 |
| Example A-8 | 8 | a-8 | Red114 | 3 | 3 |
| Example A-9 | 9 | a-9 | Red146 | 3 | 3 |
| Example A-10 | 10 | a-10 | Red147 | 3 | 3 |
| Example A-11 | 11 | a-11 | Red176 | 3 | 3 |
| Example A-12 | 12 | a-12 | Red185 | 3 | 3 |
| Example A-13 | 13 | a-13 | Red245 | 3 | 3 |
| Example A-14 | 14 | a-14 | Red258 | 3 | 3 |
| Example A-15 | 15 | a-15 | Red268 | 3 | 3 |
| Example A-16 | 16 | a-16 | Violet32 | 3 | 3 |

(continued)

| Table 3-1 | Coloring agent | Aqueous dispersion | Compound (A) C.I. Pigment | Initial viscosity | Viscosity stability |
|---|---|---|---|---|---|
| Example A-17 | 17 | a-17 | Violet50 | 3 | 3 |
| Example A-18 | 18 | a-18 | Red269 | 4 | 4 |
| Example A-19 | 19 | a-19 | Red150 | 4 | 4 |
| Example A-20 | 20 | a-20 | Red31 | 4 | 4 |
| Example A-21 | 21 | a-21 | Red17 | 4 | 4 |
| Example A-22 | 22 | a-22 | Red22 | 4 | 4 |
| Example A-23 | 23 | a-23 | Red23 | 4 | 4 |
| Example A-24 | 24 | a-24 | Red32 | 4 | 4 |
| Example A-25 | 25 | a-25 | Red114 | 4 | 4 |
| Example A-26 | 26 | a-26 | Red146 | 4 | 4 |
| Example A-27 | 27 | a-27 | Red147 | 4 | 4 |
| Example A-28 | 28 | a-28 | Red176 | 4 | 4 |
| Example A-29 | 29 | a-29 | Red185 | 4 | 4 |
| Example A-30 | 30 | a-30 | Red245 | 4 | 4 |
| Example A-31 | 31 | a-31 | Red258 | 4 | 4 |
| Example A-32 | 32 | a-32 | Red268 | 4 | 4 |
| Example A-33 | 33 | a-33 | Violet32 | 4 | 4 |
| Example A-34 | 34 | a-34 | Violet50 | 4 | 4 |
| Example A-35 | 35 | a-35 | Red269+Red150 | 4 | 4 |
| Example A-36 | 36 | a-36 | Red269+Red150 | 4 | 4 |
| Example A-37 | 37 | a-37 | Red269+Red150 | 4 | 4 |
| Example A-38 | 38 | a-38 | Red31+Red150 | 4 | 4 |
| Example A-39 | 39 | a-39 | Red31+Red150 | 4 | 4 |
| Example A-40 | 40 | a-40 | Red146+Red147 | 4 | 4 |

[Table 3-2]

| Table 3-2 | Coloring agent | Aqueous dispersion | Compound (A) C.I. Pigment | Initial viscosity | Viscosity stability |
|---|---|---|---|---|---|
| Example A-41 | 41 | a-41 | Red269 | 4 | 4 |
| Example A-42 | 42 | a-42 | Red269 | 4 | 4 |
| Example A-43 | 43 | a-43 | Red269 | 4 | 4 |
| Example A-44 | 44 | a-44 | Red269 | 4 | 4 |
| Example A-45 | 45 | a-45 | Red269 | 4 | 4 |
| Example A-46 | 46 | a-46 | Red269 | 4 | 2 |
| Example A-47 | 47 | a-47 | Red269 | 3 | 4 |
| Example A-48 | 48 | a-48 | Red150 | 3 | 4 |
| Example A-49 | 49 | a-49 | Red31 | 3 | 4 |
| Example A-50 | 50 | a-50 | Red32 | 3 | 4 |
| Example A-51 | 51 | a-51 | Red146 | 3 | 4 |

(continued)

| Table 3-2 | Coloring agent | Aqueous dispersion | Compound (A) C.I. Pigment | Initial viscosity | Viscosity stability |
|---|---|---|---|---|---|
| Example A-52 | 52 | a-52 | Red147 | 3 | 4 |
| Example A-53 | 53 | a-53 | Red176 | 3 | 4 |
| Example A-54 | 54 | a-54 | Red245 | 3 | 4 |
| Example A-55 | 55 | a-55 | Red268 | 3 | 4 |
| Example A-56 | 56 | a-56 | Red269 | 2 | 4 |
| Comparative Example A-1 | 101 | a-101 | Red269 | 1 | 1 |
| Comparative Example A-2 | 102 | a-102 | Red150 | 1 | 1 |
| Comparative Example A-3 | 103 | a-103 | Red31 | 1 | 1 |
| Comparative Example A-4 | 104 | a-104 | Red17 | 1 | 1 |
| Comparative Example A-5 | 105 | a-105 | Red22 | 1 | 1 |
| Comparative Example A-6 | 106 | a-106 | Red23 | 1 | 1 |
| Comparative Example A-7 | 107 | a-107 | Red32 | 1 | 1 |
| Comparative Example A-8 | 108 | a-108 | Red114 | 1 | 1 |
| Comparative Example A-9 | 109 | a-109 | Red146 | 1 | 1 |
| Comparative Example A-10 | 110 | a-110 | Red147 | 1 | 1 |
| Comparative Example A-11 | 111 | a-111 | Red176 | 1 | 1 |
| Comparative Example A-12 | 112 | a-112 | Red185 | 1 | 1 |
| Comparative Example A-13 | 113 | a-113 | Red245 | 1 | 1 |
| Comparative Example A-14 | 114 | a-114 | Red258 | 1 | 1 |
| Comparative Example A-15 | 115 | a-115 | Red268 | 1 | 1 |
| Comparative Example A-16 | 116 | a-116 | Violet32 | 1 | 1 |
| Comparative Example A-17 | 117 | a-117 | Violet50 | 1 | 1 |

[Table 3-3]

| Table 3-3 | Coloring agent | Aqueous dispersion | Compound (A) | Initial viscosity | Viscosity stability |
|---|---|---|---|---|---|
| Example A-57 | 57 | a-57 | Compound (A)-1 | 3 | 3 |
| Example A-58 | 58 | a-58 | Compound (A)-2 | 3 | 3 |
| Example A-59 | 59 | a-59 | Compound (A)-3 | 3 | 3 |
| Example A-60 | 60 | a-60 | Compound (A)-4 | 3 | 3 |
| Example A-61 | 61 | a-61 | C.I. Pigment Red266 | 3 | 3 |
| Example A-62 | 62 | a-62 | Compound (A)-5 | 3 | 3 |
| Example A-63 | 63 | a-63 | Compound (A)-6 | 3 | 3 |
| Example A-64 | 64 | a-64 | Compound (A)-1 | 4 | 4 |
| Example A-65 | 65 | a-65 | Compound (A)-2 | 4 | 4 |
| Example A-66 | 66 | a-66 | Compound (A)-3 | 4 | 4 |
| Example A-67 | 67 | a-67 | Compound (A)-4 | 4 | 4 |
| Example A-68 | 68 | a-68 | C.I. Pigment Red266 | 4 | 4 |
| Example A-69 | 69 | a-69 | Compound (A)-5 | 4 | 4 |

(continued)

| Table 3-3 | Coloring agent | Aqueous dispersion | Compound (A) | Initial viscosity | Viscosity stability |
|---|---|---|---|---|---|
| Example A-70 | 70 | a-70 | Compound (A)-6 | 4 | 4 |
| Comparative Example A-18 | 118 | a-118 | Compound (A)-1 | 1 | 1 |
| Comparative Example A-19 | 119 | a-119 | Compound (A)-2 | 1 | 1 |
| Comparative Example A-20 | 120 | a-120 | Compound (A)-3 | 1 | 1 |
| Comparative Example A-21 | 121 | a-121 | Compound (A)-4 | 1 | 1 |
| Comparative Example A-22 | 122 | a-122 | C.I. Pigment Red266 | 1 | 1 |
| Comparative Example A-23 | 123 | a-123 | Compound (A)-5 | 1 | 1 |
| Comparative Example A-24 | 124 | a-124 | Compound (A)-6 | 1 | 1 |

Hereinafter, as the coloring composition, paints and printing inks configured using the coloring agents or the pigment dispersions prepared above will be exemplified. The hue of the coloring agent differs according to the structure thereof. Thus, the evaluations of coloring property, brightness, and transparency of the coloring agent described below were performed taking the case of using a pigment with the same C.I. No. as a comparative control. In each table, only the compound (A) (pigment) which is the main component is shown for the coloring agent, and details of each coloring agent are as shown above in Table 2-1, Table 2-2, and Table 2-3. The comparative control (standard) was indicated as "std". In addition, for pigments containing multiple C.I. Nos., all were compared against C.I. Pigment Red 269 as the comparative control.

<B> Aqueous paint (B1) Preparation of aqueous paint and coating film

(Example B-1) Preparation of aqueous paint b-1 and production of coating film

Using a high-speed stirrer, the following raw materials were stirred to obtain an aqueous paint b-1.

- Pigment dispersion a-1: 1.4 parts
- Acrylic resin (manufactured by DIC Corporation, Burnock WD-304): 13.6 parts
- Melamine resin (manufactured by Allnex, Cymel 325): 3.4 parts

The obtained aqueous paint b-1 was coated on a commercially available polyethylene terephthalate (PET) film with a thickness of 100 μm using a 7 mil applicator. After the coating, the PET film was dried at room temperature for 18 hours. Thereafter, it was dried at 60°C for 5 minutes and at 140°C for 20 minutes to obtain a coating film.

(Examples B-2 to B-70, Comparative Examples B-1 to B-24) Preparation of aqueous paints b-2 to b-70 and b-101 to b-124, and production of coating films

Aqueous paints b-2 to b-70 and b-101 to b-124 and coating films thereof were obtained in the same manner as Example B-1, except that the pigment dispersion 1 of Example B-1 was changed as shown in Table 4-1, Table 4-2, and Table 4-3.

(B2) Evaluation of coating film

<Coloring property>

The film (coating article) coated with the paint was visually observed and evaluated according to the following criteria. The results are shown in Table 4-1, Table 4-2, and Table 4-3. The standard coating article is a coating article of a comparative example using a pigment with the same C.I. No. as the compound (A) in the coloring agent used in Examples as described above. In addition, in the case where the coloring agent contains multiple compounds (A), a coating article of a comparative example using C.I. Pigment Red 269 was all taken as a comparative control (standard). The same also applies to the criteria for brightness.

(Evaluation criteria for coloring property)

4: Coloring property is extremely higher than the standard coating article
3: Coloring property is higher than the standard coating article
2: Coloring property is slightly higher than the standard coating article
1: Coloring property is equivalent to the standard coating article

<Brightness>

The film (coating article) coated with the paint was visually observed and evaluated according to the following criteria. The results are shown in Table 4-1, Table 4-2, and Table 4-3. The standard coating article is as described above.

(Evaluation criteria for brightness)

4: Brightness is extremely higher than the standard coating article
3: Brightness is higher than the standard coating article
2: Brightness is slightly higher than the standard coating article
1: Brightness is equivalent to the standard coating article

[Table 4-1]

| Table 4-1 | Coloring agent | Aqueous paint | Compound (A) C.I. Pigment | Coloring property | Brightness |
|---|---|---|---|---|---|
| Example B-1 | 1 | b-1 | Red269 | 3 | 3 |
| Example B-2 | 2 | b-2 | Red150 | 3 | 3 |
| Example B-3 | 3 | b-3 | Red31 | 3 | 3 |
| Example B-4 | 4 | b-4 | Red17 | 3 | 3 |
| Example B-5 | 5 | b-5 | Red22 | 3 | 3 |
| Example B-6 | 6 | b-6 | Red23 | 3 | 3 |
| Example B-7 | 7 | b-7 | Red32 | 3 | 3 |
| Example B-8 | 8 | b-8 | Red114 | 3 | 3 |
| Example B-9 | 9 | b-9 | Red146 | 3 | 3 |
| Example B-10 | 10 | b-10 | Red147 | 3 | 3 |
| Example B-11 | 11 | b-11 | Red176 | 3 | 3 |
| Example B-12 | 12 | b-12 | Red185 | 3 | 3 |
| Example B-13 | 13 | b-13 | Red245 | 3 | 3 |
| Example B-14 | 14 | b-14 | Red258 | 3 | 3 |
| Example B-15 | 15 | b-15 | Red268 | 3 | 3 |
| Example B-16 | 16 | b-16 | Violet32 | 3 | 3 |
| Example B-17 | 17 | b-17 | Violet50 | 3 | 3 |
| Example B-18 | 18 | b-18 | Red269 | 4 | 3 |
| Example B-19 | 19 | b-19 | Red150 | 4 | 3 |
| Example B-20 | 20 | b-20 | Red31 | 4 | 3 |
| Example B-21 | 21 | b-21 | Red17 | 4 | 3 |
| Example B-22 | 22 | b-22 | Red22 | 4 | 3 |

(continued)

| Table 4-1 | Coloring agent | Aqueous paint | Compound (A) C.I. Pigment | Coloring property | Brightness |
|---|---|---|---|---|---|
| Example B-23 | 23 | b-23 | Red23 | 4 | 3 |
| Example B-24 | 24 | b-24 | Red32 | 4 | 3 |
| Example B-25 | 25 | b-25 | Red114 | 4 | 3 |
| Example B-26 | 26 | b-26 | Red146 | 4 | 3 |
| Example B-27 | 27 | b-27 | Red147 | 4 | 3 |
| Example B-28 | 28 | b-28 | Red176 | 4 | 3 |
| Example B-29 | 29 | b-29 | Red185 | 4 | 3 |
| Example B-30 | 30 | b-30 | Red245 | 4 | 3 |
| Example B-31 | 31 | b-31 | Red258 | 4 | 3 |
| Example B-32 | 32 | b-32 | Red268 | 4 | 3 |
| Example B-33 | 33 | b-33 | Violet32 | 4 | 3 |
| Example B-34 | 34 | b-34 | Violet50 | 4 | 3 |
| Example B-35 | 35 | b-35 | Red269+Red150 | 4 | 4 |
| Example B-36 | 36 | b-36 | Red269+Red150 | 4 | 4 |
| Example B-37 | 37 | b-37 | Red269+Red150 | 4 | 4 |
| Example B-38 | 38 | b-38 | Red31+Red150 | 4 | 4 |
| Example B-39 | 39 | b-39 | Red31+Red150 | 4 | 4 |
| Example B-40 | 40 | b-40 | Red146+Red147 | 4 | 4 |

[Table 4-2]

| Table 4-2 | Coloring agent | Aqueous paint | Compound (A) C.I. Pigment | Coloring property | Brightness |
|---|---|---|---|---|---|
| Example B-41 | 41 | b-41 | Red269 | 4 | 3 |
| Example B-42 | 42 | b-42 | Red269 | 4 | 4 |
| Example B-43 | 43 | b-43 | Red269 | 4 | 4 |
| Example B-44 | 44 | b-44 | Red269 | 4 | 4 |
| Example B-45 | 45 | b-45 | Red269 | 3 | 3 |
| Example B-46 | 46 | b-46 | Red269 | 2 | 2 |
| Example B-47 | 47 | b-47 | Red269 | 3 | 3 |
| Example B-48 | 48 | b-48 | Red150 | 3 | 3 |
| Example B-49 | 49 | b-49 | Red31 | 3 | 3 |
| Example B-50 | 50 | b-50 | Red32 | 3 | 3 |
| Example B-51 | 51 | b-51 | Red146 | 3 | 3 |
| Example B-52 | 52 | b-52 | Red147 | 3 | 3 |
| Example B-53 | 53 | b-53 | Red176 | 3 | 3 |
| Example B-54 | 54 | b-54 | Red245 | 3 | 3 |
| Example B-55 | 55 | b-55 | Red268 | 3 | 3 |
| Example B-56 | 56 | b-56 | Red269 | 2 | 2 |
| Comparative Example B-1 | 101 | b-101 | Red269 | std | std |
| Comparative Example B-2 | 102 | b-102 | Red150 | std | std |

(continued)

| Table 4-2 | Coloring agent | Aqueous paint | Compound (A) C.I. Pigment | Coloring property | Brightness |
|---|---|---|---|---|---|
| Comparative Example B-3 | 103 | b-103 | Red31 | std | std |
| Comparative Example B-4 | 104 | b-104 | Red17 | std | std |
| Comparative Example B-5 | 105 | b-105 | Red22 | std | std |
| Comparative Example B-6 | 106 | b-106 | Red23 | std | std |
| Comparative Example B-7 | 107 | b-107 | Red32 | std | std |
| Comparative Example B-8 | 108 | b-108 | Red114 | std | std |
| Comparative Example B-9 | 109 | b-109 | Red146 | std | std |
| Comparative Example B-10 | 110 | b-110 | Red147 | std | std |
| Comparative Example B-11 | 111 | b-111 | Red176 | std | std |
| Comparative Example B-12 | 112 | b-112 | Red185 | std | std |
| Comparative Example B-13 | 113 | b-113 | Red245 | std | std |
| Comparative Example B-14 | 114 | b-114 | Red258 | std | std |
| Comparative Example B-15 | 115 | b-115 | Red268 | std | std |
| Comparative Example B-16 | 116 | b-116 | Violet32 | std | std |
| Comparative Example B-17 | 117 | b-117 | Violet50 | std | std |

[Table 4-3]

| Table 4-3 | Coloring agent | Aqueous paint | Compound (A) | Coloring property | Brightness |
|---|---|---|---|---|---|
| Example B-57 | 57 | b-57 | Compound (A)-1 | 3 | 3 |
| Example B-58 | 58 | b-58 | Compound (A)-2 | 3 | 3 |
| Example B-59 | 59 | b-59 | Compound (A)-3 | 3 | 3 |
| Example B-60 | 60 | b-60 | Compound (A)-4 | 3 | 3 |
| Example B-61 | 61 | b-61 | C.I. Pigment Red266 | 3 | 3 |
| Example B-62 | 62 | b-62 | Compound (A)-5 | 3 | 3 |
| Example B-63 | 63 | b-63 | Compound (A)-6 | 3 | 3 |
| Example B-64 | 64 | b-64 | Compound (A)-1 | 4 | 3 |
| Example B-65 | 65 | b-65 | Compound (A)-2 | 4 | 3 |
| Example B-66 | 66 | b-66 | Compound (A)-3 | 4 | 3 |
| Example B-67 | 67 | b-67 | Compound (A)-4 | 4 | 3 |
| Example B-68 | 68 | b-68 | C.I. Pigment Red266 | 4 | 3 |
| Example B-69 | 69 | b-69 | Compound (A)-5 | 4 | 3 |
| Example B-70 | 70 | b-70 | Compound (A)-6 | 4 | 3 |
| Comparative Example B-18 | 118 | b-118 | Compound (A)-1 | std | std |
| Comparative Example B-19 | 119 | b-119 | Compound (A)-2 | std | std |
| Comparative Example B-20 | 120 | b-120 | Compound (A)-3 | std | std |
| Comparative Example B-21 | 121 | b-121 | Compound (A)-4 | std | std |
| Comparative Example B-22 | 122 | b-122 | C.I. Pigment Red266 | std | std |
| Comparative Example B-23 | 123 | b-123 | Compound (A)-5 | std | std |

(continued)

| Table 4-3 | Coloring agent | Aqueous paint | Compound (A) | Coloring property | Brightness |
|---|---|---|---|---|---|
| Comparative Example B-24 | 124 | b-124 | Compound (A)-6 | std | std |

<C> Aqueous inkjet ink

(C1) Preparation of aqueous inkjet ink (aqueous IJ ink)

(Example C-1) Preparation of aqueous IJ ink c-1

The following raw materials

- Coloring agent 1: 19.0 parts
- Styrene-acrylic acid copolymer (manufactured by BASF Japan Ltd., Joncryl 61J): 16.4 parts
- Surfactant (manufactured by Kao Corporation, Emulgen 420): 5.0 parts
- Ion-exchanged water: 59.6 parts

and 200 parts of zirconia beads with a diameter of 1.25 mm were loaded into a 200 ml glass bottle and dispersed for 6 hours using a paint shaker manufactured by Red Devil Inc. Next, the zirconia beads were removed from the dispersion to obtain a pigment dispersion.

Next, the pigment dispersion and the following raw materials were stirred and mixed for 30 minutes using a high-speed mixer to obtain a mixture.

- Obtained pigment dispersion: 12.5 parts
- Styrene-acrylic acid copolymer (manufactured by BASF Japan Ltd., Joncryl 60): 3.3 parts
- Surfactant (manufactured by Kao Corporation, Emulgen 420): 2.0 parts
- Ion-exchanged water: 64.9 parts

Next, diethylene glycol monobutyl ether was appropriately added to the mixture to adjust the viscosity at 25°C to 2.5 mPa·s (25°C) and the surface tension to 40 mN/m, then filtered using a 1.0 μm membrane filter, and further filtered using a 0.45 μm membrane filter to obtain an aqueous IJ ink c-1.

(Examples c-2 to c-70, Comparative Examples c-1 to c-24) Preparation of aqueous IJ inks c-2 to c-70 and c-101 to c-124

Aqueous IJ inks c-2 to c-70 and c-101 to c-124 were obtained in the same manner as Example C-1, except that the coloring agent 1 of Example c-1 was changed as shown in Table 5-1, Table 5-2, and Table 5-3.

(C2) Evaluation of aqueous IJ ink

<Coloring property>

The prepared aqueous IJ ink was filled into a cartridge of a printer PX-105 (piezo-type inkjet printer) manufactured by Seiko Epson Co., Ltd., and printing was performed on A4 size plain paper. The printed matter was visually observed and evaluated according to the following criteria. The standard printed matter is as described above. The results are shown in Table 5-1, Table 5-2, and Table 5-3.

(Evaluation criteria for coloring property)

4: Coloring property is extremely higher than the standard printed matter
3: Coloring property is higher than the standard printed matter
2: Coloring property is slightly higher than the standard printed matter
1: Coloring property is equivalent to the standard printed matter

<Brightness>

The printed matter used in the evaluation of coloring property was visually observed and evaluated according to the following criteria. The standard printed matter is as described above. The results are shown in Table 5-1, Table 5-2, and Table 5-3.

(Evaluation criteria for brightness)

4: Brightness is extremely higher than the standard printed matter
3: Brightness is higher than the standard printed matter
2: Brightness is slightly higher than the standard printed matter
1: Brightness is equivalent to the standard printed matter

<Transparency>

The prepared aqueous IJ ink was filled into a cartridge of a printer HG-5130 manufactured by Seiko Epson Co., Ltd., and printing was performed on a polyethylene terephthalate film attached to A4 plain paper. The printed matter was placed on black drawing paper, and the degree of transmission of the black drawing paper was visually observed and evaluated according to the following criteria. The standard printed matter is as described above. The results are shown in Table 5-1, Table 5-2, and Table 5-3.

(Evaluation criteria for transparency)

4: Transparency is extremely higher than the standard printed matter
3: Transparency is higher than the standard printed matter
2: Transparency is slightly higher than the standard printed matter
1: Transparency is equivalent to the standard printed matter

In addition, the base material was changed from A4 size plain paper to a coated paper, a polypropylene film (OPP film), and an aluminum foil, the coloring property was evaluated, and similar results were obtained. In the case where the base material was not paper, the base material was attached to A4 plain paper for use.

In addition, using MAXIFY MB5430 (thermal inkjet printer) manufactured by Canon Inc., a tank filled with the prepared aqueous IJ ink was mounted as magenta ink, the coloring property was evaluated, and similar results were obtained.

<Viscosity stability>

For each aqueous IJ ink, an initial viscosity at 25°C was measured using an E-type viscometer ("ELD type viscometer" manufactured by Toki Sangyo Co., Ltd.). Similarly, a viscosity was measured after accelerated aging at 70°C for 2 weeks. Using the respective measured values, a viscosity increase rate with respect to the initial viscosity was calculated as one indicator of viscosity stability, and evaluated according to the following criteria. The results are shown in Table 5-1, Table 5-2, and Table 5-3. The smaller the viscosity increase rate, the more excellent the viscosity stability is considered to be, and evaluations of "3" and "2" according to the evaluation criteria below are at a practically usable level.

(Evaluation criteria for viscosity stability)

3: Viscosity increase rate is less than 15%
2: Viscosity increase rate is 15% or more and less than 30%
1: Viscosity increase rate is 30% or more

[Table 5-1]

| Table 5-1 | Coloring agent | Aqueous inkjet ink | Compound (A) C.I. Pigment | Coloring property | Brightness | Transparency | Viscosity stability |
|---|---|---|---|---|---|---|---|
| Example C-1 | 1 | c-1 | Red269 | 3 | 3 | 2 | 2 |
| Example C-2 | 2 | c-2 | Red150 | 3 | 3 | 2 | 2 |
| Example C-3 | 3 | c-3 | Red31 | 3 | 3 | 2 | 2 |
| Example C-4 | 4 | c-4 | Red17 | 3 | 3 | 2 | 2 |
| Example C-5 | 5 | c-5 | Red22 | 3 | 3 | 2 | 2 |
| Example C-6 | 6 | c-6 | Red23 | 3 | 3 | 2 | 2 |
| Example C-7 | 7 | c-7 | Red32 | 3 | 3 | 2 | 2 |
| Example C-8 | 8 | c-8 | Red 114 | 3 | 3 | 2 | 2 |
| Example C-9 | 9 | c-9 | Red 146 | 3 | 3 | 2 | 2 |
| Example C-10 | 10 | c-10 | Red 147 | 3 | 3 | 2 | 2 |
| Example C-11 | 11 | c-11 | Red176 | 3 | 3 | 2 | 2 |
| Example C-12 | 12 | c-12 | Red185 | 3 | 3 | 2 | 2 |
| Example C-13 | 13 | c-13 | Red245 | 3 | 3 | 2 | 2 |
| Example C-14 | 14 | c-14 | Red258 | 3 | 3 | 2 | 2 |
| Example C-15 | 15 | c-15 | Red268 | 3 | 3 | 2 | 2 |
| Example C-16 | 16 | c-16 | Violet32 | 3 | 3 | 2 | 2 |
| Example C-17 | 17 | c-17 | Violet50 | 3 | 3 | 2 | 2 |
| Example C-18 | 18 | c-18 | Red269 | 4 | 3 | 3 | 3 |
| Example C-19 | 19 | c-19 | Red150 | 4 | 3 | 3 | 3 |
| Example C-20 | 20 | c-20 | Red31 | 4 | 3 | 3 | 3 |
| Example C-21 | 21 | c-21 | Red17 | 4 | 3 | 3 | 3 |
| Example C-22 | 22 | c-22 | Red22 | 4 | 3 | 3 | 3 |

(continued)

| Table 5-1 | Coloring agent | Aqueous inkjet ink | Compound (A) C.I. Pigment | Coloring property | Brightness | Transparency | Viscosity stability |
|---|---|---|---|---|---|---|---|
| Example C-23 | 23 | c-23 | Red23 | 4 | 3 | 3 | 3 |
| Example C-24 | 24 | c-24 | Red32 | 4 | 3 | 3 | 3 |
| Example C-25 | 25 | c-25 | Red 114 | 4 | 3 | 3 | 3 |
| Example C-26 | 26 | c-26 | Red 146 | 4 | 3 | 3 | 3 |
| Example C-27 | 27 | c-27 | Red 147 | 4 | 3 | 3 | 3 |
| Example C-28 | 28 | c-28 | Red176 | 4 | 3 | 3 | 3 |
| Example C-29 | 29 | c-29 | Red185 | 4 | 3 | 3 | 3 |
| Example C-30 | 30 | c-30 | Red245 | 4 | 3 | 3 | 3 |
| Example C-31 | 31 | c-31 | Red258 | 4 | 3 | 3 | 3 |
| Example C-32 | 32 | c-32 | Red268 | 4 | 3 | 3 | 3 |
| Example C-33 | 33 | c-33 | Violet32 | 4 | 3 | 3 | 3 |
| Example C-34 | 34 | c-34 | Violet50 | 4 | 3 | 3 | 3 |
| Example C-35 | 35 | c-35 | Red269+Red150 | 4 | 4 | 4 | 3 |
| Example C-36 | 36 | c-36 | Red269+Red150 | 4 | 4 | 4 | 3 |
| Example C-37 | 37 | c-37 | Red269+Red150 | 4 | 4 | 4 | 3 |
| Example C-38 | 38 | c-38 | Red31+Red150 | 4 | 4 | 4 | 3 |
| Example C-39 | 39 | c-39 | Red31+Red150 | 4 | 4 | 4 | 3 |
| Example C-40 | 40 | c-40 | Red146+Red147 | 4 | 4 | 4 | 3 |

[Table 5-2]

| Table 5-2 | Coloring agent | Aqueous inkjet ink | Compound (A) C.I. Pigment | Coloring property | Brightness | Transparency | Viscosity stability |
|---|---|---|---|---|---|---|---|
| Example C-41 | 41 | c-41 | Red269 | 4 | 3 | 4 | 3 |
| Example C-42 | 42 | c-42 | Red269 | 4 | 4 | 4 | 3 |
| Example C-43 | 43 | c-43 | Red269 | 4 | 4 | 4 | 3 |

(continued)

| Table 5-2 | Coloring agent | Aqueous inkjet ink | Compound (A) C.I. Pigment | Coloring property | Brightness | Transparency | Viscosity stability |
|---|---|---|---|---|---|---|---|
| Example C-44 | 44 | c-44 | Red269 | 4 | 4 | 4 | 3 |
| Example C-45 | 45 | c-45 | Red269 | 3 | 3 | 3 | 3 |
| Example C-46 | 46 | c-46 | Red269 | 2 | 2 | 4 | 3 |
| Example C-47 | 47 | c-47 | Red269 | 3 | 3 | 4 | 3 |
| Example C-48 | 48 | c-48 | Red150 | 3 | 3 | 4 | 3 |
| Example C-49 | 49 | c-49 | Red31 | 3 | 3 | 4 | 3 |
| Example C-50 | 50 | c-50 | Red32 | 3 | 3 | 4 | 3 |
| Example C-51 | 51 | c-51 | Red 146 | 3 | 3 | 4 | 3 |
| Example C-52 | 52 | c-52 | Red 147 | 3 | 3 | 4 | 3 |
| Example C-53 | 53 | c-53 | Red176 | 3 | 3 | 4 | 3 |
| Example C-54 | 54 | c-54 | Red245 | 3 | 3 | 4 | 3 |
| Example C-55 | 55 | c-55 | Red268 | 3 | 3 | 4 | 3 |
| Example C-56 | 56 | c-56 | Red269 | 2 | 2 | 4 | 2 |
| Comparative Example C-1 | 101 | c-101 | Red269 | std | std | std | 1 |
| Comparative Example C-2 | 102 | c-102 | Red150 | std | std | std | 1 |
| Comparative Example C-3 | 103 | c-103 | Red31 | std | std | std | 1 |
| Comparative Example C-4 | 104 | c-104 | Red17 | std | std | std | 1 |
| Comparative Example C-5 | 105 | c-105 | Red22 | std | std | std | 1 |
| Comparative Example C-6 | 106 | c-106 | Red23 | std | std | std | 1 |
| Comparative Example C-7 | 107 | c-107 | Red32 | std | std | std | 1 |
| Comparative Example C-8 | 108 | c-108 | Red 114 | std | std | std | 1 |
| Comparative Example C-9 | 109 | c-109 | Red 146 | std | std | std | 1 |
| Comparative Example C-10 | 110 | c-110 | Red 147 | std | std | std | 1 |
| Comparative Example C-11 | 111 | c-111 | Red176 | std | std | std | 1 |
| Comparative Example C-12 | 112 | c-112 | Red185 | std | std | std | 1 |
| Comparative Example C-13 | 113 | c-113 | Red245 | std | std | std | 1 |
| Comparative Example C-14 | 114 | c-114 | Red258 | std | std | std | 1 |

(continued)

| Table 5-2 | Coloring agent | Aqueous inkjet ink | Compound (A) C.I. Pigment | Coloring property | Brightness | Transparency | Viscosity stability |
|---|---|---|---|---|---|---|---|
| Comparative Example C-15 | 115 | c-115 | Red268 | std | std | std | 1 |
| Comparative Example C-16 | 116 | c-116 | Violet32 | std | std | std | 1 |
| Comparative Example C-17 | 117 | c-117 | Violet50 | std | std | std | 1 |

[Table 5-3]

| Table 5-3 | Coloring agent | Aqueous inkjet ink | Compound (A) | Coloring property | Brightness | Transparency | Viscosity stability |
|---|---|---|---|---|---|---|---|
| Example C-57 | 57 | c-57 | Compound (A)-1 | 3 | 3 | 3 | 3 |
| Example C-58 | 58 | c-58 | Compound (A)-2 | 3 | 3 | 3 | 3 |
| Example C-59 | 59 | c-59 | Compound (A)-3 | 3 | 3 | 3 | 3 |
| Example C-60 | 60 | c-60 | Compound (A)-4 | 3 | 3 | 3 | 3 |
| Example C-61 | 61 | c-61 | C.I. Pigment Red266 | 3 | 3 | 3 | 3 |
| Example C-62 | 62 | c-62 | Compound (A)-5 | 3 | 3 | 3 | 3 |
| Example C-63 | 63 | c-63 | Compound (A)-6 | 3 | 3 | 3 | 3 |
| Example C-64 | 64 | c-64 | Compound (A)-1 | 4 | 3 | 4 | 3 |
| Example C-65 | 65 | c-65 | Compound (A)-2 | 4 | 3 | 4 | 3 |
| Example C-66 | 66 | c-66 | Compound (A)-3 | 4 | 3 | 4 | 3 |
| Example C-67 | 67 | c-67 | Compound (A)-4 | 4 | 3 | 4 | 3 |
| Example C-68 | 68 | c-68 | C.I. Pigment Red266 | 4 | 3 | 4 | 3 |
| Example C-69 | 69 | c-69 | Compound (A)-5 | 4 | 3 | 4 | 3 |
| Example C-70 | 70 | c-70 | Compound (A)-6 | 4 | 3 | 4 | 3 |
| Comparative Example C-18 | 118 | c-118 | Compound (A)-1 | std | std | std | 1 |
| Comparative Example C-19 | 119 | c-119 | Compound (A)-2 | std | std | std | 1 |
| Comparative Example C-20 | 120 | c-120 | Compound (A)-3 | std | std | std | 1 |

(continued)

| Table 5-3 | Coloring agent | Aqueous inkjet ink | Compound (A) | Coloring property | Brightness | Transparency | Viscosity stability |
|---|---|---|---|---|---|---|---|
| Comparative Example C-21 | 121 | c-121 | Compound (A)-4 | std | std | std | 1 |
| Comparative Example C-22 | 122 | c-122 | C.I. Pigment Red266 | std | std | std | 1 |
| Comparative Example C-23 | 123 | c-123 | Compound (A)-5 | std | std | std | 1 |
| Comparative Example C-24 | 124 | c-124 | Compound (A)-6 | std | std | std | 1 |

<D> Gravure ink (D1) Preparation of gravure ink

First, a measurement method for resin will be described below.

(Hydroxyl value)

Obtained according to JIS K0070.

(Acid value)

Obtained according to JIS K0070.

(Amine value)

An amine value was obtained according to the following method based on JIS K0070, expressed as a mg number of potassium hydroxide equivalent to the hydrochloric acid required to neutralize the amino groups contained in 1g of resin. A sample of 0.5 to 2g was precisely weighed (sample non-volatile content: S g). To the precisely weighed sample, 50 mL of a mixed solution of methanol/methyl ethyl ketone = 60/40 (mass ratio) was added and dissolved.

Bromophenol blue was added as an indicator to the obtained solution, and the obtained solution was titrated with 0.2 mol/L ethanolic hydrochloric acid solution (titer: f). A point at which the solution color changed from green to yellow was taken as an end point, and using the titration volume (A mL) at this time, the amine value was obtained according to the following formula.

$$\text{Amine value} = (A \times f \times 0.2 \times 56.108)/S\ [\text{mgKOH/g}]$$

(Weight average molecular weight)

A weight average molecular weight was obtained as a converted molecular weight using polystyrene as a standard substance, by measuring a molecular weight distribution using a GPC (gel permeation chromatography) apparatus (HLC-8220 manufactured by Tosoh Corporation). Measurement conditions are shown below.

Column: The following columns were connected in series for use.
Guard column HXL-H manufactured by Tosoh Corporation
TSKgel G5000HXL manufactured by Tosoh Corporation
TSKgel G4000HXL manufactured by Tosoh Corporation
TSKgel G3000HXL manufactured by Tosoh Corporation
TSKgel G2000HXL manufactured by Tosoh Corporation
Detector: RI (differential refractometer)
Measurement conditions: column temperature 40°C
Eluent: tetrahydrofuran
Flow rate: 1.0 mL/min

(Glass transition temperature)

A glass transition temperature (Tg) was obtained by DSC (differential scanning calorimetry). The measurement apparatus was DSC8231 manufactured by Rigaku Corporation, with a measurement temperature range of -70 to 250°C and a heating rate of 10°C/min. A midpoint between an endothermic onset temperature and an end temperature based on glass transition in the DSC curve was taken as the glass transition temperature.

(Synthesis Example 1)

[Polyurethane resin PU1]

200 parts of polypropylene glycol having a number average molecular weight (Mn) of 700 (hereinafter "PPG700"), 127 parts of isophorone diisocyanate (hereinafter "IPDI"), and 81.8 parts of ethyl acetate were reacted at 80°C for 4 hours under a nitrogen stream to obtain a resin solution of terminal isocyanate urethane prepolymer. Next, to a mixture of 49.5 parts of isophorone diamine (hereinafter "IPDA"), 3 parts of 2-ethanolamine, and 803.9 parts of a mixed solvent of ethyl acetate/isopropanol (hereinafter "IPA") = 50/50 (mass ratio), the obtained resin solution of terminal isocyanate urethane prepolymer was gradually added at 40°C, and then reacted at 80°C for 1 hour to obtain a polyurethane resin solution PU1 with a non-volatile content of 30%, an amine value of 3.5 mgKOH/g, a hydroxyl value of 7.3 mgKOH/g, and a weight average molecular weight of 40,000. The glass transition temperature was -32°C.

(Example D-1) Preparation of gravure ink d-1

As a resin, 30 parts of the polyurethane resin solution PU1 (non-volatile content 30%), 0.8 parts of a polyethylene wax (A-C400A manufactured by Honeywell) as a hydrocarbon-based wax in terms of non-volatile content, 0.5 parts of a chlorinated polypropylene resin (370M manufactured by Nippon Paper Industries Co., Ltd., chlorine content 30%, non-volatile content 50%) in terms of non-volatile content, 10 parts of the coloring agent 1, and 58.7 parts of a solution of methyl ethyl ketone (hereinafter "MEK")/n-propyl acetate (hereinafter "NPAC")/IPA = 40/40/20 (mass ratio) were mixed and dispersed in an Eiger mill for 15 minutes to obtain a gravure ink d-1.

(Examples D-2 to D-70, Comparative Examples D-1 to D-24) Preparation of gravure inks d-2 to d-70 and d-101 to d-124

Gravure inks d-2 to d-70 and d-101 to d-124 were obtained in the same manner as Example D-1, except that the coloring agent 1 in Example D-1 was changed as shown in Table 6-1, Table 6-2, and Table 6-3.

(D2) Production of gravure ink printed matter

The gravure ink obtained above was diluted using a mixed solvent composed of MEK/NPAC/IPA = 40/40/20 (mass ratio) such that a viscosity became 16 seconds (25°C, Zahn Cup No. 3), and printing was performed at a printing speed of 80 m/min on the following base materials (corona discharge treated surface in the case of OPP) using a gravure printing machine equipped with a Helio 175 line gradation plate (plate type compressed gradation 100% to 3%) to obtain an OPP printed matter and a CPP printed matter. (Base material) • OPP: Biaxially oriented polypropylene (OPP) film with single-side corona discharge treatment (FOR thickness 25 μm manufactured by Futamura Chemical Co., Ltd.) • CPP: Non-oriented polypropylene (CPP) film without corona treatment (CP-S thickness 30 μm manufactured by Mitsui Chemicals Tohcello, Inc.)

(D3) Evaluation of gravure ink and printed matter

<Over-time stability of ink>

Each of the prepared gravure inks was placed in a sealed container and stored at 40°C for 10 days. Afterward, a viscosity was measured to evaluate a viscosity change from before storage. The viscosity measurement was performed at 25°C using the efflux time in seconds of Zahn Cup No. 4. The results are shown in Table 6-1, Table 6-2, and Table 6-3. The viscosity of all inks before storage using a B-type viscometer was within a range of 40 to 500 cps (25°C). Evaluation results of "4", "3", and "2" according to the following evaluation criteria are at a practically usable level.

(Evaluation criteria)

4: Viscosity change is less than 2 seconds (extremely good)
3: Viscosity change is 2 seconds or more and less than 5 seconds (good)
2: Viscosity change is 5 seconds or more and less than 10 seconds (practically usable)
1: Viscosity change is 10 seconds or more (poor)

<Brightness>

The obtained OPP printed matter was visually observed and evaluated according to the following criteria. The results are shown in Table 6-1, Table 6-2, and Table 6-3. Details of the standard printed matter (std) are as described above.

(Evaluation criteria for brightness)

4: Brightness is extremely higher than the standard printed matter
3: Brightness is higher than the standard printed matter
2: Brightness is slightly higher than the standard printed matter
1: Brightness is equivalent to the standard printed matter

<Transparency>

The obtained OPP printed matter was visually observed and evaluated according to the following criteria. The results are shown in Table 6-1, Table 6-2, and Table 6-3. Details of the standard printed matter (std) are as described above.

(Evaluation criteria for transparency)

4: Transparency is extremely higher than the standard printed matter
3: Transparency is higher than the standard printed matter
3: Transparency is slightly higher than the standard printed matter
1: Transparency is equivalent to the standard printed matter

<Glossiness>

The obtained OPP printed matter was visually observed and evaluated according to the following criteria. The results are shown in Table 6-1, Table 6-2, and Table 6-3. Details of the standard printed matter (std) are as described above.

(Evaluation criteria for glossiness)

4: Glossiness is extremely higher than the standard printed matter
3: Glossiness is higher than the standard printed matter
2: Glossiness is equivalent to the standard printed matter
1: Glossiness is lower than the standard printed matter

[Table 6-1]

| Table 6-1 | Coloring agent | Gravure ink | Compound (A) C.I. Pigment | Viscosity stability | Brightness | Transparency | Gloss |
|---|---|---|---|---|---|---|---|
| Example D-1 | 1 | d-1 | Red269 | 3 | 3 | 2 | 3 |
| Example D-2 | 2 | d-2 | Red150 | 3 | 3 | 2 | 3 |
| Example D-3 | 3 | d-3 | Red31 | 3 | 3 | 2 | 3 |
| Example D-4 | 4 | d-4 | Red17 | 3 | 3 | 2 | 2 |
| Example D-5 | 5 | d-5 | Red22 | 3 | 3 | 2 | 2 |
| Example D-6 | 6 | d-6 | Red23 | 3 | 3 | 2 | 2 |
| Example D-7 | 7 | d-7 | Red32 | 3 | 3 | 2 | 3 |
| Example D-8 | 8 | d-8 | Red114 | 3 | 3 | 2 | 2 |
| Example D-9 | 9 | d-9 | Red146 | 3 | 3 | 2 | 3 |
| Example D-10 | 10 | d-10 | Red147 | 3 | 3 | 2 | 3 |
| Example D-11 | 11 | d-11 | Red176 | 3 | 3 | 2 | 3 |
| Example D-12 | 12 | d-12 | Red185 | 3 | 3 | 2 | 2 |
| Example D-13 | 13 | d-13 | Red245 | 3 | 3 | 2 | 2 |
| Example D-14 | 14 | d-14 | Red258 | 3 | 3 | 2 | 2 |
| Example D-15 | 15 | d-15 | Red268 | 3 | 3 | 2 | 2 |
| Example D-16 | 16 | d-16 | Violet32 | 3 | 3 | 2 | 2 |
| Example D-17 | 17 | d-17 | Violet50 | 3 | 3 | 2 | 2 |
| Example D-18 | 18 | d-18 | Red269 | 3 | 3 | 3 | 4 |
| Example D-19 | 19 | d-19 | Red150 | 3 | 3 | 3 | 4 |
| Example D-20 | 20 | d-20 | Red31 | 3 | 3 | 3 | 4 |
| Example D-21 | 21 | d-21 | Red17 | 3 | 3 | 3 | 3 |
| Example D-22 | 22 | d-22 | Red22 | 3 | 3 | 3 | 3 |

(continued)

| Table 6-1 | Coloring agent | Gravure ink | Compound (A) C.I. Pigment | Viscosity stability | Brightness | Transparency | Gloss |
|---|---|---|---|---|---|---|---|
| Example D-23 | 23 | d-23 | Red23 | 3 | 3 | 3 | 3 |
| Example D-24 | 24 | d-24 | Red32 | 3 | 3 | 3 | 4 |
| Example D-25 | 25 | d-25 | Red114 | 3 | 3 | 3 | 3 |
| Example D-26 | 26 | d-26 | Red146 | 3 | 3 | 3 | 4 |
| Example D-27 | 27 | d-27 | Red147 | 3 | 3 | 3 | 4 |
| Example D-28 | 28 | d-28 | Red176 | 3 | 3 | 3 | 4 |
| Example D-29 | 29 | d-29 | Red185 | 3 | 3 | 3 | 3 |
| Example D-30 | 30 | d-30 | Red245 | 3 | 3 | 3 | 3 |
| Example D-31 | 31 | d-31 | Red258 | 3 | 3 | 3 | 3 |
| Example D-32 | 32 | d-32 | Red268 | 3 | 3 | 3 | 3 |
| Example D-33 | 33 | d-33 | Violet32 | 3 | 3 | 3 | 3 |
| Example D-34 | 34 | d-34 | Violet50 | 3 | 3 | 3 | 3 |
| Example D-35 | 35 | d-35 | Red269+Red150 | 3 | 4 | 4 | 4 |
| Example D-36 | 36 | d-36 | Red269+Red150 | 3 | 4 | 4 | 4 |
| Example D-37 | 37 | d-37 | Red269+Red150 | 3 | 4 | 4 | 4 |
| Example D-38 | 38 | d-38 | Red31+Red150 | 3 | 4 | 4 | 4 |
| Example D-39 | 39 | d-39 | Red31+Red150 | 3 | 4 | 4 | 4 |
| Example D-40 | 40 | d-40 | Red146+Red147 | 3 | 4 | 4 | 4 |

[Table 6-2]

| Table 6-2 | Coloring agent | Gravure ink | Compound (A) C.I. Pigment | Viscosity stability | Brightness | Transparency | Gloss |
|---|---|---|---|---|---|---|---|
| Example D-41 | 41 | d-41 | Red269 | 4 | 3 | 4 | 4 |
| Example D-42 | 42 | d-42 | Red269 | 4 | 4 | 4 | 4 |
| Example D-43 | 43 | d-43 | Red269 | 4 | 4 | 4 | 4 |

(continued)

| Table 6-2 | Coloring agent | Gravure ink | Compound (A) C.I. Pigment | Viscosity stability | Brightness | Transparency | Gloss |
|---|---|---|---|---|---|---|---|
| Example D-44 | 44 | d-44 | Red269 | 4 | 4 | 4 | 4 |
| Example D-45 | 45 | d-45 | Red269 | 4 | 3 | 3 | 4 |
| Example D-46 | 46 | d-46 | Red269 | 2 | 2 | 4 | 4 |
| Example D-47 | 47 | d-47 | Red269 | 4 | 3 | 4 | 4 |
| Example D-48 | 48 | d-48 | Red150 | 4 | 3 | 4 | 4 |
| Example D-49 | 49 | d-49 | Red31 | 4 | 3 | 4 | 4 |
| Example D-50 | 50 | d-50 | Red32 | 4 | 3 | 4 | 4 |
| Example D-51 | 51 | d-51 | Red146 | 4 | 3 | 4 | 4 |
| Example D-52 | 52 | d-52 | Red147 | 4 | 3 | 4 | 4 |
| Example D-53 | 53 | d-53 | Red176 | 4 | 3 | 4 | 4 |
| Example D-54 | 54 | d-54 | Red245 | 4 | 3 | 4 | 4 |
| Example D-55 | 55 | d-55 | Red268 | 4 | 3 | 4 | 4 |
| Example D-56 | 56 | d-56 | Red269 | 3 | 2 | 4 | 4 |
| Comparative Example D-1 | 101 | d-101 | Red269 | 1 | std | std | std |
| Comparative Example D-2 | 102 | d-102 | Red150 | 1 | std | std | 2 |
| Comparative Example D-3 | 103 | d-103 | Red31 | 1 | std | std | 2 |
| Comparative Example D-4 | 104 | d-104 | Red17 | 1 | std | std | 1 |
| Comparative Example D-5 | 105 | d-105 | Red22 | 1 | std | std | 1 |
| Comparative Example D-6 | 106 | d-106 | Red23 | 1 | std | std | 1 |
| Comparative Example D-7 | 107 | d-107 | Red32 | 1 | std | std | 2 |
| Comparative Example D-8 | 108 | d-108 | Red114 | 1 | std | std | 1 |
| Comparative Example D-9 | 109 | d-109 | Red146 | 1 | std | std | 2 |
| Comparative Example D-10 | 110 | d-110 | Red147 | 1 | std | std | 2 |
| Comparative Example D-11 | 111 | d-111 | Red176 | 1 | std | std | 2 |
| Comparative Example D-12 | 112 | d-112 | Red185 | 1 | std | std | 1 |
| Comparative Example D-13 | 113 | d-113 | Red245 | 1 | std | std | 1 |
| Comparative Example D-14 | 114 | d-114 | Red258 | 1 | std | std | 1 |

(continued)

| Table 6-2 | Coloring agent | Gravure ink | Compound (A) C.I. Pigment | Viscosity stability | Brightness | Transparency | Gloss |
|---|---|---|---|---|---|---|---|
| Comparative Example D-15 | 115 | d-115 | Red268 | 1 | std | std | 1 |
| Comparative Example D-16 | 116 | d-116 | Violet32 | 1 | std | std | 1 |
| Comparative Example D-17 | 117 | d-117 | Violet50 | 1 | std | std | 1 |

[Table 6-3]

| Table 6-3 | Coloring agent | Gravure ink | Compound (A) | Viscosity stability | Brightness | Transparency | Gloss |
|---|---|---|---|---|---|---|---|
| Example D-57 | 57 | d-57 | Compound (A)-1 | 3 | 3 | 3 | 2 |
| Example D-58 | 58 | d-58 | Compound (A)-2 | 3 | 3 | 3 | 2 |
| Example D-59 | 59 | d-59 | Compound (A)-3 | 3 | 3 | 3 | 2 |
| Example D-60 | 60 | d-60 | Compound (A)-4 | 3 | 3 | 3 | 2 |
| Example D-61 | 61 | d-61 | C.I. Pigment Red266 | 3 | 3 | 3 | 2 |
| Example D-62 | 62 | d-62 | Compound (A)-5 | 3 | 3 | 3 | 2 |
| Example D-63 | 63 | d-63 | Compound (A)-6 | 3 | 3 | 3 | 2 |
| Example D-64 | 64 | d-64 | Compound (A)-1 | 3 | 3 | 4 | 3 |
| Example D-65 | 65 | d-65 | Compound (A)-2 | 3 | 3 | 4 | 3 |
| Example D-66 | 66 | d-66 | Compound (A)-3 | 3 | 3 | 4 | 3 |
| Example D-67 | 67 | d-67 | Compound (A)-4 | 3 | 3 | 4 | 3 |
| Example D-68 | 68 | d-68 | C.I. Pigment Red266 | 3 | 3 | 4 | 3 |
| Example D-69 | 69 | d-69 | Compound (A)-5 | 3 | 3 | 4 | 3 |
| Example D-70 | 70 | d-70 | Compound (A)-6 | 3 | 3 | 4 | 3 |
| Comparative Example D-18 | 118 | d-118 | Compound (A)-1 | 1 | std | std | 1 |
| Comparative Example D-19 | 119 | d-119 | Compound (A)-2 | 1 | std | std | 1 |
| Comparative Example D-20 | 120 | d-120 | Compound (A)-3 | 1 | std | std | 1 |

(continued)

| Table 6-3 | Coloring agent | Gravure ink | Compound (A) | Viscosity stability | Brightness | Transparency | Gloss |
|---|---|---|---|---|---|---|---|
| Comparative Example D-21 | 121 | d-121 | Compound (A)-4 | 1 | std | std | 1 |
| Comparative Example D-22 | 122 | d-122 | C.I. Pigment Red266 | 1 | std | std | 1 |
| Comparative Example D-23 | 123 | d-123 | Compound (A)-5 | 1 | std | std | 1 |
| Comparative Example D-24 | 124 | d-124 | Compound (A)-6 | 1 | std | std | 1 |

<E> Active energy ray curable flexographic ink

(E1) Preparation of active energy ray curable flexographic ink

(Example E-1) Preparation of active energy ray curable flexographic ink e-1

The following materials were stirred and mixed using a butterfly mixer, and dispersed with a three-roll mill such that a maximum particle diameter became 15 μm or less to obtain an active energy ray curable flexographic ink e-1.

- Coloring agent 1: 18.0 parts
- EBECRYL 225: 8.4 parts (5.0 parts as active ingredient) (10-functional urethane acrylate oligomer)
- 4-Acryloylmorpholine: 15.0 parts (monofunctional monomer)
- EO-modified trimethylolpropane triacrylate: 20.0 parts
- Dipentaerythritol pentaacrylate: 5.0 parts
- Dipentaerythritol hexaacrylate: 16.6 parts
- Irgacure 369: 3.0 parts (photopolymerization initiator)
- Chemrk DEABP: 3.0 parts (photopolymerization initiator)
- SB-PI718: 4.0 parts (photopolymerization initiator)
- Ajisper PB821: 3.0 parts (dispersant)
- T wax compound: 4.0 parts (wax)

Details of the materials used are as follows.

[Acrylate oligomer]

- EBECRYL 225: manufactured by Daicel Ornex Co., Ltd., 10-functional aliphatic urethane acrylate oligomer, Mw 1,200, active ingredient 60 mass%

[Polymerization initiator]

- Irgacure 369: manufactured by BASF, 2-benzyl-2-(dimethylamino)-1-(4-morpholinophenyl)-1-butanone
- Chemrk DEABP: manufactured by Sort, 4,4'-bis(diethylamino)benzophenone
- SB-PI718: manufactured by Sort, 2,4,6-trimethylbenzoyl-diphenylphosphine oxide

[Dispersant]

- Ajisper PB821: manufactured by Ajinomoto Fine-Techno Co., Inc., comb-type dispersant containing basic functional groups

[Wax]

- T wax compound: manufactured by Toshin Yushi Co., Ltd., polyethylene wax

(Examples e-2 to e-70, Comparative Examples e-1 to e-24) Preparation of active energy ray curable flexographic inks e-2 to e-70 and e-101 to e-124

Active energy ray curable flexographic inks e-2 to e-70 and e-101 to e-124 were obtained in the same manner as Example E-1, except that the coloring agent 1 of Example E-1 was changed as shown in Table 7-1, Table 7-2, and Table 7-3.

(E2) Evaluation of printed matter and printing evaluation

Using an anilox roller with a line count of 800 lpi and a cell volume of 3.72 $cm^3/m^2$ and a flexiproof machine on a coated paper, after printing the ink, curing was performed with an air-cooled mercury lamp (conditions of output 160 $W/cm^2$) at a conveyor speed of 50 m/min to obtain a printed matter for evaluation.

<Coloring property>

The printed matter was visually observed and evaluated according to the following criteria. The results are shown in Table 7-1, Table 7-2, and Table 7-3. Details of the standard printed matter (std) are as described above.

(Evaluation criteria for coloring property)

4: Coloring property is extremely higher than the standard printed matter
3: Coloring property is higher than the standard printed matter
2: Coloring property is slightly higher than the standard printed matter
1: Coloring property is equivalent to the standard printed matter

<Brightness>

The printed matter was visually observed and evaluated according to the following criteria. The results are shown in Table 7-1, Table 7-2, and Table 7-3. Details of the standard printed matter (std) are as described above.

(Evaluation criteria for brightness)

4: Brightness is extremely higher than the standard printed matter
3: Brightness is higher than the standard printed matter
2: Brightness is slightly higher than the standard printed matter
1: Brightness is equivalent to the standard printed matter

• Printing evaluation on film

Similarly, the ink was printed and cured on a corona-treated oriented polypropylene (OPP) film (Pylen P2161 manufactured by Toyobo Co., Ltd., thickness 40 μm) to obtain a printed film (printed matter) for evaluation.

<Transparency>

The obtained OPP printed matter was visually observed and evaluated according to the following criteria. The results are shown in Table 7-1, Table 7-2, and Table 7-3. Details of the standard printed matter (std) are as described above.

(Evaluation criteria)

4: Transparency is extremely higher than the standard printed matter
3: Transparency is higher than the standard printed matter
2: Transparency is slightly higher than the standard printed matter

1: Transparency is equivalent to the standard printed matter

<Storage stability>

A storage test was performed on 200 g of each ink in a metal can container under 25°C conditions, and the state of the ink after 6 months was evaluated. The results are shown in Table 7-1, Table 7-2, and Table 7-3.

(Evaluation criteria)

3: No viscosity increase of the ink is observed
2: Some viscosity increase is observed
1: Gelation or raw material precipitation occurs

[Table 7-1]

| Table 7-1 | Coloring agent | Active energy ray curable flexographic ink | Compound (A) C.I. Pigment | Coloring property | Brightness | Transparency | Storage stability of ink |
|---|---|---|---|---|---|---|---|
| Example E-1 | 1 | e-1 | Red269 | 3 | 3 | 2 | 2 |
| Example E-2 | 2 | e-2 | Red150 | 3 | 3 | 2 | 2 |
| Example E-3 | 3 | e-3 | Red31 | 3 | 3 | 2 | 2 |
| Example E-4 | 4 | e-4 | Red17 | 3 | 3 | 2 | 2 |
| Example E-5 | 5 | e-5 | Red22 | 3 | 3 | 2 | 2 |
| Example E-6 | 6 | e-6 | Red23 | 3 | 3 | 2 | 2 |
| Example E-7 | 7 | e-7 | Red32 | 3 | 3 | 2 | 2 |
| Example E-8 | 8 | e-8 | Red 114 | 3 | 3 | 2 | 2 |
| Example E-9 | 9 | e-9 | Red 146 | 3 | 3 | 2 | 2 |
| Example E-10 | 10 | e-10 | Red 147 | 3 | 3 | 2 | 2 |
| Example E-11 | 11 | e-11 | Red176 | 3 | 3 | 2 | 2 |
| Example E-12 | 12 | e-12 | Red185 | 3 | 3 | 2 | 2 |
| Example E-13 | 13 | e-13 | Red245 | 3 | 3 | 2 | 2 |
| Example E-14 | 14 | e-14 | Red258 | 3 | 3 | 2 | 2 |

(continued)

| Table 7-1 | Coloring agent | Active energy ray curable flexographic ink | Compound (A) C.I. Pigment | Coloring property | Brightness | Transparency | Storage stability of ink |
|---|---|---|---|---|---|---|---|
| Example E-15 | 15 | e-15 | Red268 | 3 | 3 | 2 | 2 |
| Example E-16 | 16 | e-16 | Violet32 | 3 | 3 | 2 | 2 |
| Example E-17 | 17 | e-17 | Violet50 | 3 | 3 | 2 | 2 |
| Example E-18 | 18 | e-18 | Red269 | 4 | 3 | 3 | 3 |
| Example E-19 | 19 | e-19 | Red150 | 4 | 3 | 3 | 3 |
| Example E-20 | 20 | e-20 | Red31 | 4 | 3 | 3 | 3 |
| Example E-21 | 21 | e-21 | Red17 | 4 | 3 | 3 | 3 |
| Example E-22 | 22 | e-22 | Red22 | 4 | 3 | 3 | 3 |
| Example E-23 | 23 | e-23 | Red23 | 4 | 3 | 3 | 3 |
| Example E-24 | 24 | e-24 | Red32 | 4 | 3 | 3 | 3 |
| Example E-25 | 25 | e-25 | Red 114 | 4 | 3 | 3 | 3 |
| Example E-26 | 26 | e-26 | Red 146 | 4 | 3 | 3 | 3 |
| Example E-27 | 27 | e-27 | Red 147 | 4 | 3 | 3 | 3 |
| Example E-28 | 28 | e-28 | Red176 | 4 | 3 | 3 | 3 |
| Example E-29 | 29 | e-29 | Red185 | 4 | 3 | 3 | 3 |
| Example E-30 | 30 | e-30 | Red245 | 4 | 3 | 3 | 3 |
| Example E-31 | 31 | e-31 | Red258 | 4 | 3 | 3 | 3 |
| Example E-32 | 32 | e-32 | Red268 | 4 | 3 | 3 | 3 |
| Example E-33 | 33 | e-33 | Violet32 | 4 | 3 | 3 | 3 |
| Example E-34 | 34 | e-34 | Violet50 | 4 | 3 | 3 | 3 |
| Example E-35 | 35 | e-35 | Red269+Red150 | 4 | 4 | 4 | 3 |

(continued)

| Table 7-1 | Coloring agent | Active energy ray curable flexographic ink | Compound (A) C.I. Pigment | Coloring property | Brightness | Transparency | Storage stability of ink |
|---|---|---|---|---|---|---|---|
| Example E-36 | 36 | e-36 | Red269+Red150 | 4 | 4 | 4 | 3 |
| Example E-37 | 37 | e-37 | Red269+Red150 | 4 | 4 | 4 | 3 |
| Example E-38 | 38 | e-38 | Red31+Red150 | 4 | 4 | 4 | 3 |
| Example E-39 | 39 | e-39 | Red31+Red150 | 4 | 4 | 4 | 3 |
| Example E-40 | 40 | e-40 | Red146+Red147 | 4 | 4 | 4 | 3 |

[Table 7-2]

| Table 7-2 | Coloring agent | Active energy ray curable flexographic ink | Compound (A) C.I. Pigment | Coloring property | Brightness | Transparency | Storage stability of ink |
|---|---|---|---|---|---|---|---|
| Example E-41 | 41 | e-41 | Red269 | 4 | 3 | 4 | 3 |
| Example E-42 | 42 | e-42 | Red269 | 4 | 4 | 4 | 3 |
| Example E-43 | 43 | e-43 | Red269 | 4 | 4 | 4 | 3 |
| Example E-44 | 44 | e-44 | Red269 | 4 | 4 | 4 | 3 |
| Example E-45 | 45 | e-45 | Red269 | 3 | 3 | 3 | 3 |
| Example E-46 | 46 | e-46 | Red269 | 2 | 2 | 4 | 1 |
| Example E-47 | 47 | e-47 | Red269 | 3 | 3 | 4 | 2 |
| Example E-48 | 48 | e-48 | Red150 | 3 | 3 | 4 | 2 |
| Example E-49 | 49 | e-49 | Red31 | 3 | 3 | 4 | 2 |
| Example E-50 | 50 | e-50 | Red32 | 3 | 3 | 4 | 2 |
| Example E-51 | 51 | e-51 | Red146 | 3 | 3 | 4 | 2 |
| Example E-52 | 52 | e-52 | Red147 | 3 | 3 | 4 | 2 |
| Example E-53 | 53 | e-53 | Red176 | 3 | 3 | 4 | 2 |

(continued)

| Table 7-2 | Coloring agent | Active energy ray curable flexographic ink | Compound (A) C.I. Pigment | Coloring property | Brightness | Transparency | Storage stability of ink |
|---|---|---|---|---|---|---|---|
| Example E-54 | 54 | e-54 | Red245 | 3 | 3 | 4 | 2 |
| Example E-55 | 55 | e-55 | Red268 | 3 | 3 | 4 | 2 |
| Example E-56 | 56 | e-56 | Red269 | 2 | 2 | 4 | 2 |
| Comparative Example E-1 | 101 | e-101 | Red269 | std | std | std | 1 |
| Comparative Example E-2 | 102 | e-102 | Red150 | std | std | std | 1 |
| Comparative Example E-3 | 103 | e-103 | Red31 | std | std | std | 1 |
| Comparative Example E-4 | 104 | e-104 | Red17 | std | std | std | 1 |
| Comparative Example E-5 | 105 | e-105 | Red22 | std | std | std | 1 |
| Comparative Example E-6 | 106 | e-106 | Red23 | std | std | std | 1 |
| Comparative Example E-7 | 107 | e-107 | Red32 | std | std | std | 1 |
| Comparative Example E-8 | 108 | e-108 | Red114 | std | std | std | 1 |
| Comparative Example E-9 | 109 | e-109 | Red146 | std | std | std | 1 |
| Comparative Example E-10 | 110 | e-110 | Red147 | std | std | std | 1 |
| Comparative Example E-11 | 111 | e-111 | Red176 | std | std | std | 1 |
| Comparative Example E-12 | 112 | e-112 | Red185 | std | std | std | 1 |
| Comparative Example E-13 | 113 | e-113 | Red245 | std | std | std | 1 |
| Comparative Example E-14 | 114 | e-114 | Red258 | std | std | std | 1 |
| Comparative Example E-15 | 115 | e-115 | Red268 | std | std | std | 1 |

(continued)

| Table 7-2 | Coloring agent | Active energy ray curable flexographic ink | Compound (A) C.I. Pigment | Coloring property | Brightness | Transparency | Storage stability of ink |
|---|---|---|---|---|---|---|---|
| Comparative Example E-16 | 116 | e-116 | Violet32 | std | std | std | 1 |
| Comparative Example E-17 | 117 | e-117 | Violet50 | std | std | std | 1 |

[Table 7-3]

| Table 7-3 | Coloring agent | Active energy ray curable flexographic ink | Compound (A) | Coloring property | Brightness | Transparency | Storage stability of ink |
|---|---|---|---|---|---|---|---|
| Example E-57 | 57 | e-57 | Compound (A)-1 | 3 | 3 | 3 | 2 |
| Example E-58 | 58 | e-58 | Compound (A)-2 | 3 | 3 | 3 | 2 |
| Example E-59 | 59 | e-59 | Compound (A)-3 | 3 | 3 | 3 | 2 |
| Example E-60 | 60 | e-60 | Compound (A)-4 | 3 | 3 | 3 | 2 |
| Example E-61 | 61 | e-61 | C.I. Pigment Red266 | 3 | 3 | 3 | 2 |
| Example E-62 | 62 | e-62 | Compound (A)-5 | 3 | 3 | 3 | 2 |
| Example E-63 | 63 | e-63 | Compound (A)-6 | 3 | 3 | 3 | 2 |
| Example E-64 | 64 | e-64 | Compound (A)-1 | 4 | 3 | 4 | 2 |
| Example E-65 | 65 | e-65 | Compound (A)-2 | 4 | 3 | 4 | 2 |
| Example E-66 | 66 | e-66 | Compound (A)-3 | 4 | 3 | 4 | 2 |
| Example E-67 | 67 | e-67 | Compound (A)-4 | 4 | 3 | 4 | 2 |
| Example E-68 | 68 | e-68 | C.I. Pigment Red266 | 4 | 3 | 4 | 2 |
| Example E-69 | 69 | e-69 | Compound (A)-5 | 4 | 3 | 4 | 2 |
| Example E-70 | 70 | e-70 | Compound (A)-6 | 4 | 3 | 4 | 2 |

(continued)

| Table 7-3 | Coloring agent | Active energy ray curable flexographic ink | Compound (A) | Coloring property | Brightness | Transparency | Storage stability of ink |
|---|---|---|---|---|---|---|---|
| Comparative Example E-18 | 118 | e-118 | Compound (A)-1 | std | std | std | 1 |
| Comparative Example E-19 | 119 | e-119 | Compound (A)-2 | std | std | std | 1 |
| Comparative Example E-20 | 120 | e-120 | Compound (A)-3 | std | std | std | 1 |
| Comparative Example E-21 | 121 | e-121 | Compound (A)-4 | std | std | std | 1 |
| Comparative Example E-22 | 122 | e-122 | C.I. Pigment Red266 | std | std | std | 1 |
| Comparative Example E-23 | 123 | e-123 | Compound (A)-5 | std | std | std | 1 |
| Comparative Example E-24 | 124 | e-124 | Compound (A)-6 | std | std | std | 1 |

<F> Active energy ray curable offset ink

(F1) Preparation of ink

<Preparation of resin varnish>

Prior to producing the active energy ray curable ink, a resin varnish was produced. The resin varnish was produced by loading diallyl phthalate resin (Daiso DAP A (manufactured by Daiso Co., Ltd.))/ditrimethylolpropane tetraacrylate/hydroquinone at a ratio of 30/69.9/0.1 and thermally dissolving at 100°C under air flow.

<Preparation of ink composition>

(Example F-1) Preparation of active energy ray curable flexographic ink f-1

25.8 parts of the above coloring agent 1, 97.4 parts of the above resin varnish, 21.1 parts of ditrimethylolpropane tetraacrylate, 20 parts of dipentaerythritol hexaacrylate, 6 parts of magnesium carbonate, and 22.4 parts of a photopolymerization initiator were stirred and mixed using a butterfly mixer, and dispersed with a three-roll mill such that the maximum particle diameter became 7.5 μm or less. Thereafter, a tack was adjusted to 7.5 to 8.0 with ditrimethylolpropane tetraacrylate to prepare an active energy ray curable offset ink f-1.

(Examples F-2 to F-70, Comparative Examples F-1 to F-24) Preparation of active energy ray curable offset inks f-2 to f-70 and f-101 to f-124

Active energy ray curable offset inks f-2 to f-70 and f-101 to f-124 were obtained in the same manner as Example F-1, except that the coloring agent 1 of Example F-1 was changed as shown in Table 8-1, Table 8-2, and Table 8-3.

(F2) Various evaluations and printing evaluation

0.4 ml of each obtained active energy ray curable offset ink was applied to an RI tester, spread uniformly, then developed on Maricoat paper (coated paperboard manufactured by Hokuetsu Kishu Paper Co., Ltd.), and ultraviolet irradiation was performed using a metal halide lamp (manufactured by Eye Graphics Co., Ltd.) irradiation device under conditions of an irradiation output 96 W/$cm^2$, an irradiation distance 10mm, and a conveyor speed 50 m/min to obtain a developed color article.

<Coloring property>

The printed matter was visually observed and evaluated according to the following criteria. The results are shown in Table 8-1, Table 8-2, and Table 8-3. Details of the standard printed matter (std) are as described above.

(Evaluation criteria for coloring property)

4: Coloring property is extremely higher than the standard printed matter
3: Coloring property is higher than the standard printed matter
2: Coloring property is slightly higher than the standard printed matter
1: Coloring property is equivalent to the standard printed matter

<Brightness>

The printed matter was visually observed and evaluated according to the following criteria. The results are shown in Table 8-1, Table 8-2, and Table 8-3. Details of the standard printed matter (std) are as described above.

(Evaluation criteria for brightness)

4: Brightness is extremely higher than the standard printed matter
3: Brightness is higher than the standard printed matter
2: Brightness is slightly higher than the standard printed matter
1: Brightness is equivalent to the standard printed matter

• Printing evaluation on film

Similarly, the ink was printed on a corona-treated oriented polypropylene (OPP) film (Pylen P2161 manufactured by Toyobo Co., Ltd., thickness 40 μm) and cured to obtain a printed film for evaluation.

<Transparency>

The obtained OPP printed matter was visually observed and evaluated according to the following criteria. The results are shown in Table 8-1, Table 8-2, and Table 8-3. Details of the standard printed matter (std) are as described above.

(Evaluation criteria for transparency)

4: Transparency is extremely higher than the standard printed matter
3: Transparency is higher than the standard printed matter
2: Transparency is slightly higher than the standard printed matter
1: Transparency is equivalent to the standard printed matter

<Storage stability>

A storage test was performed on 200 g of each ink in a metal can container under 25°C conditions, and the state of

the ink after 6 months was evaluated. The results are shown in Table 8-1, Table 8-2, and Table 8-3.

(Evaluation criteria)

3: No viscosity increase of the ink is observed
2: Some viscosity increase is observed
1: Gelation or raw material precipitation occurs

[Table 8-1]

| Table 8-1 | Coloring agent | Active energy ray curable offset ink | Compound (A) C.I. Pigment | Coloring property | Brightness | Transparency | Storage stability of ink |
|---|---|---|---|---|---|---|---|
| Example F-1 | 1 | f-1 | Red269 | 3 | 3 | 2 | 2 |
| Example F-2 | 2 | f-2 | Red150 | 3 | 3 | 2 | 2 |
| Example F-3 | 3 | f-3 | Red31 | 3 | 3 | 2 | 2 |
| Example F-4 | 4 | f-4 | Red17 | 3 | 3 | 2 | 2 |
| Example F-5 | 5 | f-5 | Red22 | 3 | 3 | 2 | 2 |
| Example F-6 | 6 | f-6 | Red23 | 3 | 3 | 2 | 2 |
| Example F-7 | 7 | f-7 | Red32 | 3 | 3 | 2 | 2 |
| Example F-8 | 8 | f-8 | Red 114 | 3 | 3 | 2 | 2 |
| Example F-9 | 9 | f-9 | Red 146 | 3 | 3 | 2 | 2 |
| Example F-10 | 10 | f-10 | Red 147 | 3 | 3 | 2 | 2 |
| Example F-11 | 11 | f-11 | Red176 | 3 | 3 | 2 | 2 |
| Example F-12 | 12 | f-12 | Red185 | 3 | 3 | 2 | 2 |
| Example F-13 | 13 | f-13 | Red245 | 3 | 3 | 2 | 2 |
| Example F-14 | 14 | f-14 | Red258 | 3 | 3 | 2 | 2 |
| Example F-15 | 15 | f-15 | Red268 | 3 | 3 | 2 | 2 |
| Example F-16 | 16 | f-16 | Violet32 | 3 | 3 | 2 | 2 |
| Example F-17 | 17 | f-17 | Violet50 | 3 | 3 | 2 | 2 |

(continued)

| Table 8-1 | Coloring agent | Active energy ray curable offset ink | Compound (A) C.I. Pigment | Coloring property | Brightness | Transparency | Storage stability of ink |
|---|---|---|---|---|---|---|---|
| Example F-18 | 18 | f-18 | Red269 | 4 | 3 | 3 | 3 |
| Example F-19 | 19 | f-19 | Red150 | 4 | 3 | 3 | 3 |
| Example F-20 | 20 | f-20 | Red31 | 4 | 3 | 3 | 3 |
| Example F-21 | 21 | f-21 | Red17 | 4 | 3 | 3 | 3 |
| Example F-22 | 22 | f-22 | Red22 | 4 | 3 | 3 | 3 |
| Example F-23 | 23 | f-23 | Red23 | 4 | 3 | 3 | 3 |
| Example F-24 | 24 | f-24 | Red32 | 4 | 3 | 3 | 3 |
| Example F-25 | 25 | f-25 | Red 114 | 4 | 3 | 3 | 3 |
| Example F-26 | 26 | f-26 | Red 146 | 4 | 3 | 3 | 3 |
| Example F-27 | 27 | f-27 | Red 147 | 4 | 3 | 3 | 3 |
| Example F-28 | 28 | f-28 | Red176 | 4 | 3 | 3 | 3 |
| Example F-29 | 29 | f-29 | Red185 | 4 | 3 | 3 | 3 |
| Example F-30 | 30 | f-30 | Red245 | 4 | 3 | 3 | 3 |
| Example F-31 | 31 | f-31 | Red258 | 4 | 3 | 3 | 3 |
| Example F-32 | 32 | f-32 | Red268 | 4 | 3 | 3 | 3 |
| Example F-33 | 33 | f-33 | Violet32 | 4 | 3 | 3 | 3 |
| Example F-34 | 34 | f-34 | Violet50 | 4 | 3 | 3 | 3 |
| Example F-35 | 35 | f-35 | Red269+Red150 | 4 | 4 | 4 | 3 |
| Example F-36 | 36 | f-36 | Red269+Red150 | 4 | 4 | 4 | 3 |
| Example F-37 | 37 | f-37 | Red269+Red150 | 4 | 4 | 4 | 3 |
| Example F-38 | 38 | f-38 | Red31+Red150 | 4 | 4 | 4 | 3 |

(continued)

| Table 8-1 | Coloring agent | Active energy ray curable offset ink | Compound (A) C.I. Pigment | Coloring property | Brightness | Transparency | Storage stability of ink |
|---|---|---|---|---|---|---|---|
| Example F-39 | 39 | f-39 | Red31+Red150 | 4 | 4 | 4 | 3 |
| Example F-40 | 40 | f-40 | Red146+Red147 | 4 | 4 | 4 | 3 |

[Table 8-2]

| Table 8-2 | Coloring agent | Active energy ray curable offset ink | Compound (A) C.I. Pigment | Coloring property | Brightness | Transparency | Storage stability of ink |
|---|---|---|---|---|---|---|---|
| Example F-41 | 41 | f-41 | Red269 | 4 | 3 | 4 | 3 |
| Example F-42 | 42 | f-42 | Red269 | 4 | 4 | 4 | 3 |
| Example F-43 | 43 | f-43 | Red269 | 4 | 4 | 4 | 3 |
| Example F-44 | 44 | f-44 | Red269 | 4 | 4 | 4 | 3 |
| Example F-45 | 45 | f-45 | Red269 | 3 | 3 | 3 | 3 |
| Example F-46 | 46 | f-46 | Red269 | 2 | 2 | 4 | 1 |
| Example F-47 | 47 | f-47 | Red269 | 3 | 3 | 4 | 2 |
| Example F-48 | 48 | f-48 | Red150 | 3 | 3 | 4 | 2 |
| Example F-49 | 49 | f-49 | Red3 1 | 3 | 3 | 4 | 2 |
| Example F-50 | 50 | f-50 | Red32 | 3 | 3 | 4 | 2 |
| Example F-51 | 51 | f-51 | Red146 | 3 | 3 | 4 | 2 |
| Example F-52 | 52 | f-52 | Red147 | 3 | 3 | 4 | 2 |
| Example F-53 | 53 | f-53 | Red176 | 3 | 3 | 4 | 2 |
| Example F-54 | 54 | f-54 | Red245 | 3 | 3 | 4 | 2 |
| Example F-55 | 55 | f-55 | Red268 | 3 | 3 | 4 | 2 |
| Example F-56 | 56 | f-56 | Red269 | 2 | 2 | 4 | 2 |
| Comparative Example F-1 | 101 | f-101 | Red269 | std | std | std | 1 |

(continued)

| Table 8-2 | Coloring agent | Active energy ray curable offset ink | Compound (A) C.I. Pigment | Coloring property | Brightness | Transparency | Storage stability of ink |
|---|---|---|---|---|---|---|---|
| Comparative Example F-2 | 102 | f-102 | Red150 | std | std | std | 1 |
| Comparative Example F-3 | 103 | f-103 | Red31 | std | std | std | 1 |
| Comparative Example F-4 | 104 | f-104 | Red17 | std | std | std | 1 |
| Comparative Example F-5 | 105 | f-105 | Red22 | std | std | std | 1 |
| Comparative Example F-6 | 106 | f-106 | Red23 | std | std | std | 1 |
| Comparative Example F-7 | 107 | f-107 | Red32 | std | std | std | 1 |
| Comparative Example F-8 | 108 | f-108 | Red114 | std | std | std | 1 |
| Comparative Example F-9 | 109 | f-109 | Red146 | std | std | std | 1 |
| Comparative Example F-10 | 110 | f-110 | Red147 | std | std | std | 1 |
| Comparative Example F-11 | 111 | f-111 | Red176 | std | std | std | 1 |
| Comparative Example F-12 | 112 | f-112 | Red185 | std | std | std | 1 |
| Comparative Example F-13 | 113 | f-113 | Red245 | std | std | std | 1 |
| Comparative Example F-14 | 114 | f-114 | Red258 | std | std | std | 1 |
| Comparative Example F-15 | 115 | f-115 | Red268 | std | std | std | 1 |
| Comparative Example F-16 | 116 | f-116 | Violet32 | std | std | std | 1 |
| Comparative Example F-17 | 117 | f-117 | Violet50 | std | std | std | 1 |

[Table 8-3]

| Table 8-3 | Coloring agent | Active energy ray curable offset ink | Compound (A) | Coloring property | Brightness | Transparency | Storage stability of ink |
|---|---|---|---|---|---|---|---|
| Example F-57 | 57 | f-57 | Compound (A)-1 | 3 | 3 | 3 | 2 |
| Example F-58 | 58 | f-58 | Compound (A)-2 | 3 | 3 | 3 | 2 |
| Example F-59 | 59 | f-59 | Compound (A)-3 | 3 | 3 | 3 | 2 |
| Example F-60 | 60 | f-60 | Compound (A)-4 | 3 | 3 | 3 | 2 |
| Example F-61 | 61 | f-61 | C.I. Pigment Red266 | 3 | 3 | 3 | 2 |
| Example F-62 | 62 | f-62 | Compound (A)-5 | 3 | 3 | 3 | 2 |
| Example F-63 | 63 | f-63 | Compound (A)-6 | 3 | 3 | 3 | 2 |
| Example F-64 | 64 | f-64 | Compound (A)-1 | 4 | 3 | 4 | 2 |
| Example F-65 | 65 | f-65 | Compound (A)-2 | 4 | 3 | 4 | 2 |
| Example F-66 | 66 | f-66 | Compound (A)-3 | 4 | 3 | 4 | 2 |
| Example F-67 | 67 | f-67 | Compound (A)-4 | 4 | 3 | 4 | 2 |
| Example F-68 | 68 | f-68 | C.I. Pigment Red266 | 4 | 3 | 4 | 2 |
| Example F-69 | 69 | f-69 | Compound (A)-5 | 4 | 3 | 4 | 2 |
| Example F-70 | 70 | f-70 | Compound (A)-6 | 4 | 3 | 4 | 2 |
| Comparative Example F-18 | 118 | f-118 | Compound (A)-1 | std | std | std | 1 |
| Comparative Example F-19 | 119 | f-119 | Compound (A)-2 | std | std | std | 1 |
| Comparative Example F-20 | 120 | f-120 | Compound (A)-3 | std | std | std | 1 |
| Comparative Example F-21 | 121 | f-121 | Compound (A)-4 | std | std | std | 1 |
| Comparative Example F-22 | 122 | f-122 | C.I. Pigment Red266 | std | std | std | 1 |

(continued)

| Table 8-3 | Coloring agent | Active energy ray curable offset ink | Compound (A) | Coloring property | Brightness | Transparency | Storage stability of ink |
|---|---|---|---|---|---|---|---|
| Comparative Example F-23 | 123 | f-123 | Compound (A)-5 | std | std | std | 1 |
| Comparative Example F-24 | 124 | f-124 | Compound (A)-6 | std | std | std | 1 |

<G> Molding resin composition

(G1) Preparation of molding resin composition

(Example G-1) Preparation of molding resin composition g-1 and molded body g'-1

2 parts of the coloring agent 1 and 1000 parts of polypropylene resin (product name: Prime Polypro J105, manufactured by Prime Polymer Co., Ltd.) were melt-kneaded at 220°C using a twin-screw extruder, and then cut with a pelletizer to obtain a pellet-shaped molding resin composition g-1. Next, the molding resin composition was subjected to injection molding using an injection molding machine to obtain a molded body g'-1 (plate) with a thickness of 1 mm. Injection conditions were set to a molding temperature of 220°C and a mold temperature of 40°C.

(Examples G-2 to G-70, Comparative Examples G-1 to G-24) Preparation of molding resin compositions g-2 to g-70 and g-101 to g-124 and molded bodies g'-2 to g'-70 and g'-101 to g'-124

Molding resin compositions g-2 to g-70 and g-101 to g-124 and molded bodies g'-2 to g'-70 and g'-101 to g'-124 were obtained in the same manner as Example G-1, except that the coloring agent 1 of Example G-1 was changed as shown in Table 9-1, Table 9-2, and Table 9-3.

(G2) Evaluation of molded body

<Dispersibility>

Each prepared molded body was visually observed to confirm presence or absence of coarse particles. The results are shown in Table 9-1, Table 9-2, and Table 9-3.

<Brightness>

Each prepared molded body was visually observed and evaluated according to the following criteria. The results are shown in Table 9-1, Table 9-2, and Table 9-3. Details of the standard molded body (std) are as described above.

(Evaluation criteria for brightness)

4: Brightness is much higher than the standard molded body
3: Brightness is higher than the standard molded body
2: Brightness is slightly higher than the standard molded body
1: Brightness is equivalent to the standard molded body

[Table 9-1]

| Table 9-1 | Coloring agent | Molding resin composition | Compound (A) C.I. Pigment | Molded body | Dispersibility (coarse particles) | Brightness |
|---|---|---|---|---|---|---|
| Example G-1 | 1 | g-1 | Red269 | g'-1 | Absent | 3 |
| Example G-2 | 2 | g-2 | Red150 | g'-2 | Absent | 3 |
| Example G-3 | 3 | g-3 | Red31 | g'-3 | Absent | 3 |
| Example G-4 | 4 | g-4 | Red17 | g'-4 | Absent | 3 |
| Example G-5 | 5 | g-5 | Red22 | g'-5 | Absent | 3 |
| Example G-6 | 6 | g-6 | Red23 | g'-6 | Absent | 3 |
| Example G-7 | 7 | g-7 | Red32 | g'-7 | Absent | 3 |
| Example G-8 | 8 | g-8 | Red114 | g'-8 | Absent | 3 |
| Example G-9 | 9 | g-9 | Red 146 | g'-9 | Absent | 3 |
| Example G-10 | 10 | g-10 | Red 147 | g'-10 | Absent | 3 |
| Example G-11 | 11 | g-11 | Red176 | g'-11 | Absent | 3 |
| Example G-12 | 12 | g-12 | Red185 | g'-12 | Absent | 3 |
| Example G-13 | 13 | g-13 | Red245 | g'-13 | Absent | 3 |
| Example G-14 | 14 | g-14 | Red258 | g'-14 | Absent | 3 |
| Example G-15 | 15 | g-15 | Red268 | g'-15 | Absent | 3 |
| Example G-16 | 16 | g-16 | Violet32 | g'-16 | Absent | 3 |
| Example G-17 | 17 | g-17 | Violet50 | g'-17 | Absent | 3 |
| Example G-18 | 18 | g-18 | Red269 | g'-18 | Absent | 3 |
| Example G-19 | 19 | g-19 | Red150 | g'-19 | Absent | 3 |
| Example G-20 | 20 | g-20 | Red31 | g'-20 | Absent | 3 |
| Example G-21 | 21 | g-21 | Red17 | g'-21 | Absent | 3 |
| Example G-22 | 22 | g-22 | Red22 | g'-22 | Absent | 3 |
| Example G-23 | 23 | g-23 | Red23 | g'-23 | Absent | 3 |
| Example G-24 | 24 | g-24 | Red32 | g'-24 | Absent | 3 |
| Example G-25 | 25 | g-25 | Red114 | g'-25 | Absent | 3 |
| Example G-26 | 26 | g-26 | Red146 | g'-26 | Absent | 3 |
| Example G-27 | 27 | g-27 | Red147 | g'-27 | Absent | 3 |
| Example G-28 | 28 | g-28 | Red176 | g'-28 | Absent | 3 |
| Example G-29 | 29 | g-29 | Red185 | g'-29 | Absent | 3 |
| Example G-30 | 30 | g-30 | Red245 | g'-30 | Absent | 3 |
| Example G-31 | 31 | g-31 | Red258 | g'-31 | Absent | 3 |
| Example G-32 | 32 | g-32 | Red268 | g'-32 | Absent | 3 |
| Example G-33 | 33 | g-33 | Violet32 | g'-33 | Absent | 3 |
| Example G-34 | 34 | g-34 | Violet50 | g'-34 | Absent | 3 |
| Example G-35 | 35 | g-35 | Red269+Red150 | g'-35 | Absent | 4 |
| Example G-36 | 36 | g-36 | Red269+Red150 | g'-36 | Absent | 4 |
| Example G-37 | 37 | g-37 | Red269+Red150 | g'-37 | Absent | 4 |
| Example G-38 | 38 | g-38 | Red31+Red150 | g'-38 | Absent | 4 |

(continued)

| Table 9-1 | Coloring agent | Molding resin composition | Compound (A) C.I. Pigment | Molded body | Dispersibility (coarse particles) | Brightness |
|---|---|---|---|---|---|---|
| Example G-39 | 39 | g-39 | Red31+Red150 | g'-39 | Absent | 4 |
| Example G-40 | 40 | g-40 | Red146+Red147 | g'-40 | Absent | 4 |

[Table 9-2]

| Table 9-2 | Coloring agent | Molding resin composition | Compound (A) C.I. Pigment | Molded body | Dispersibility (coarse particles) | Brightness |
|---|---|---|---|---|---|---|
| Example G-41 | 41 | g-41 | Red269 | g'-41 | Absent | 3 |
| Example G-42 | 42 | g-42 | Red269 | g'-42 | Absent | 4 |
| Example G-43 | 43 | g-43 | Red269 | g'-43 | Absent | 4 |
| Example G-44 | 44 | g-44 | Red269 | g'-44 | Absent | 4 |
| Example G-45 | 45 | g-45 | Red269 | g'-45 | Absent | 3 |
| Example G-46 | 46 | g-46 | Red269 | g'-46 | Absent | 2 |
| Example G-47 | 47 | g-47 | Red269 | g'-47 | Absent | 3 |
| Example G-48 | 48 | g-48 | Red150 | g'-48 | Absent | 3 |
| Example G-49 | 49 | g-49 | Red31 | g'-49 | Absent | 3 |
| Example G-50 | 50 | g-50 | Red32 | g'-50 | Absent | 3 |
| Example G-51 | 51 | g-51 | Red146 | g'-51 | Absent | 3 |
| Example G-52 | 52 | g-52 | Red147 | g'-52 | Absent | 3 |
| Example G-53 | 53 | g-53 | Red176 | g'-53 | Absent | 3 |
| Example G-54 | 54 | g-54 | Red245 | g'-54 | Absent | 3 |
| Example G-55 | 55 | g-55 | Red268 | g'-55 | Absent | 3 |
| Example G-56 | 56 | g-56 | Red269 | g'-56 | Absent | 2 |
| Comparative Example G-1 | 101 | g-101 | Red269 | g'-101 | Present | std |
| Comparative Example G-2 | 102 | g-102 | Red150 | g'-102 | Present | std |
| Comparative Example G-3 | 103 | g-103 | Red31 | g'-103 | Present | std |
| Comparative Example G-4 | 104 | g-104 | Red17 | g'-104 | Present | std |
| Comparative Example G-5 | 105 | g-105 | Red22 | g'-105 | Present | std |
| Comparative Example G-6 | 106 | g-106 | Red23 | g'-106 | Present | std |
| Comparative Example G-7 | 107 | g-107 | Red32 | g'-107 | Present | std |
| Comparative Example G-8 | 108 | g-108 | Red114 | g'-108 | Present | std |
| Comparative Example G-9 | 109 | g-109 | Red146 | g'-109 | Present | std |
| Comparative Example G-10 | 110 | g-110 | Red147 | g'-110 | Present | std |
| Comparative Example G-11 | 111 | g-111 | Red176 | g'-111 | Present | std |
| Comparative Example G-12 | 112 | g-112 | Red185 | g'-112 | Present | std |
| Comparative Example G-13 | 113 | g-113 | Red245 | g'-113 | Present | std |
| Comparative Example G-14 | 114 | g-114 | Red258 | g'-114 | Present | std |
| Comparative Example G-15 | 115 | g-115 | Red268 | g'-115 | Present | std |
| Comparative Example G-16 | 116 | g-116 | Violet32 | g'-116 | Present | std |

(continued)

| Table 9-2 | Coloring agent | Molding resin composition | Compound (A) C.I. Pigment | Molded body | Dispersibility (coarse particles) | Brightness |
|---|---|---|---|---|---|---|
| Comparative Example G-17 | 117 | g-117 | Violet50 | g'-117 | Present | std |

[Table 9-3]

| Table 9-3 | Coloring agent | Molding resin composition | Compound (A) | Molded body | Dispersibility (coarse particles) | Brightness |
|---|---|---|---|---|---|---|
| Example G-57 | 57 | g-57 | Compound (A)-1 | g'-57 | Absent | 3 |
| Example G-58 | 58 | g-58 | Compound (A)-2 | g'-58 | Absent | 3 |
| Example G-59 | 59 | g-59 | Compound (A)-3 | g'-59 | Absent | 3 |
| Example G-60 | 60 | g-60 | Compound (A)-4 | g'-60 | Absent | 3 |
| Example G-61 | 61 | g-61 | C.I. Pigment Red266 | g'-61 | Absent | 3 |
| Example G-62 | 62 | g-62 | Compound (A)-5 | g'-62 | Absent | 3 |
| Example G-63 | 63 | g-63 | Compound (A)-6 | g'-63 | Absent | 3 |
| Example G-64 | 64 | g-64 | Compound (A)-1 | g'-64 | Absent | 3 |
| Example G-65 | 65 | g-65 | Compound (A)-2 | g'-65 | Absent | 3 |
| Example G-66 | 66 | g-66 | Compound (A)-3 | g'-66 | Absent | 3 |
| Example G-67 | 67 | g-67 | Compound (A)-4 | g'-67 | Absent | 3 |
| Example G-68 | 68 | g-68 | C.I. Pigment Red266 | g'-68 | Absent | 3 |
| Example G-69 | 69 | g-69 | Compound (A)-5 | g'-69 | Absent | 3 |
| Example G-70 | 70 | g-70 | Compound (A)-6 | g'-70 | Absent | 3 |
| Comparative Example G-18 | 118 | g-118 | Compound (A)-1 | g'-118 | Present | std |
| Comparative Example G-19 | 119 | g-119 | Compound (A)-2 | g'-119 | Present | std |
| Comparative Example G-20 | 120 | g-120 | Compound (A)-3 | g'-120 | Present | std |
| Comparative Example G-21 | 121 | g-121 | Compound (A)-4 | g'-121 | Present | std |
| Comparative Example G-22 | 122 | g-122 | C.I. Pigment Red266 | g'-122 | Present | std |

(continued)

| Table 9-3 | Coloring agent | Molding resin composition | Compound (A) | Molded body | Dispersibility (coarse particles) | Brightness |
|---|---|---|---|---|---|---|
| Comparative Example G-23 | 123 | g-123 | Compound (A)-5 | g'-123 | Present | std |
| Comparative Example G-24 | 124 | g-124 | Compound (A)-6 | g'-124 | Present | std |

<H> Toner

(H1) Preparation of negatively charged toner

(Example H-1) Preparation of negatively charged toner h-1

2500 parts of the obtained coloring agent 18 and 2500 parts of polyester resin (product name: M-325, manufactured by Sanyo Chemical Industries, Ltd.) were mixed and kneaded in a pressure kneader. The mixing and kneading were performed at a set temperature of 120°C for 15 minutes. Next, the obtained kneaded material was taken out from the pressure kneader, and further kneaded using a three-roll mill at a roll temperature of 95°C. After cooling, the obtained kneaded material was coarsely pulverized to 10 mm or less to obtain a coloring composition.

500 parts of the obtained coloring composition, 4375 parts of the above polyester resin, 50 parts of a calcium salt compound of 3,5-di-tert-butylsalicylic acid (charge control agent), and 75 parts of ethylene homopolymer (release agent, weight average molecular weight 850, Mw/Mn = 1.08, melting point 107°C) were mixed using a Henschel mixer having a volume of 20 L (3000 rpm, 3 minutes), and further melt-kneaded at a discharge temperature of 120°C using a twin-screw kneading extruder. Next, after cooling and solidifying, the kneaded material was coarsely pulverized with a hammer mill. Next, the obtained coarsely pulverized material was finely pulverized using an I-type jet mill (IDS-2 type) and then classified to obtain a toner base particle.

Next, 2500 parts of the toner base particle obtained above and 12.5 parts of hydrophobic titanium oxide (STT-30A manufactured by Titan Kogyo Ltd.) were mixed with a 10 L Henschel mixer to obtain a negatively charged toner h-1.

(Comparative Example H-1) Preparation of negatively charged toner h-101

On the other hand, as a comparison target, a negatively charged toner h-101 was obtained in the same manner as Example H-1, except that the coloring agent 18 was changed to the coloring agent 101.

(H2) Evaluation of negatively charged toner

The obtained negatively charged toner h-1 and negatively charged toner h-101 were each sliced to a thickness of 0.9 μm using a microtome to form samples. Next, the dispersion state of the coloring agent in each sample was observed using a transmission electron microscope. As a result, it was found that the negatively charged toner h-1 using the coloring agent 18 had more uniform distribution of the coloring agent and higher dispersibility than the negatively charged toner h-101 using the coloring agent 101.

From the above results, it is learned that the coloring agent containing the compound (A) and the compound (B) according to the present invention can improve coloring property, transparency, and brightness of conventional pigments. The resin composition containing the coloring agent according to the present invention can be suitably used for various applications and can improve various properties. For example, in the form of an aqueous pigment dispersion, an initial viscosity and storage stability can be easily improved. Particularly, in the form of an aqueous inkjet ink, excellent viscosity stability can be easily obtained in addition to excellent coloring property, transparency, and brightness. Among these, in the case where the coloring agent contains two types of compound (A), more excellent brightness can be easily obtained.

## Claims

1. A coloring agent comprising a compound (A) represented by General Formula (1) below and a compound (B) represented by General Formula (2) below:

[Chem. 1]

General Formula (1)

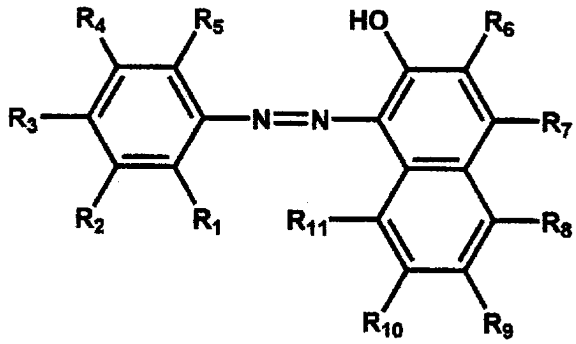

[Chem. 2]

General Formula (2)

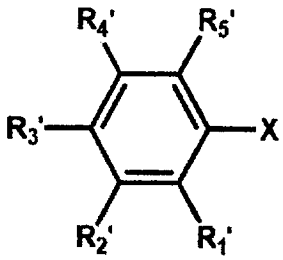

[in General Formula (1) and General Formula (2), $R_1$ to $R_5$ and $R_1$' to $R_5$' are each independently a hydrogen atom, an alkoxy group, an alkyl group, a halogen group, a nitro group, a carboxy group, a sulfo group, a phosphoric acid group, a sulfamoyl group, a carbamoyl group, a benzamide group, an alkylsulfamoyl group, an alkylcarbamoyl group, a group represented by General Formula (101) below, a group represented by General Formula (102) below, or a group represented by Chemical Formula (103) below, $R_1$ to $R_5$ are not all hydrogen atoms simultaneously, and $R_1$' to $R_5$' are not all hydrogen atoms simultaneously,

$R_6$ to $R_{11}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, a group represented by General Formula (104) below, or a group represented by General Formula (105) below, and $R_6$ to $R_{11}$ are not all hydrogen atoms simultaneously,
X is a hydrogen atom, a hydroxyl group, or a chlorine atom,]

[Chem. 3]

General Formula (101)

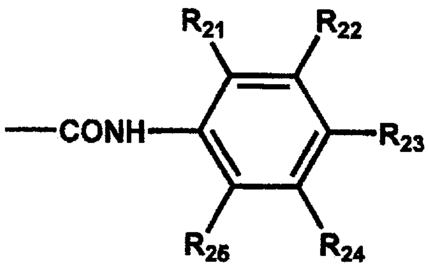

[in General Formula (101), $R_{21}$ to $R_{25}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, or an aryl group which may have a substituent, or two adjacent groups among $R_{21}$ to $R_{25}$ may together form a saturated or unsaturated alkylene group, form a saturated or unsaturated heteroalkylene group containing one or more hetero atoms selected from the group consisting of an oxygen atom, a nitrogen atom, and a sulfur atom, or form a divalent group having a skeleton composed of a nitrogen atom and a carbonyl group and form a ring together with carbon atoms to which the two adjacent groups are respectively bonded,]

[Chem. 4]

General Formula (102)

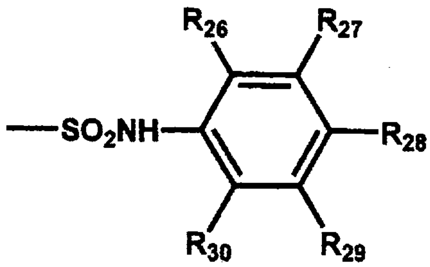

[in General Formula (102), $R_{26}$ to $R_{30}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, or an aryl group which may have a substituent, or two adjacent groups among $R_{26}$ to $R_{30}$ may together form a saturated or unsaturated alkylene group, form a saturated or unsaturated heteroalkylene group containing one or more hetero atoms selected from the group consisting of an oxygen atom, a nitrogen atom, and a sulfur atom, or form a divalent group having a skeleton composed of a nitrogen atom and a carbonyl group and form a ring together with carbon atoms to which the two adjacent groups are respectively bonded,]

[Chem. 5]

Chemical Formula (103)

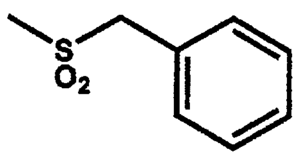

[Chem. 6]

General Formula (104)

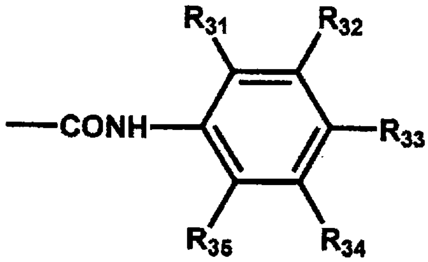

[in General Formula (104), $R_{31}$ to $R_{35}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, or an aryl group which may have a substituent, or two adjacent groups among $R_{31}$ to $R_{35}$ may together form a saturated or unsaturated alkylene group, form a saturated or unsaturated heteroalkylene group containing one or more hetero atoms selected from the group consisting of an oxygen atom, a nitrogen atom, and a sulfur atom, or form a divalent group having a skeleton composed of a nitrogen atom and a carbonyl group and form a ring together with carbon atoms to which the two adjacent groups are respectively bonded,]

[Chem. 7]

General Formula (105)

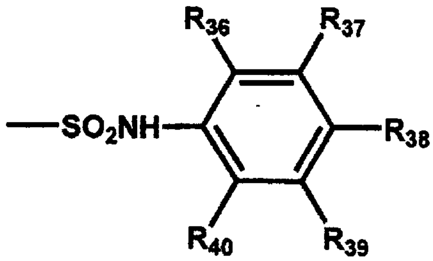

[in General Formula (105), $R_{36}$ to $R_{40}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, or an aryl group which may have a substituent, or two adjacent groups among $R_{36}$ to $R_{40}$ may together form a saturated or unsaturated alkylene group, form a saturated or unsaturated heteroalkylene group containing one or more hetero atoms selected from the group consisting of an oxygen atom, a nitrogen atom, and a sulfur atom, or form a divalent group having a skeleton composed of a nitrogen atom and a carbonyl group and form a ring together with carbon atoms to which the two adjacent groups are respectively bonded.]

**2.** The coloring agent according to claim 1, wherein X is a hydrogen atom in the General Formula (2).

**3.** The coloring agent according to claim 1 or 2, wherein in the General Formula (1) and the General Formula (2),

$R_1$ to $R_5$ and $R_1'$ to $R_5'$ are each independently a hydrogen atom, an alkoxy group, an alkyl group, a nitro group, a carboxy group, a carbamoyl group, a benzamide group, an alkylsulfamoyl group, a group represented by the General Formula (101), or a group represented by the Chemical Formula (103), and
$R_6$ to $R_{11}$ are each independently a hydrogen atom, a carbamoyl group, or a group represented by the General Formula (104).

4. The coloring agent according to any one of claims 1 to 3, wherein the compound (A) comprises a compound represented by General Formula (3) below, and the compound (B) comprises a compound represented by General Formula (4) below:

[Chem. 8]

General Formula (3)

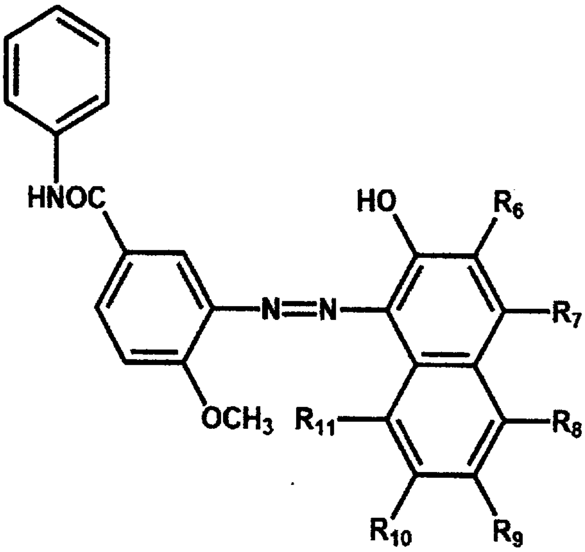

[in General Formula (3), $R_6$ to $R_{11}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, a group represented by General Formula (104), or a group represented by General Formula (105), and $R_6$ to $R_{11}$ are not all hydrogen atoms simultaneously,]

[Chem. 9]

General Formula (4)

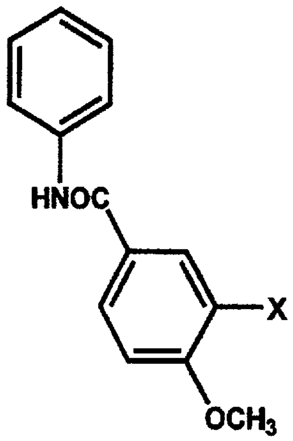

[in General Formula (4), X is a hydrogen atom, a hydroxyl group, or a chlorine atom.]

5. The coloring agent according to any one of claims 1 to 4, wherein the compound (A) comprises one or more selected from the group consisting of C.I. Pigment Red 17, 22, 23, 31, 32, 114, 146, 147, 150, 176, 185, 245, 258, 268 and 269, and C.I. Pigment Violet 32 and 50.

**6.** The coloring agent according to any one of claims 1 to 5, wherein a content ratio of the compound (B) with respect to a total mass of the compound (A) is 0.01 mass% or more and 10 mass% or less.

**7.** The coloring agent according to any one of claims 1 to 6, further comprising one or more selected from the group consisting of a compound (C) represented by General Formula (5) below, a compound (D) represented by General Formula (6) below, and a compound (E) represented by General Formula (7) below, and satisfying any one requirement among (i) to (iii) below:

(i) a content ratio of the compound (C) with respect to the total mass of the compound (A) is 0.001 mass% or more and 0.5 mass% or less,
(ii) a content ratio of the compound (D) with respect to the total mass of the compound (A) is 0.12 mass% or less, and
(iii) a content ratio of the compound (E) with respect to the total mass of the compound (A) is 6 mass% or less,

[Chem. 10]

General Formula (5)

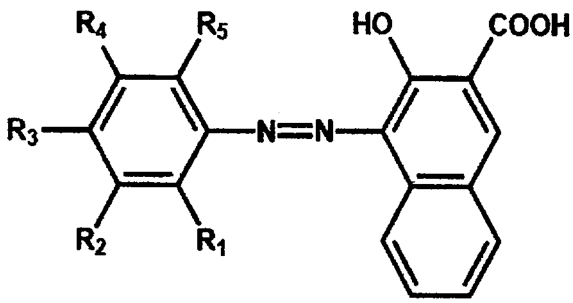

[in General Formula (5), $R_1$ to $R_5$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, a group represented by the General Formula (101), a group represented by the General Formula (102), or a group represented by the Chemical Formula (103), and $R_1$ to $R_5$ are not all hydrogen atoms simultaneously,]

[Chem. 11]

General Formula (6)

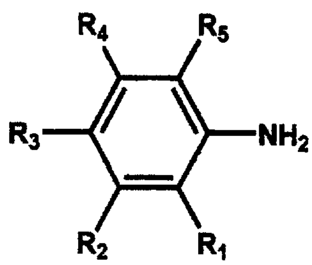

[in General Formula (6), $R_1'$ to $R_5'$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, a group represented by the General Formula (101), a group represented by the General Formula (102), or a group represented by the Chemical Formula (103), and $R_1'$ to $R_5'$ are not all hydrogen atoms simultaneously,]

[Chem. 12]

General Formula (7)

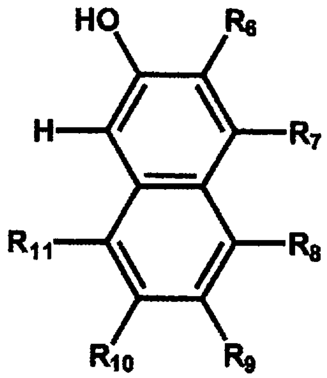

[in General Formula (7), $R_6$ to $R_{11}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, a group represented by the General Formula (104), or a group represented by the General Formula (105), and $R_6$ to $R_{11}$ are not all hydrogen atoms simultaneously.]

**8.** A coloring composition comprising the coloring agent according to any one of claims 1 to 7 and a dispersion medium.

**9.** A printing ink comprising the coloring agent according to any one of claims 1 to 7, a resin, and a solvent.

**10.** An active energy ray curable printing ink comprising the coloring agent according to any one of claims 1 to 7 and a polymerizable compound.

**11.** A method for producing a coloring agent, the coloring agent comprising a compound (A) represented by General Formula (1) below and a compound (B) represented by General Formula (2) below,

the method for producing the coloring agent comprising performing a coupling reaction between a solution containing a coupler component represented by General Formula (7) below and a solution containing a diazonium salt represented by General Formula (6A) below obtained by diazotizing an aromatic amine, using an excess amount of the diazonium salt in a molar ratio with respect to the coupler component,

[Chem. 13]

General Formula (1)

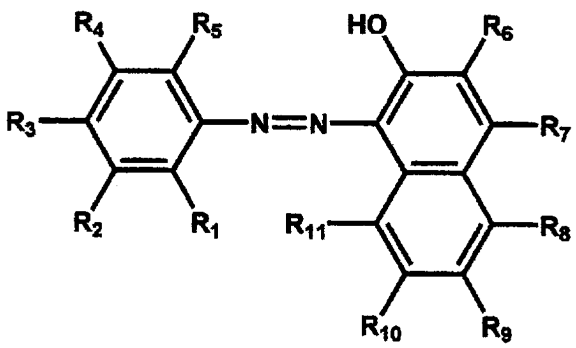

[Chem. 14]

General Formula (2)

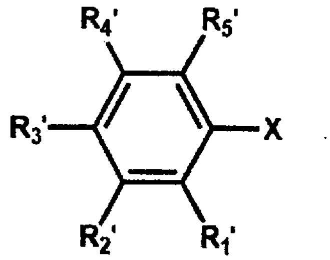

[in General Formula (1) and General Formula (2), $R_1$ to $R_5$ and $R_1$' to $R_5$' are each independently a hydrogen atom, an alkoxy group, an alkyl group, a halogen group, a nitro group, a carboxy group, a sulfo group, a phosphoric acid group, a sulfamoyl group, a carbamoyl group, a benzamide group, an alkylsulfamoyl group, an alkylcarbamoyl group, a group represented by General Formula (101) below, a group represented by General Formula (102) below, or a group represented by Chemical Formula (103) below, $R_1$ to $R_5$ are not all hydrogen atoms simultaneously, $R_1$' to $R_5$' are not all hydrogen atoms simultaneously, and $R_1$' to $R_5$' corresponding to $R_1$ to $R_5$ are respectively the same groups as each other,
$R_6$ to $R_{11}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, a group represented by General Formula (104) below, or a group represented by General Formula (105) below, and $R_6$ to $R_{11}$ are not all hydrogen atoms simultaneously,
X is a hydrogen atom, a hydroxyl group, or a chlorine atom,]

[Chem. 15]

General Formula (101)

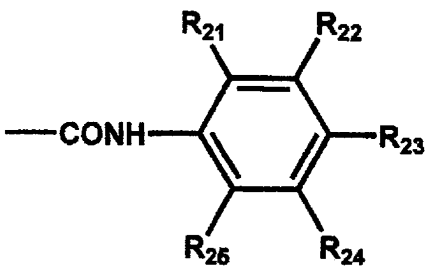

[in General Formula (101), $R_{21}$ to $R_{25}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, or an aryl group which may have a substituent, or two adjacent groups among $R_{21}$ to $R_{25}$ may together form a saturated or unsaturated alkylene group, form a saturated or unsaturated heteroalkylene group containing one or more hetero atoms selected from the group consisting of an oxygen atom, a nitrogen atom, and a sulfur atom, or form a divalent group having a skeleton composed of a nitrogen atom and a carbonyl group and form a ring together with carbon atoms to which the two adjacent groups are respectively bonded,]

[Chem. 16]

General Formula (102)

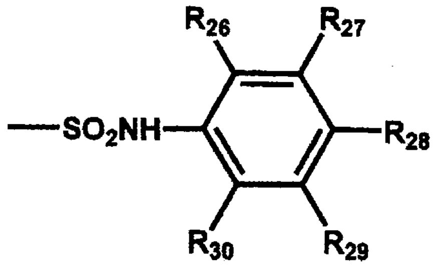

[in General Formula (102), $R_{26}$ to $R_{30}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, or an aryl group which may have a substituent, or two adjacent groups among $R_{26}$ to $R_{30}$ may together form a saturated or unsaturated alkylene group, form a saturated or unsaturated heteroalkylene group containing one or more hetero atoms selected from the group consisting of an oxygen atom, a nitrogen atom, and a sulfur atom, or form a divalent group having a skeleton composed of a nitrogen atom and a carbonyl group and form a ring together with carbon atoms to which the two adjacent groups are respectively bonded,]

[Chem. 17]

Chemical Formula (103)

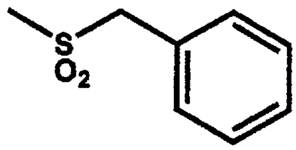

[Chem. 18]

General Formula (104)

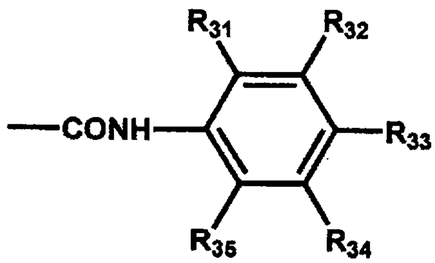

[in General Formula (104), $R_{31}$ to $R_{35}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, or an aryl group which may have a substituent, or two adjacent groups among $R_{31}$ to $R_{35}$ may together form a saturated or unsaturated alkylene group, form a saturated or unsaturated heteroalkylene group containing one or more hetero atoms selected from the group consisting of an oxygen atom, a nitrogen atom, and a sulfur atom, or form a divalent group having a skeleton composed of a nitrogen atom and a carbonyl group and form a ring together with carbon atoms to which the two adjacent groups are respectively bonded,]

[Chem. 19]

General Formula (105)

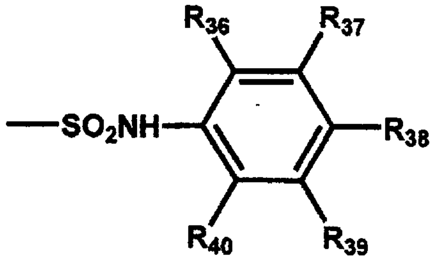

[in General Formula (105), $R_{36}$ to $R_{40}$ are each independently a hydrogen atom, an alkoxy group, an alkyl group, a halogen group, a nitro group, a carboxy group, a sulfo group, a phosphoric acid group, a sulfamoyl group, a carbamoyl group, an alkylsulfamoyl group, an alkylcarbamoyl group, or an aryl group which may have a substituent, or two adjacent groups among $R_{36}$ to $R_{40}$ may together form a saturated or unsaturated alkylene group, form a saturated or unsaturated heteroalkylene group containing one or more hetero atoms selected from the group consisting of an oxygen atom, a nitrogen atom, and a sulfur atom, or form a divalent group having a skeleton composed of a nitrogen atom and a carbonyl group and form a ring together with carbon atoms to which the two adjacent groups are respectively bonded,]

[Chem. 20]

General Formula (7)

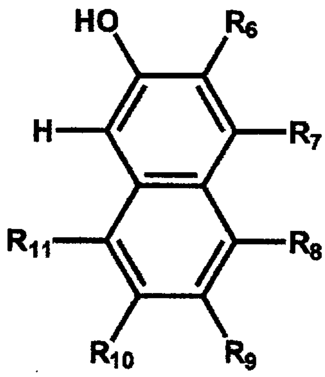

[in General Formula (7), $R_6$ to $R_{11}$ are the same as $R_6$ to $R_{11}$ in the General Formula (1),]

[Chem. 21]

General Formula (6A)

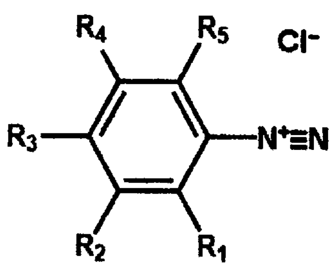

[in General Formula (6A), $R_1$ to $R_5$ are the same as $R_1$ to $R_5$ in the General Formula (1).]

**INTERNATIONAL SEARCH REPORT**

International application No.
**PCT/JP2024/012771**

**A. CLASSIFICATION OF SUBJECT MATTER**

***C09B 29/15***(2006.01)i; ***C09B 67/20***(2006.01)i; ***C09D 11/037***(2014.01)i; ***C09D 11/101***(2014.01)i
FI: C09B29/15; C09B67/20 E; C09B67/20 K; C09D11/037; C09D11/101

According to International Patent Classification (IPC) or to both national classification and IPC

**B. FIELDS SEARCHED**

Minimum documentation searched (classification system followed by classification symbols)

C09B29/15; C09B67/20; C09D11/037; C09D11/101

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2011-26601 A (XEROX CORP.) 10 February 2011 (2011-02-10)<br>claim 1, paragraphs [0009]-[0044], [0069]-[0097] | 1-3, 6-11<br>1, 3-11 |
| Y | JP 2013-148855 A (TOYO INK SC HOLDINGS CO., LTD.) 01 August 2013 (2013-08-01)<br>claim 4, paragraphs [0031]-[0035], examples | 4-10 |
| Y<br>A | JP 2020-200438 A (RICOH COMPANY, LTD.) 17 December 2020 (2020-12-17)<br>claims 1, 3, paragraphs [0013], [0016], [0019]-[0022], examples, table 1 | 1, 3-9, 11<br>2, 10 |
| X<br>A | KR 10-1982448 B1 (DONGWOO FINE-CHEM CO., LTD.) 27 May 2019 (2019-05-27)<br>claims 1-4, 6, paragraphs [0047]-[0097], [0232], [0262]-[0267], synthesis example 1-1 | 1, 3-11<br>2 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 June 2024** | **25 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/012771**

| Patent document cited in search report | Publication date (day/month/year) | Patent family member(s) | Publication date (day/month/year) |
|---|---|---|---|
| JP 2011-26601 A | 10 February 2011 | US 2010/0037955 A1<br>claims 1-22, paragraphs [0030]-[0086], table 1<br>EP 2290012 A2<br>KR 10-2011-0010586 A<br>CN 101962488 A<br>CA 2710083 A1 | |
| JP 2013-148855 A | 01 August 2013 | JP 2013-148850 A<br>JP 2013-149592 A | |
| JP 2020-200438 A | 17 December 2020 | US 2020/0385592 A1<br>claims 1, 3, paragraphs [0024]-[0026], [0030], [0035]-[0047], examples, table 1<br>EP 3747961 A1<br>CN 112048215 A | |
| KR 10-1982448 B1 | 27 May 2019 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000248191 A
- JP 2003149869 A
- JP 2023054361 A